# EUROPÄISCHE PATENTANMELDUNG

(11) **EP 3 804 560 A1**
(43) Veröffentlichungstag der Anmeldung: **14.04.2021**
(21) Anmeldenummer: 19202289.5
(22) Anmeldetag: 09.10.2019
(51) Int. Cl.: A46B 1/00, A46B 5/00, A46B 7/04, A46B 15/00, B33Y 10/00, A46B 5/02

(54) **MUNDHYGIENEMITTEL**

(71) Anmelder: Trisa Holding AG, 6234 Triengen (CH)
(72) Erfinder: GROSS, Peter, 6204 Sempach-Stadt (CH); Zwimpfer, Martin, 6004 Luzern (CH)
(74) Vertreter: Daub, Thomas

(57) **Zusammenfassung**

Die Erfindung geht aus von einem Mundhygienemittel (10b; 10c; 10d; 10e; 10f; 10g; 10h; 10i; 10j; 10k), insbesondere einer Zahnbürste, mit zumindest einer Anwendungseinheit (12b; 12c; 12d; 12e; 12f; 12g; 12h; 12i; 12j; 12k) und mit zumindest einer mit der Anwendungseinheit (12b; 12c; 12d; 12e; 12f; 12g; 12h; 12i; 12j; 12k) verbundenen Griffeinheit (14b; 14c; 14d; 14e; 14f; 14g; 14h; 14i; 14j; 14k), welche zumindest einen materiellen Volumenkörper (16b; 16c; 16d; 16e; 16f; 16g; 16h; 16i; 16j; 16k) aufweist.

Es wird vorgeschlagen, dass die Griffeinheit (14b; 14c; 14d; 14e; 14f; 14g; 14h; 14i; 14j; 14k) zumindest eine wesentliche Hohlraumstruktur (18b; 18c; 18d; 18e; 18f; 18g; 18h; 18i; 18j; 18k) aufweist, welche zumindest im Wesentlichen von dem materiellen Volumenkörper (16b; 16c; 16d; 16e; 16f; 16g; 16h; 16i; 16j; 16k) begrenzt ist und welche sich zumindest über einen wesentlichen Teil einer Haupterstreckung (22b; 22c; 22d; 22e; 22f; 22g; ) der zumindest einen Griffeinheit (14b; 14c; 14d; 14e; 14f; 14g; 14h; 14i; 14j; 14k) erstreckt.

## Beschreibung

### Stand der Technik

Die Erfindung betrifft ein Mundhygienemittel.

Es ist bereits ein Mundhygienemittel, insbesondere eine Zahnbürste, mit zumindest einer Anwendungseinheit und mit zumindest einer mit der Anwendungseinheit verbundenen Griffeinheit, welche zumindest einen materiellen Volumenkörper aufweist, vorgeschlagen worden.

Die Aufgabe der Erfindung besteht insbesondere darin, eine gattungsgemäße Vorrichtung mit verbesserten Eigenschaften hinsichtlich einer Materialeffizienz, einer Ergonomie und/oder einer Ökologie bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einem Mundhygienemittel, insbesondere einer Zahnbürste, mit zumindest einer Anwendungseinheit und mit zumindest einer mit der Anwendungseinheit verbundenen Griffeinheit, welche zumindest einen materiellen Volumenkörper aufweist.

Es wird vorgeschlagen, dass die Griffeinheit zumindest eine wesentliche Hohlraumstruktur aufweist, welche zumindest im Wesentlichen von dem materiellen Volumenkörper begrenzt ist und welche sich zumindest über einen wesentlichen Teil einer Haupterstreckung der zumindest einen Griffeinheit erstreckt.

Vorzugsweise besteht das Mundhygienemittel aus einer Anwendungseinheit mit Borsten und der Griffeinheit, wobei die Anwendungseinheit insbesondere einen Halsbereich aufweist, der die Anwendungseinheit mit der Griffeinheit verbindet. Alle Teilelemente können aus mindestens einer Hart- und/oder einer oder mehreren Weichkomponente/-n bestehen. Es sind konventionelle Hart- und/oder Weichkomponenten oder auch nachhaltige Hart- und/oder Weichkomponenten anwendbar.

Durch die erfindungsgemäße Ausgestaltung des Mundhygienemittels können vorteilhafte Eigenschaften hinsichtlich einer Ergonomie des Mundhygienemittels bereitgestellt werden. Es kann insbesondere eine vorteilhafte Greifbarkeit der Griffeinheit über einen gesamten Griffbereich hinweg erreicht werden. Ferner kann dadurch insbesondere ein materielles Volumen der Griffeinheit gering gehalten werden, insbesondere ohne eine Ergonomie des Mundhygienemittels, insbesondere eine Greifbarkeit, zu beeinträchtigen. Es kann insbesondere ein Materialeinsatz für das Mundhygienemittel gering gehalten werden. Hierdurch kann insbesondere ein vorteilhaft ökologisches Mundhygienemittel bereitgestellt werden.

Unter einem "Mundhygienemittel" soll insbesondere eine Zahnbürste und/oder ein Interdentalreiniger und/oder ein Flosser und/oder ein Zungenreiniger und/oder ein Zahnstocher verstanden werden. Vorteilhaft ist das Mundhygienemittel als eine Zahnbürste, insbesondere eine Handzahnbürste, bevorzugt eine Kinder- oder Erwachsenenzahnbürste, vorteilhaft eine rein manuelle, Zahnbürste ausgebildet. Insbesondere ist das Mundhygienemittel von einer elektrischen Zahnbürste verschieden. Das Mundhygienemittel kann hierbei eine Einwegzahnbürste, eine Mehrwegzahnbürste oder auch eine Wechselkopfzahnbürste sein. Das Mundhygienemittel könnte jedoch auch allgemein von einem Bürstenprodukt gebildet sein. Unter einem "Bürstenprodukt" soll insbesondere eine Mundhygienebürste und/oder eine Kosmetikbürste und/oder eine Haarbürste und/oder eine Haushaltsbürste verstanden werden. Als Mundhygienebürsten sind beispielsweise manuelle Zahnbürsten wie Mehrwegzahnbürsten, Wechselkopfzahnbürsten, Einwegzahnbürsten oder Single-Tuft-Bürsten, elektrische Zahnbürsten, wie auch Hybridzahnbürsten, Interdentalreiniger, insbesondere mit eingedrehten Borsten, in gespritzter Form oder als Flosser, Zungenreiniger und/oder Zahnseide denkbar. Als Kosmetikbürsten sind beispielsweise Mascarabürsten, Nagellackpinsel, Gesichtsbürsten, Applikatoren, insbesondere auch Haarfärbe-Applikatoren, Massagegeräte, Make-up-Pinsel, Rasierpinsel und/oder Nassrasierer oder andere Körperpflegeprodukte denkbar. Als Haushaltsbürsten sind beispielsweise Abwaschbürsten, Bodenwischer und/oder Besen denkbar.

Das Mundhygienemittel weist insbesondere eine Längsachse auf, die vorteilhaft zumindest im Wesentlichen parallel zu einer Haupterstreckungsrichtung des Mundhygienemittels angeordnet ist. Bevorzugt verläuft die Längsachse zumindest abschnittsweise innerhalb des Mundhygienemittels und insbesondere durch dessen Schwerpunkt. Insbesondere ist die Längsachse des Mundhygienemittels eine Zentralachse des Mundhygienemittels und/oder eine Zentralachse der Griffeinheit. Unter einer "Zentralachse" eines Objekts soll dabei insbesondere eine gedachte Achse verstanden werden, die innerhalb des Objekts parallel zu einer Haupterstreckungsrichtung des Objekts verläuft und das Objekt an höchstens zwei Punkten schneidet. Unter "zumindest im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Unter einer "Haupterstreckungsrichtung" eines Objekts soll dabei insbesondere eine Richtung verstanden werden, welche parallel zu einer längsten Kante eines kleinsten gedachten Quaders verläuft, welcher das Objekt gerade noch vollständig umschließt. Unter einer "Haupterstreckung" eines Objekts soll in diesem Zusammenhang insbesondere eine Erstreckung einer längsten Kante eines kleinsten gedachten Quaders, welcher das Objekt gerade noch vollständig umschließt, verstanden werden.

Insbesondere weist das Mundhygienemittel eine Länge, insbesondere parallel zu der Längsachse des Mundhygienemittels, und gemessen parallel zur Auflagefläche, von 140 mm bis 210 mm und vorzugsweise von 165 mm bis 185 mm auf, wobei selbstverständlich auch andere, insbesondere kleinere oder größere, Längen denkbar sind. Insbesondere weist das Mundhygienemittel eine maximale Breite, insbesondere parallel zu einer Breitenachse des Mundhygienemittels, vorteilhaft senkrecht zu der Längsachse und/oder parallel zu einer Haupterstreckungsebene des Mundhygienemittels und/oder der Griffeinheit, von 10 mm bis 20 mm und vorzugsweise von 12 mm bis 17 mm auf. Ferner weist das Mundhygienemittel mit eingebrachten Filamenten/Borsten insbesondere eine Höhe, insbesondere parallel zu der Höhenachse gemessen senkrecht zur Auflagefläche, von 12 mm bis 25 mm und vorzugsweise von 15 mm bis 19 mm auf.

Eine reine Körperdicke des Mundhygienemittels, insbesondere parallel zu der Höhenachse, beträgt insbesondere von 4 mm bis 15 mm und vorzugsweise von 5 mm bis 12 mm. Der Begriff "Höhe" bezieht sich hierbei insbesondere auf einen Zustand des Mundhygienemittels, in welchem dieses, beispielsweise auf einer Oberfläche wie einer Tischplatte, einem Waschbecken, einer Möbeloberseite oder dergleichen, abgelegt ist, insbesondere derart, dass die Längsachse parallel zu der Oberfläche angeordnet ist. Unter einer "Haupterstreckungsebene" eines Objekts soll insbesondere eine Ebene verstanden werden, welche parallel zu einer größten Seitenfläche eines kleinsten gedachten Quaders ist, welcher das Objekt gerade noch vollständig umschließt, und durch den Mittelpunkt des Quaders verläuft.

Vorteilhaft weist die Anwendungseinheit zumindest einen Reinigungsbereich auf, der zu einer Zahnreinigungsanwendung, insbesondere in einem Mundraum des Benutzers, vorgesehen ist. Vorzugsweise umfasst der Reinigungsbereich zumindest eine Reinigungseinheit, insbesondere zumindest einen Bürstenkopf, vorteilhaft einen Zahnbürstenkopf, bevorzugt mit mehreren Borsten und/oder Borstenbündeln und/oder gespritzten Reinigungselementen bzw. gespritzten Borsten und/oder weichelastischen Reinigungselementen. Die Reinigungseinheit kann jedoch beispielsweise auch als eine Interdentalbürste und/oder als ein Single Tuft (z.B. einzelnes großes Borstenbündel) und/oder als ein mit Zahnseide bespannter Bogen, insbesondere als ein Flosser, oder dergleichen ausgebildet sein. Ferner weist die Anwendungseinheit vorteilhaft zumindest das Halselement auf, welches bevorzugt mit dem Reinigungsbereich, insbesondere unmittelbar und/oder einstückig, verbunden ist. Unter "einstückig" soll insbesondere zumindest stoffschlüssig verbunden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Das Mundhygienemittel weist insbesondere eine Vorderseite und eine Rückseite auf, die insbesondere einander abgewandt angeordnet sind. Vorzugsweise ist der Reinigungsbereich auf der Vorderseite des Mundhygienemittels angeordnet. Die Vorderseite ist insbesondere eine in einer Betrachtungsrichtung senkrecht zu der Längsachse des Mundhygienemittels und senkrecht zu der Breitenachse des Mundhygienemittels sichtbare Seite des Mundhygienemittels. Als Vorderseite des Mundhygienemittels ist insbesondere jene Seite der Bürste bezeichnet, auf welcher der Daumen aufgelegt wird. Die Vorderseite ist normalerweise auch jene Seite, auf welche das Borstenfeld gerichtet ist. Die Rückseite entspricht vorteilhaft einer in einer hierzu entgegengesetzten Betrachtungsrichtung sichtbaren Seite des Mundhygienemittels. Als Rückseite des Mundhygienemittels wird die dem Borstenfeld entgegengesetzte Seite der Zahnbürste bezeichnet. Als linke Seite des Mundhygienemittels wird insbesondere eine Seite bezeichnet, welche links liegt, wenn man senkrecht auf die Vorderseite des Mundhygienemittels blickt. Als rechte Seite des Mundhygienemittels wird insbesondere eine Seite bezeichnet, welche rechts liegt, wenn man senkrecht auf die Vorderseite des Mundhygienemittels blickt. Als Oberseite wird insbesondere ein Ende des Mundhygienemittels bezeichnet, an welchem der Reinigungsbereich angeordnet ist. Als Unterseite wird insbesondere ein der Oberseite entgegengesetztes Ende des Mundhygienemittels bezeichnet, welches dem Griffbereich am nächsten liegt.

Vorzugsweise weist die Griffeinheit zumindest ein Griffelement auf, das vorteilhaft zu einem Halten mit einer Hand vorgesehen ist. Bevorzugt ist das Griffelement zumindest bereichsweise tailliert ausgebildet. Dies erlaubt vorteilhaft einen sicheren Halt und optimiert die Ergonomie. Besonders bevorzugt ist das Griffelement länglich ausgebildet, wobei vorteilhaft eine Längsachse des Griffelements der Längsachse des Mundhygienemittels entspricht. Das Griffelement ist zumindest teilweise, insbesondere vollständig, aus mindestens einer Hartkomponente ausgebildet. Es wäre auch denkbar, dass das Griffelement zusätzlich aus einer oder mehreren Weichkomponenten ausgebildet ist. Vorzugsweise ist der materielle Volumenkörper zumindest zu einem Großteil, insbesondere vollständig, aus mindestens einer Hartkomponente ausgebildet. Insbesondere umfasst das Griffelement vorteilhaft zumindest einen Daumengriffbereich und/oder zumindest einen Handgriffbereich. Vorteilhaft ist der Daumengriffbereich auf der Vorderseite des Mundhygienemittels und insbesondere auf einer Vorderseite des Griffelements angeordnet. Es ist denkbar, dass der Daumengriffbereich und/oder der Handgriffbereich zumindest ein Element und/oder eine Oberflächenstrukturierung aus mindestens einer Weichkomponente und/oder mindestens einer Hartkomponente aufweisen.

Vorteilhaft weist der Griffbereich zumindest ein Handgriffelement auf. Vorzugsweise ist eine Haupterstreckungsrichtung des Handgriffelements zumindest im Wesentlichen parallel zu der Längsachse des Mundhygienemittels angeordnet. Vorteilhaft weist das Handgriffelement zumindest ein Oberflächenstrukturelement auf, besonders vorteilhaft eine Mehrzahl von Oberflächenstrukturelementen, die zumindest im Wesentlichen identisch oder zumindest geometrisch ähnlich zu den oben beschriebenen Oberflächenstrukturelementen des Daumengriffbereichs ausgebildet sind. Vorzugsweise sind die Oberflächenstrukturelemente des Handgriffelements, insbesondere zumindest paarweise, jeweils gruppiert hintereinander entlang der Längsachse des Mundhygienemittels angeordnet.

Die für die Herstellung eingesetzten Komponenten können insbesondere wie folgt eingeteilt werden:
- Konventionelle Materialien: Materialien, im Wesentlichen Neumaterialien, die größtenteils ölbasiert sind.
- Nachhaltige Materialien: wie nachfolgend aufgezählt und später beschrieben vorzugsweise biobasiert, abbaubar und/oder recycliert.
   ∘ Biobasierte Materialien: Material, welches insbesondere zu mehr als 60 %, vorzugsweise zu mehr als 80 % und besonders bevorzugt zu 100 % aus nachwachsenden Rohstoffen hergestellt ist. Eine weitere mögliche zusätzliche Eigenschaft biobasierter Materialien ist insbesondere, dass die biobasierten Materialien biologisch abbaubar sind. Vorzugsweise basieren die Materialien nicht auf Nahrungsmitteln wie insbesondere Mais etc..
   ∘ Biologisch abbaubare Materialien: Material, das gemäß den gängigen Normen biologisch abbaubar ist. Hierzu zählen insbesondere die Kompostierbarkeit (industriell oder nicht industriell). Dabei können Materialien aus nachwachsenden Rohstoffen, wie insbesondere petrochemische Rohstoffe, diese Eigenschaft tragen.
   o Recyclierte Materialien: Materialien, die aus einem Recycling-Prozess stammen, wie beispielsweise Post Consumer Recycled Materialien, Ocean Waste Plastic oder Social Plastic.

Die eingesetzten Materialien können recyclierbare Materialien sein. Für recyclierbare Materialien besteht nach dem Gebrauch vorteilhaft eine Recyclingmöglichkeit.

Im Rahmen dieser Offenbarung kommen nahezu beliebige Hartkomponenten und Weichkomponenten infrage, die der Fachmann zweckgemäß geeignet kombinieren und/oder auswählen wird. Als Hartkomponente kommen beispielsweise Styrolpolymerisate wie Styrolacrylnitril (SAN), Polystyrol (PS), Acrylnitrylbutadienstryrol (ABS), Styrolmethylmethacrylate (SMMA), Styrolbutadien (SB) oder dergleichen infrage. Ferner kann eine Hartkomponente Polyolefine wie Polypropylen (PP), Polyethylen (PE) oder dergleichen umfassen, insbesondere auch in Form von High-Density-Polyethylen (HDPE) oder Low-Density-Polyethylen (LDPE). Zudem kommen Polyester wie beispielsweise Polyethylenterephtalat (PET), insbesondere in Form von säuremodifiziertem Polyethylenterephthalat (PETA), glykolmodifiziertem Polyethylenterephthalat (PETG), Polybutylenterephthalat (PBT), säuremodifiziertes Polycyclohexylendimethylenterephthalat (PCT-A), glykolmodifiziertes Polycyclohexylendimethylenterephthalat (PCT-G) oder dergleichen infrage. Weiterhin ist eine Verwendung von Cellulosederivaten wie beispielsweise Celluloseacetat (CA), Celluloseacetobutyrat (CAB), Cellulosepropionat (CP), Celluloseacetatphthalat (CAP), Cellulosebutyrat (CB) oder dergleichen denkbar. Ferner kann eine Hartkomponente beispielsweise Polyamide (PA) wie PA 6.6, PA 6.10, PA 6.12 oder dergleichen, Polymethylmethacrylat (PMMA), Polycarbonat (PC), Polyoxymethylen (POM), Polyvinylchlorid (PVC), Polyurethan (PUR), Polyamid (PA) oder dergleichen mehr umfassen. Insbesondere Polyethylen (PE) und/oder Polyurethan (PU) können als Hartkomponente und/oder als Weichkomponente eingesetzt werden. Insbesondere weist eine Hartkomponente ein Elastizitätsmodul von wenigstens 1000 N/mm² und vorteilhaft von wenigstens 1300 N/mm² und/oder von höchstens 2400 N/mm² und vorteilhaft von höchstens 1800 N/mm² auf. Als Hartkomponente wird bevorzugt Polypropylen (PP) eingesetzt. Mindestens gewisse unter der Hartkomponente genannte Materialien können nachhaltige Materialien sein. Insbesondere Materialien mit Celluloseanteil sind zumindest teilweise biobasiert.

Vorteilhaft werden Hartkomponenten für stabile und/oder strukturtragende Elemente, insbesondere in dem Griffelement und/oder in einem Trägerelement der Anwendungseinheit und/oder der Befestigungseinheit oder dergleichen eingesetzt. Vorzugsweise weist das Mundhygienemittel oder zumindest ein Grundkörper des Mundhygienemittels eine einzige Hartkomponente auf, die aus einem der genannten Materialien oder auch aus einem Gemisch derselben ausgebildet sein kann. Es sind jedoch auch Kombinationen unterschiedlicher Hartkomponenten denkbar, wobei diese beispielsweise in einem Zwei- und/oder Mehrkomponentenspritzguss verarbeitet und/oder miteinander verklebt und/oder verschweißt, insbesondere ultraschallverschweißt, sein können. Alternativ oder zusätzlich können mehrere Hartkomponenten eingesetzt werden, die in einem Zwei- und/oder Mehrkomponentenspritzguss keinen Materialschluss eingehen. Insbesondere ist denkbar, dass in diesem Fall ein Formschluss, beispielsweise in Form zumindest eines Hinterschnitts und/oder zumindest eines Durchbruchs und/oder zumindest einer zumindest teilweisen Umspritzung oder dergleichen, zwischen Hartkomponenten erzeugt ist. Hierbei ist denkbar, dass beispielsweise eine zweite Hartkomponente, die insbesondere auf eine erste Hartkomponente gespritzt ist, nach einem Spritzguss schwindet und/oder schrumpft und vorteilhaft eine Schwundverbindung ausbildet. Geeignete Kombinationen können beispielsweise Polypropylen-Polyester, Polypropylen-Styrolacrylnitril oder andere Kombinationen sein.

Als Weichkomponenten kommen beispielsweise thermoplastische Styrol-Elastometer (TPE-S) wie etwa ein Styrol-Ethylen-Butylen-Styrol-Copolymer (SEBS), ein StyrolButadien-Styrol-Copolymer (SBS) oder dergleichen infrage. Zudem ist eine Verwendung thermoplastischer Polyurethan-Elastometer (TPE-U), thermoplastischer Polyamid-Elastomere (TPE-A), thermoplastischer Polyolefin-Elastomere (TPE-O), thermoplastischer Polyester-Elastomere (TPE-E) oder dergleichen denkbar. Weiterhin kann eine Weichkomponente beispielsweise zumindest ein Silikon umfassen. Vorteilhaft weist eine Weichkomponente eine Shorte-A-Härte von höchstens 90, vorteilhaft von höchstens 50 und besonders vorteilhaft von höchstens 30 auf. Vorzugsweise bildet zumindest eine Weichkomponente mit zumindest einer Hartkomponente, insbesondere in zumindest einem Zwei- und/oder Mehrkomponentenspritzguss, vorteilhaft mittels zumindest eines Überspritzens und/oder Umspritzens, zumindest einen Materialschluss. Die unter der Weichkomponente genannten Materialien können nachhaltige Materialien sein. Vorteilhaft ist denkbar, dass eine verwendete Hartkomponente und eine verwendete Weichkomponente unterschiedliche Farben aufweisen, sodass Oberflächenstrukturen, Beschriftungen, Motive und dergleichen mittels geeigneter Gestaltung von Grundkörper und Weichelement realisierbar sind.

Ferner wird vorgeschlagen, dass die zumindest eine Anwendungseinheit einen Bürstenkopf, insbesondere Zahnbürstenkopf, aufweist. Die Anwendungseinheit weist vorteilhaft zumindest eine Reinigungseinheit, insbesondere einen Zahnbürstenkopf, mit Borsten auf. Die Reinigungseinheit weist zudem vorteilhaft zumindest einen Borstenträger, beispielsweise einen Bürstenkopfgrundkörper, auf. Zumindest einige oder alle der Borsten sind vorteilhaft konventionell extrudierte Borsten. Borsten können hierbei insbesondere zumindest eine Hartkomponente und/oder zumindest eine Weichkomponente umfassen. Vorzugsweise sind die Borsten zumindest teilweise oder vollständig aus Polyamid (PA) und/oder aus Polyester (PBT, PET) gefertigt, wobei beliebige andere Materialien denkbar sind und auch nachhaltige Materialien möglich sind. Ferner ist denkbar, dass zumindest einige der Borsten eine Zuspitzung und/oder einen veränderlichen Querschnitt aufweisen. Vorzugsweise sind die Borsten aus einem einzelnen, insbesondere auch gemischten, Material ausgebildet. Es sind aber auch Borsten mit mehreren Komponenten denkbar, die insbesondere mittels zumindest einer Koextrusion herstellbar und/oder hergestellt sein können. Die Borsten können beispielsweise mittels Extrusion, Ablängen und/oder Nachbearbeitung herstellbar und/oder hergestellt sein. Im Gegensatz zu gespritzten Borsten oder gummielastischen Massage- und Reinigungselementen, welche mittels Spritzguss hergestellt sind, werden konventionelle Borsten extrudiert, geschnitten, bearbeitet und am Zahnbürstengriff mittels angepasstem Verfahren eingesetzt, wie beispielsweise mittels des Ankerstanz-Verfahrens, des AFT-Verfahrens und/oder des IMT-Verfahrens.

Insbesondere kommen zylindrische oder zugespitzte Borsten infrage, wobei beliebige andere Querschnitte wie beispielsweise polygonale, dreieckige, rechteckige, quadratische, elliptische, sternförmige, trapezförmige, parallelogrammförmige, rhombusförmige oder beliebige andere Querschnitte denkbar sind. Insbesondere können unterschiedliche Borsten in einem Borstenbündel, aber auch unterschiedliche Borstenbündel, insbesondere jeweils mit einer bestimmten Art von Borsten, verwendet werden. Borsten und/oder Borstenbündel können hierbei regelmäßig, aber auch unregelmäßig angeordnet sein. Insbesondere können sich in Gruppen und/oder benachbart angeordnete Borsten und/oder Borstenbündel hinsichtlich zumindest eines Merkmals wie beispielsweise einer Länge, eines Durchmessers, eines Materials, einer Farbe, einer Materialhärte, einer Geometrie, einer Anspitzung und dergleichen, insbesondere abwechselnd, unterscheiden. Vorzugsweise weisen die Borsten einen Durchmesser, insbesondere senkrecht zu deren Längsachse, von wenigstens 0,075 mm und/oder von höchstens 0,25 mm auf. Vorteilhaft weisen die Borsten eine Querschnittsfläche, insbesondere senkrecht zu deren Längsachse, von wenigstens 0,002 mm² und/oder von höchstens 0,2 mm² auf. Im Fall von Borsten, die im Kosmetikbereich eingesetzt werden, beispielsweise Borsten eines zusätzlichen Anwendungselements, können auch dünnere Borsten und/oder Borsten mit einem kleineren Querschnitt verwendet werden, insbesondere Borsten mit einem Durchmesser, insbesondere senkrecht zu deren Längsachse, von wenigstens 0,025 mm und/oder von höchstens 0,2 mm und/oder mit einer Querschnittsfläche, insbesondere senkrecht zu deren Längsachse, von wenigstens 0,001 mm² und/oder von höchstens 0,15 mm². Im Fall von zugespitzten Borsten ist insbesondere Polyester (PBT, PET) als Material geeignet, wobei auch nachhaltige Materialien möglich sind, wobei eine Zuspitzung mechanisch und/oder chemisch erzeugt sein kann. Andere Materialien sind jedoch ebenso denkbar. Vorzugsweise sind die Borsten in Längsrichtung gerade, es sind jedoch auch gewellte und/oder gedrillte und/oder wendelförmige und/oder gedrehte Borsten denkbar sowie insbesondere auch Kombinationen unterschiedlicher Borsten. Ferner sind Borsten mit einer glatten Oberfläche denkbar, ebenso wie Borsten mit texturierter Oberfläche.

Ferner sind die Borsten, insbesondere als Borstenbündel, vorzugsweise mittels zumindest eines Ankerstanz-Verfahrens, eines Anchor-Free-Tufting-Verfahrens (AFT), eines In-Mold-Tufting-Verfahrens (IMT), eines PTt-Verfahrens oder dergleichen verarbeitet, insbesondere an dem Borstenträger befestigt. Vorzugsweise weist der Borstenträger eine Mehrzahl von, insbesondere gebohrten und/oder bei einem Spritzguss geformten, Borstenaufnahmen, insbesondere Löchern für Borstenbündel, auf. Im Fall eines Ankerstanzens ist beispielsweise denkbar, dass zunächst ein Grundkörper, insbesondere aus einer Hartkomponente, vorzugsweise des Bürstenkopfs, mittels eines Spritzgießens gefertigt wird, wobei vorteilhaft Sacklöcher für Borstenbündel bei dem Spritzgießen geformt werden. Selbstverständlich ist jedoch auch ein anschließendes Bohren von Sacklöchern denkbar. Vorzugsweise werden anschließend Borsten beziehungsweise Borstenbündel gefaltet und mittels zumindest eines Ankers in jeweils einem Sackloch befestigt, insbesondere mittels eines Einstanzens. Ebenso ist ein Schlingenstanzen denkbar.

Alternativ sind, wie erwähnt, auch ankerlose Verfahren denkbar, wobei vorteilhaft Borsten beziehungsweise Borstenbündel nicht gefaltet werden. Borsten beziehungsweise Borstenbündel weisen in diesem Fall im Vergleich zu einem Ankerstanzen in etwa die halbe Länge auf. Beispielsweise ist hierbei denkbar, dass die Borstenbündel zunächst vereinzelt, verschmolzen und/oder deren Borstenenden insbesondere anschließend zu deren Befestigung umspritzt werden. Hierbei können vorteilhaft Borstenbündel zusammengeführt werden. Möglich ist hierbei eine Herstellung mittels des In-Mold-Tufting-Verfahrens, wobei vorteilhaft bei dem Umspritzen der Borstenenden ein Grundkörper, beispielsweise des Bürstenkopfs und/oder der Griffeinheit und/oder der Befestigungseinheit, geformt wird. Ebenso ist denkbar, dass, insbesondere im Rahmen einer Integrated-Anchorless-Production, Borsten zunächst mit Plättchen oder dergleichen umspritzt werden und diese Plättchen anschließend wiederum umspritzt werden, beispielsweise um den Bürstenkopf und/oder die Griffeinheit auszubilden.

Ferner ist denkbar, dass die Anwendungseinheit aus einem Grundkörper und einem Borstenplättchen, welches mit Borsten und/oder alternativen Reinigungselementen besetzt ist, zusammengesetzt ist. Hierzu werden zunächst mittels Spritzgießens Borstenplättchen mit Durchgangslöchern gefertigt, durch welche anschließend Borsten geführt werden. Vorzugsweise werden die Borsten anschließend auf einer Rückseite verbunden, insbesondere verschmolzen, vorzugsweise miteinander und/oder mit dem entsprechenden Borstenplättchen. Auf diese Weise beborstete Borstenplättchen können sodann mit einem Grundkörper, insbesondere einem Bürstenkopf, verschweißt und/oder verklebt werden, vorzugsweise mittels eines Ultraschallschweißens. Hierzu weist der Grundkörper, insbesondere der Bürstenkopf, insbesondere eine Ausnehmung auf, in welche das Borstenplättchen eingesetzt werden kann. Als bekanntes Herstellungsverfahren ist in diesem Zusammenhang das Anchor-Free-Tufting-Verfahren zu nennen, das insbesondere ein Zusammenführen von Borstenbündeln ermöglicht. Als Unterseite des Borstenplättchens wird insbesondere eine Seite bezeichnet, welche in eine Ausnehmung des Grundkörpers gelegt wird und in Richtung Rückseite des Mundhygienemittels zeigt. Entsprechend zeigt die Oberseite des Borstenplättchens in Richtung der Oberseite des Mundhygienemittels.

Als weiteres Verfahren zur ankerlosen Beborstung kommt eine Fertigung, insbesondere ein Spritzgießen, eines Bürstenkopfs mit Durchgangslöchern für Borsten infrage. Borsten können anschließend durch die Durchgangslöcher geführt und auf einer Rückseite verschmolzen werden, insbesondere miteinander und/oder mit dem Bürstenkopf. Vorzugsweise erfolgt anschließend ein Überspritzen, insbesondere mit zumindest einer Weichkomponente, der verschmolzenen Bereiche und/oder des Bürstenkopfs.

Zudem ist denkbar, zunächst einen Bürstenkopf mit Sacklöchern, beispielsweise mittels Spritzgießens und/oder mittels eines Bohrens der Sacklöcher, zu fertigen. Borsten werden in diesem Fall insbesondere zu Bündeln zusammengelegt und an einem Ende verschmolzen und/oder anderweitig verbunden. Der Bürstenkopf wird anschließend, insbesondere auf eine Glastemperatur seines Materials, erwärmt. Sodann können vorteilhaft Borstenbündel in die Sacklöcher eingeführt und mittels eines Andrückens an dem Bürstenkopf verankert werden. Insbesondere verformen sich hierbei die erwärmten Sacklöcher, sodass die Borstenbündel in denselben verankert werden.

Alternativ oder zusätzlich zu gestanzten und/oder angeschweißten und/oder angeklebten Borsten sind auch angespritzte Borsten denkbar. Diese können insbesondere während eines Mehrkomponentenspritzgießens gemeinsam mit der Anwendungseinheit, der Griffeinheit und/oder der Befestigungseinheit gefertigt sein, oder nachträglich an einen Grundkörper der Anwendungseinheit angespritzt sein.

Ein weiteres mögliches Verfahren zur Beborstung des Bürstenkopfs stellt das Eindrehen dar. Hierbei wird beispielsweise Filament von einer Rolle zugeführt, wobei insbesondere mehrere Filamentstränge auf einer Rolle aufgewickelt sind. Für die Maschinenbeschickung sind jeweils mehrere Rollen vorgespannt, denn jedes Filament in der Bürste entspricht einem Filamentstrang. Die Filamente werden in der Breite korrekt ausgebreitet, damit sie die Breite haben, in welcher sie in die Bürste eingeführt werden. Die Filamente werden so vorgezogen, dass sie anschließend für den nächsten Schritt freistehen, d.h. dass ein Draht darüber geführt werden kann. Anschließend wird ein Draht ab einer Rolle auf die Maschine zugeführt, d.h. abgewickelt und in den Prozess eingeführt. Der Draht wird auf eine Länge geschnitten, welche grösser ist als die abgewickelte Länge der eingedrehten Bürste, das endgültige Ablängen erfolgt nach dem Eindrehen. Der Draht wird zu einem U gebogen, damit die offene Seite anschließend über die Filamente geschoben werden kann, um die Borsten einzufädeln. Der Draht wird am Boden des U's gehalten. Darauffolgend wird das offene Drahtende geklemmt, damit die Filamente zwischen den Drahtstücken halten. Die Filamente werden auf eine Länge geschnitten, welche grösser ist als die Endlänge in der Bürste, damit die Bürste anschließend, wenn die Filamente eingedreht sind, korrekt geschnitten werden kann. Der Draht wird gedreht, sodass die Filamente zwischen dem Draht eingeklemmt und damit fixiert werden. Nachdem die Filamente im Draht fixiert sind, werden sie auf die korrekte Länge geschnitten und profiliert. Nachdem der Bürstenteil fertiggestellt ist, wird der überschüssige Draht abgeschnitten.

Vorzugsweise gehen Materialien gespritzter Borsten bei einem Spritzgussprozess, insbesondere einem Zwei- und/oder Mehrkomponentenspritzgießen, keinen Materialschluss mit anderen Weichkomponenten und/oder Hartkomponenten des Mundhygienemittels ein. Bevorzugt werden gespritzte Borsten vielmehr mittels eines Formschlusses, beispielsweise mittels zumindest eines Hinterschnitts und/oder zumindest eines Durchbruchs und/oder mittels zumindest einer zumindest teilweisen Umspritzung mit Weichkomponenten und/oder Hartkomponenten verbunden, wobei insbesondere eine Schwundverbindung und/oder eine Schrumpfverbindung denkbar sind. Es ist jedoch auch eine Verbindung mittels zumindest eines Materialschlusses denkbar.

Für sämtliche erwähnte mögliche Spritzgussprozesse ist grundsätzlich ein Ein-, Zwei- und/oder Mehrkomponentenspritzguss denkbar. Verwendete Materialien, insbesondere unterschiedlicher Weichkomponenten und/oder Hartkomponenten, können hierbei, wie erwähnt, stoffschlüssig und/oder formschlüssig verbunden werden und/oder sein. Auch eine Ausbildung von gelenkigen bzw. beweglichen oder flexiblen Verbindungen mittels geeigneter Spritzgussschritte ist denkbar. Es kommen grundsätzlich beispielsweise Heißkanalverfahren, Kaltkanalverfahren und/oder Co-Injektionsverfahren infrage.

Alternativ oder zusätzlich zu einem mit Borsten besetzten Bürstenkopf kann die Anwendungseinheit auch zumindest einen Zungenreiniger und/oder zumindest ein alternatives Reinigungs- und/oder Massageelement aufweisen. Diese können jeweils aus einer Weichkomponente, aus einer Hartkomponente oder aus einer Kombination von Weich- und Hartkomponente ausgebildet und/oder vorteilhaft mittels Spritzgießens herstellbar und/oder hergestellt sein.

Vorzugsweise sind gespritzte Borsten zumindest teilweise und vorteilhaft vollständig aus einem thermoplastischen Polyurethan-Elastomer (TPE-U) ausgebildet. Hierbei ist eine Verwendung eines modifizierten Polyurethan-Elastomers (TPE-U) denkbar, welches insbesondere bezüglich verbesserter Fließeigenschaften und/oder einer schnellen Erstarrung, insbesondere einer schnellen Kristallisation, vorteilhaft bereits bei höheren Temperaturen, modifiziert sein kann. Selbstverständlich sind aber auch andere Materialien denkbar, beispielsweise thermoplastische Polyester-Elastomere (TPE-E), thermoplastische Polyamid-Elastomere (TPE-A), Polyethylen (PE), beispielsweise in den Formen low density Polyethylen (LDPE) oder linear low density Polyethylen (LLDPE), oder dergleichen. Materialien für gespritzte Borsten weisen vorteilhaft eine Shore-D-Härte von wenigstens 0 und besonders vorteilhaft von wenigstens 30 und/oder von höchstens 100 und vorteilhaft von höchstens 80 auf. Insbesondere ist eine Shore-Härte eines Materials gespritzter Borsten vorteilhaft höher als eine Shore-Härte übriger verwendeter Weichkomponenten, beispielsweise für Griffelemente, Massageelemente, weitere Reinigungselemente oder dergleichen. Die für die Herstellung von gespritzten Borsten eingesetzten Materialien können nachhaltige Materialien sein.

Grundsätzlich ist ferner eine Verwendung wasserlöslicher Polymere denkbar, beispielsweise für Hartkomponenten, Weichkomponenten, gespritzte Borsten oder andere Elemente des Mundhygienemittels.

Ebenso können für die Hartkomponente, die Weichkomponente und/oder das Material für gespritzte Borsten Biokunststoffe herangezogen werden, welche insbesondere aus nachwachsenden Rohstoffen gewonnen sein können. Als Rohstoffe kommen hierbei insbesondere Mais, Hanf, Zucker, Rizinusöl, Palmöl, Kartoffeln, Weizen, Zuckerrohr, Zuckerrüben, Kautschuk, Holz, die Castor-Pflanze / der Wunderbaum und dergleichen infrage. Entsprechende mögliche Grundstoffe könnten beispielsweise Cellulose, Stärke, Milchsäure (PLA), Glucose, Chitin, Chitosan, Lignin, Casein, Gelatine oder dergleichen sein, aus denen insbesondere entsprechende Biokunststoffe synthetisiert sein können.

Unter einem "materiellen Volumenkörper" soll in diesem Zusammenhang insbesondere ein die Griffeinheit ausbildender Körper verstanden werden, welcher insbesondere aus einem Vollmaterial besteht. Vorzugsweise bildet der Volumenkörper eine stützende Struktur der Griffeinheit aus. Vorzugsweise besteht der materielle Volumenkörper zu einem Großteil aus einer oder mehreren Hartkomponenten. Ferner soll in diesem Zusammenhang unter einer "Hohlraumstruktur" insbesondere ein Hohlraum und/oder mehrere aneinander angrenzende und/oder abschnittsweise unterbrochene Hohlräume verstanden werden, welche zumindest teilweise, insbesondere zu einem Großteil von einer Stützstruktur, insbesondere dem materiellen Volumenkörper, der Griffeinheit begrenzt und/oder eingeschlossen sind. So können 1, 2, 3, 4, 5, 6, 7, 8, 9, 10, 11 oder 12 miteinander verbundene Hohlräume oder voneinander getrennte Hohlräume eingesetzt werden. Vorzugsweise ist zumindest 30 %, vorzugsweise zumindest 50 % und besonders bevorzugt zumindest 70 % einer Außenfläche der Hohlraumstruktur von der Stützstruktur, insbesondere dem materiellen Volumenkörper, der Griffeinheit begrenzt. Bevorzugt existiert zu jedem Punkt der Hohlraumstruktur eine den Punkt schneidende, gedachte Gerade, welche den materiellen Volumenkörper, anschließend den Punkt und darauffolgend wieder den materiellen Volumenkörper schneidet. Unter einer "wesentlichen Hohlraumstruktur" soll in diesem Zusammenhang insbesondere eine Hohlraumstruktur verstanden werden, deren Volumen zumindest 20 %, vorzugsweise zumindest 30 % und besonders bevorzugt zumindest 40 % eines Volumens der Griffeinheit, insbesondere ab der Unterseite bis zu und mit dem Daumengriffbereich, entspricht. Unter einem "wesentlichen Teil" soll insbesondere 30 %, vorzugsweise zumindest 50 % und besonders bevorzugt zumindest 70 % eines Ganzen verstanden werden. Des Weiteren soll in diesem Zusammenhang unter einer "Haupterstreckung" insbesondere eine Erstreckung eines Objekts entlang einer Haupterstreckungsrichtung verstanden werden. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt. Vorzugsweise entspricht das Volumen der Griffeinheit, insbesondere ab der Unterseite bis zu und mit dem Daumengriffbereich, einer Summe der Volumen der umschlossenen Hohlraumstruktur und des materiellen Volumenkörpers.

Vorzugsweise beträgt das Volumen der umschlossenen Hohlraumstruktur insbesondere zwischen 4 cm³ und 13 cm³ und vorzugsweise zwischen 6 cm³ und 10 cm³. Das Volumen des materiellen Volumenkörpers kann vorteilhafterweise in einer sehr großen Bandbreite variieren, da die Ausgestaltung sehr unterschiedlich sein kann. Bevorzugt beträgt das Volumen des materiellen Volumenkörpers daher zwischen 3 cm³ und 12 cm³ und vorzugsweise zwischen 5 cm³ und 9 cm³. Vorzugsweise beträgt das Volumen der Griffeinheit, insbesondere ein total umschlossenes Volumen, insbesondere ab der Unterseite bis zu und mit dem Daumengriffbereich, insbesondere zwischen 7 cm³ und 22 cm³ und vorzugsweise zwischen 11 cm³ und 19 cm³. Bezüglich der umschlossenen Hohlraumstruktur, des materiellen Volumenkörpers und auch des Volumens der Griffeinheit sind insbesondere die Volumen von der Unterseite bis zu und mit dem Daumengriffbereich berücksichtigt.

Es wird generell vorgeschlagen, den materiellen Volumenkörper vorteilhafterweise möglichst leicht auszugestalten. Bevorzugt beträgt das Gewicht des Mundhygienemittels vorzugsweise weniger als 18 g. Vorzugsweise liegt das Gewicht des Mundhygienemittels insbesondere in einem Bereich zwischen 4 g und 18 g und bevorzugt in einem Bereich zwischen 6 g und 14 g. Dies erlaubt dem Nutzer eine vorteilhaft einfache und vorteilhaft präzisere Führung, da weniger Masse bewegt werden muss. Zusätzlich sinkt dadurch das Verletzungspotential durch Fehlmanipulationen bzw. Fehlbewegungen.

Eine Wandstärke der materiellen Volumenkörper beträgt insbesondere von 0,6 mm bis 5,5mm und vorzugsweise von 1,5 mm bis 4 mm.

Ferner wird vorgeschlagen, dass der materielle Volumenkörper eine zumindest im Wesentlichen bionische Struktur aufweist, welche zumindest teilweise direkt die Hohlraumstruktur begrenzt. Vorzugsweise grenzt die bionische Struktur direkt an die Hohlraumstruktur an. Unter einer "bionischen Struktur" soll in diesem Zusammenhang insbesondere eine auf der Bionik, insbesondere der Konstruktionsbionik, basierende Struktur, insbesondere Tragstruktur, verstanden werden. Die Struktur, insbesondere Tragstruktur, ist dabei insbesondere einer Struktur aus der Natur nachempfunden oder daran angelehnt. Insbesondere ist eine Form der Struktur, insbesondere Tragstruktur, an eine natürlich vorkommende Struktur angelehnt. Dabei sind verschiedene, einem Fachmann als sinnvoll erscheinende bionische Strukturen denkbar, wie beispielsweise eine Gitterstruktur, eine Wabenstruktur, eine Netzstruktur oder dergleichen. Die Strukturen bilden vorzugsweise gewisse Regelmäßigkeiten aus. Die Strukturen sind vorzugsweise symmetrisch gegenüber der Längsachse ausgebildet. Dadurch kann insbesondere ein materielles Volumen der Griffeinheit gering gehalten werden, insbesondere ohne eine Ergonomie des Mundhygienemittels, insbesondere eine Greifbarkeit, sowie eine Stabilität zu beeinträchtigen. Es kann insbesondere ein Materialeinsatz für das Mundhygienemittel gering gehalten werden. Hierdurch kann insbesondere ein vorteilhaft ökologisches Mundhygienemittel bereitgestellt werden.

Des Weiteren wird vorgeschlagen, dass der materielle Volumenkörper eine zumindest im Wesentlichen bionische Struktur aufweist, welche sich zumindest über einen wesentlichen Teil einer Haupterstreckung der zumindest einen Griffeinheit erstreckt. Vorzugsweise erstreckt sich die bionische Struktur über zumindest 30 %, vorzugsweise zumindest 50 % und besonders bevorzugt zumindest 70 % der Haupterstreckung der zumindest einen Griffeinheit. Die bionische Struktur kann dabei insbesondere zumindest abschnittsweise unterbrochen ausgeführt sein. Besonders bevorzugt ist zumindest 30 Vol.-%, vorzugsweise zumindest 50 Vol.-% und besonders bevorzugt zumindest 70 Vol.-% des materiellen Volumenkörpers von der bionischen Struktur gebildet. Dadurch kann insbesondere ein materielles Volumen der Griffeinheit gering gehalten werden, insbesondere ohne eine Ergonomie des Mundhygienemittels, insbesondere eine Greifbarkeit, sowie eine Stabilität zu beeinträchtigen. Es kann insbesondere ein Materialeinsatz für das Mundhygienemittel gering gehalten werden. Hierdurch kann insbesondere ein vorteilhaft ökologisches Mundhygienemittel bereitgestellt werden.

Es wird ferner vorgeschlagen, dass der materielle Volumenkörper eine zumindest im Wesentlichen bionische Struktur aufweist, welche von einer Gitterstruktur gebildet ist. Unter einer "Gitterstruktur" soll in diesem Zusammenhang insbesondere eine Struktur verstanden werden, welche eine Vielzahl von, insbesondere regelmäßig angeordneten, Ausnehmungen begrenzt, welche durch die Struktur voneinander getrennt ausgebildet sind. Die Struktur umfasst insbesondere eine Vielzahl von, insbesondere regelmäßig angeordneten, Stegen, welche jeweils zu den Seiten hin eine Ausnehmung begrenzen. Die Stege sind insbesondere zu einem Muster miteinander verbunden. Die Stege sind insbesondere einstückig ausgebildet. Die Ausnehmungen sind insbesondere in einem definierten Raster angeordnet und weisen eine zumindest im Wesentlichen gleiche Querschnittsform auf. Es sind verschiedene, einem Fachmann als sinnvoll erscheinende Querschnittformen der Ausnehmungen denkbar, wie beispielsweise kreisförmig, oval, elliptisch, rechteckig, rautenförmig, dreieckig, n-eckig, rhombusförmig, parallelogrammförmig oder dergleichen. Der Querschnitt der Ausnehmungen ist insbesondere von einer geschlossenen Kontur gebildet, wobei die Ausnehmungen aufgrund einer Außenkontur der Griffeinheit gebogen ausgebildet sein können. Insbesondere können auch längliche Konturen geschaffen werden, wie beispielsweise ähnlich einer Schneebesen-Form am hinteren Griffende. Die Anordnung der Ausnehmungen bildet insbesondere ein Muster aus. Dabei sind insbesondere regelmäßige, wie insbesondere in der Art eines Gitters, oder unregelmäßige Muster denkbar. Bei unregelmäßigen Mustern können insbesondere verschiedene Formen kombiniert werden, wobei sich beispielsweise ein Muster fortsetzen kann und/oder die Muster Bilder darstellen. Die Ausnehmungen sind vorzugsweise von Durchgangslöchern gebildet, insbesondere in dünnwandigen Teilen des materiellen Volumenkörpers. Durchgangslöcher sind insbesondere aus hygienischen Gründen vorteilhaft, da sie sich auswaschen bzw. durchwaschen lassen. Es wäre jedoch auch denkbar, dass die Ausnehmungen zumindest teilweise von Sacklöchern gebildet sind. Zumindest die Griffeinheit weist eine bionische Struktur auf, welche von einer Gitterstruktur gebildet ist. Alternativ oder zusätzlich wäre auch denkbar, dass die Anwendungseinheit, insbesondere in einem Daumengriffbereich oder Halsbereich, eine bionische Struktur aufweist, welche von einer Gitterstruktur gebildet ist. Die bionische Struktur, welche von einer Gitterstruktur gebildet ist, kann sowohl von einer durchgehenden Struktur, insbesondere einem durchgehenden Gitter, als auch von mehreren separaten Teilstrukturen, insbesondere von mehreren separaten Gittern, gebildet sein. Beispielsweise wäre denkbar, dass die Griffeinheit zwei Teilstrukturen aufweist, welche jeweils von einem separaten Gitter gebildet sind, wobei dazwischen eine Plattform für die Beschriftung ausgebildet ist. Pro Teilstruktur sind zwischen 5 und 18 parallele Stege angeordnet, vorzugsweise 7 bis 13 Stege. Beispielsweise wäre auch denkbar, dass die Griffeinheit eine zusammenhängende bionische Struktur aufweist, welche von einer Gitterstruktur gebildet ist, und die Anwendungseinheit, insbesondere in dem Halsbereich, eine bionische Struktur aufweist, welche von einer Gitterstruktur gebildet ist. Besonders bevorzugt weist lediglich die Griffeinheit die Gitterstruktur auf. Dadurch kann insbesondere ein Materialeinsatz für das Mundhygienemittel gering gehalten werden. Gleichzeitig kann insbesondere eine hohe Stabilität des Mundhygienemittels erreicht werden. Hierdurch kann insbesondere ein vorteilhaft ökologisches Mundhygienemittel bereitgestellt werden.

Die Gitterstruktur kann insbesondere mit verschiedenen Materialkomponenten gestaltet werden. Vorzugsweise wird die Gitterstruktur aus einer oder mehreren Hartkomponenten gebildet, welche auch den Rest der Griffeinheit bildet. Weiter wäre es möglich, die Gitterstruktur aus einer zu einer ersten Hartkomponente differierenden zweiten Materialkomponente zu bilden, beispielsweise aus einer weiteren Hartkomponente oder aus einer Weichkomponente. Des Weiteren kann die Hartkomponente vorteilhaft auch eine Basis bilden und die Grundstruktur des Gitters ausbilden, welche mit einer Weichkomponente überspritzt wird.

Es wird weiter vorgeschlagen, dass der materielle Volumenkörper zumindest einen Daumengriffbereich aufweist, wobei die Hohlraumstruktur zu einer dem Daumengriffbereich abgewandten Rückseite zumindest im Wesentlichen geöffnet ist. Vorzugsweise ist in dem Bereich des Daumengriffbereichs zumindest teilweise die, insbesondere als Gitterstruktur ausgebildete, bionische Struktur angeordnet. Insbesondere bildet eine Teilstruktur der bionischen Struktur eine Oberflächenstruktur des Daumengriffbereichs aus. Vorzugsweise umgreift der materielle Volumenkörper die Hohlraumstruktur in einer Ebene senkrecht zu der Haupterstreckungsrichtung der Griffeinheit zumindest im Wesentlichen C-förmig. Insbesondere ist ein geometrischer Mittelpunkt der Hohlraumstruktur zumindest über einen Winkelbereich von zumindest 180°, vorzugsweise von zumindest 200° und besonders bevorzugt von zumindest 220° von dem materiellen Volumenkörper umgeben. Ein Volumen der Hohlraumstruktur ist insbesondere größer als ein Volumen des materiellen Volumenkörpers, wobei insbesondere in jedem Punkt der Hohlraumstruktur eine den Punkt schneidende, gedachte Gerade existiert, welche den materiellen Volumenkörper, anschließend den Punkt und darauffolgend wieder den materiellen Volumenkörper schneidet. Der materielle Volumenkörper ist insbesondere dünnwandig ausgebildet. Vorzugsweise ist ein wesentlicher Anteil des materiellen Volumenkörpers und insbesondere des Griffbereichs bzw. des plattenförmigen Bereichs mit einer im Wesentlichen uniformen Wandstärke ausgebildet, vorzugsweise mit einer maximalen Abweichung von +/- 30 %. Der materielle Volumenkörper ist insbesondere wie eine gebogene bzw. geformte Platte ausgebildet. Vorzugsweise ist der materielle Volumenkörper in einem Spritzgussverfahren hergestellt. Der materielle Volumenkörper ist insbesondere von einer Art gebogenen bzw. geformten Platte gebildet. Die Biegung ist insbesondere im Wesentlichen quer zur Längsachse der Griffeinheit. Der materielle Volumenkörper weist insbesondere eine meist gebogene Querschnittsform auf, sodass wiederum eine voluminöse Außenform geschaffen wird. Vorzugsweise weist der materielle Volumenkörper einen im Wesentlichen C-förmigen Querschnitt, insbesondere in einer Ebene senkrecht zur Haupterstreckungsrichtung, auf, welcher gegen hinten offen ist. Bevorzugt ist der materielle Volumenkörper insbesondere von hinten ausgenommen, wobei die Ausnehmung von der Hohlraumstruktur gebildet ist. Die Hohlraumstruktur ist insbesondere von der Biegung des materiellen Volumenkörpers gebildet. Alternativ oder zusätzlich wäre jedoch auch denkbar, dass der materielle Volumenkörper von vorne oder von einer Seite her ausgenommen bzw. offen ist und sich die Hohlraumstruktur richtungsmäßig entsprechend orientiert. Es sind insbesondere eine oder mehrere, die Hohlraumstruktur ausbildende Ausnehmungen vorgesehen, wobei die Ausrichtung, insbesondere einer Orientierung des Querschnitts, der Ausnehmungen längs oder quer sein kann. Die Hohlraumstruktur erstreckt sich zumindest in der Griffeinheit, es wäre jedoch auch denkbar, dass sich die Hohlraumstruktur zusätzlich über den Halsbereich in die Anwendungseinheit fortsetzt. Beispielsweise könnte in dem Halsbereich dadurch eine wellenartige Struktur gebildet werden. Der Kopfbereich der Anwendungseinheit ist jedoch vorzugsweise als Vollkörper gestaltet, insbesondere zur Borstenfixierung beim Ankerstanzen oder auch für Schweißungen. Ferner weist der materielle Volumenkörper an einer freien Kante insbesondere einen stabilisierenden Rand auf. Der Rand kann insbesondere eine größere Materialstärke aufweisen als der restliche materielle Volumenkörper. Der materielle Volumenkörper weist insbesondere eine dünne Wandstärke auf. Die dünne Wandstärke reicht insbesondere bis in den Halsbereich der Anwendungseinheit. Die dünne Wandstärke ist beispielsweise geschaffen durch Ausnehmungen auf der Vorder- und/oder Rückseite. Vorzugsweise beträgt die Wandstärke des materiellen Volumenkörpers insbesondere von 0,6 mm bis 5,5 mm, vorzugsweise von 1,5 mm bis 4 mm und besonders bevorzugt von 2 mm bis 3,5 mm. Dadurch kann insbesondere eine geringe Materialstärke realisiert werden. Es kann insbesondere ein Materialeinsatz für das Mundhygienemittel gering gehalten werden. Gleichzeitig kann insbesondere aufgrund der Form eine hohe Stabilität des Mundhygienemittels erreicht werden. Insbesondere die Biegung und der Rand bringen eine hohe Stabilität. Hierdurch kann insbesondere ein vorteilhaft ökologisches Mundhygienemittel bereitgestellt werden. Ferner kann ein gewisses Haltevolumen und damit das Halten trotz reduziertem Materialvolumen einwandfrei bereitgestellt werden. Des Weiteren erlaubt die dünne Wandstärke bei Verwendung biologisch abbaubarer Kunststoffe einen vorteilhafterweise entsprechend rascheren Abbau.

Zudem wird vorgeschlagen, dass der materielle Volumenkörper auf einer dem zumindest einen Daumengriffbereich abgewandten Seite einen im Wesentlichen konkaven Aufnahmebereich ausbildet, welcher die Hohlraumstruktur begrenzt. Der materielle Volumenkörper weist insbesondere eine meist zu einer Rückseite konkav gebogene Querschnittsform auf, sodass wiederum eine voluminöse Außenform geschaffen wird. Die Hohlraumstruktur ist insbesondere von der konkaven Biegung des materiellen Volumenkörpers gebildet. Dadurch kann insbesondere eine geringe Materialstärke realisiert werden. Es kann insbesondere ein Materialeinsatz für das Mundhygienemittel gering gehalten werden. Gleichzeitig kann insbesondere aufgrund der Form eine hohe Stabilität des Mundhygienemittels erreicht werden. Insbesondere die Biegung und der Rand bringen eine hohe Stabilität. Hierdurch kann insbesondere ein vorteilhaft ökologisches Mundhygienemittel bereitgestellt werden. Ferner kann ein gewisses Haltevolumen und damit das Halten trotz reduziertem Materialvolumen einwandfrei bereitgestellt werden.

Ferner wird vorgeschlagen, dass die Hohlraumstruktur auf einer dem Daumengriffbereich zugewandten Vorderseite zumindest im Wesentlichen geschlossen ist. Vorzugsweise ist die Hohlraumstruktur auf einer Vorderseite zumindest im Wesentlichen von dem materiellen Volumenkörper begrenzt. Eine Ausnahme kann der Daumengriffbereich bilden, welcher von vorne ebenfalls einen konkaven Bereich bilden kann. In diesem Bereich kann der Querschnitt, insbesondere in einer Ebene senkrecht zur Haupterstreckungsrichtung, eine M-Form bilden.

Der materielle Volumenkörper ist insbesondere wie eine gebogene Platte geformt. Vorzugsweise weist der materielle Volumenkörper einen im Wesentlichen C-förmigen Querschnitt, insbesondere in einer Ebene senkrecht zur Haupterstreckungsrichtung, auf, welcher gegen hinten offen ist. Bevorzugt ist der materielle Volumenkörper insbesondere von hinten ausgenommen, wobei die Ausnehmung von der Hohlraumstruktur gebildet ist. Die Hohlraumstruktur kann in der Haupterstreckungsrichtung einmal oder mehrmals verjüngt sein und dabei eine Art Wellen-Form ausbilden. Dadurch kann insbesondere ein geringer Materialbedarf bei gleichzeitig im Wesentlichen geschlossener Vorderseite realisiert werden. Hierdurch kann ein gewisses Haltevolumen und damit das Halten trotz reduziertem Materialvolumen einwandfrei bereitgestellt werden. Ferner kann insbesondere ein Materialeinsatz für das Mundhygienemittel gering gehalten werden.

Des Weiteren wird vorgeschlagen, dass der materielle Volumenkörper eine zumindest im Wesentlichen bionische Struktur aufweist, welche in zumindest einem Bereich zumindest drei zueinander verdrehte Strangelemente aufweist. Alternativ können 4, 5, oder 6 Strangelemente verwendet werden. Vorzugsweise bilden die Strangelemente eine Netzstruktur aus. Die Strangelemente sind insbesondere zumindest teilweise ineinander verschlungen. Bevorzugt umschließen die Strangelemente zumindest teilweise die Hohlraumstruktur. Die Strangelemente sind insbesondere von Stegen gebildet, welche eine äußere Hülle der Hohlraumstruktur bilden. Die Strangelemente bilden insbesondere eine äußere Hülle des materiellen Volumenkörpers. Insbesondere erstrecken sich die Strangelemente zumindest teilweise durch die Hohlraumstruktur. Vorzugsweise sind die Strangelemente insbesondere von feinen Stegen mit einem geringen Querschnitt gebildet.

Die Strangelemente können verschiedenste Querschnitte aufweisen. Mögliche Querschnittsformen sind insbesondere kreisförmig, oval, elliptisch, rechteckig, rautenförmig, dreieckig, n-eckig, rhombusförmig, parallelogrammförmig, wobei die sich in Längsrichtung bildenden Kanten/Ecken gerundet oder "scharf" sein können. Weiter kann sich der Querschnitt über den Längsverlauf verändern und von einer Form in eine weitere Form übergehen, dies auch mehrmals. Bevorzugt weisen die Strangelemente eine Querschnittsfläche insbesondere von 3 mm² bis 10 mm² und vorzugsweise von 5 mm² bis 8 mm² auf. Vorzugsweise beträgt die Breite dabei insbesondere von 1 mm bis 5 mm und vorzugsweise von 1 mm bis 3 mm sowie die Höhe insbesondere von 1 mm bis 5 mm und vorzugsweise von 1 mm bis 3 mm.

Eine Orientierung der Strangelemente ist insbesondere im Wesentlichen in Längsrichtung der Griffeinheit. Bevorzugt kreuzen sich die Strangelemente entlang der Längsrichtung der Griffeinheit und bilden damit in der Haupterstreckungsrichtung Knotenpunkte. An Knotenpunkten können Strangelemente miteinander einen Materialschluss und/oder Formschluss eingehen. An Knotenpunkten können sich Strangelemente berühren, jedoch keine Verbindung miteinander eingehen. An Knotenpunkten können sich Strangelemente nicht berühren. An Knotenpunkten können sich Strangelemente mindestens teilweise durchdringen. Vorzugsweise weist der materielle Volumenkörper ferner zumindest eine zwischen den Strangelementen angeordnete Plattform auf. Die zumindest eine Plattform dient insbesondere der Kennzeichnung. Die zumindest eine Plattform dient insbesondere als Fingerauflage, vorzugsweise als Daumenauflage, insbesondere zu einer verbesserten Ergonomie. Die Plattform bildet insbesondere einen Daumengriffbereich aus. Vorzugsweise ist die Plattform von einem gefüllten Körper gebildet, welcher in die bionische Struktur integriert ist oder an diese angebaut ist. Insbesondere ist denkbar, dass die Plattform und die bionische Struktur aus einer Komponente, insbesondere einer Hartkomponente, gefertigt sind und daher sowohl der Körper der Plattform wie auch die bionische Struktur aus derselben Komponente sind. Es wäre jedoch auch denkbar, dass der Körper der Plattform zumindest teilweise aus einer weiteren Komponente, insbesondere einer Hartkomponente und/oder Weichkomponente, gefertigt ist. Insbesondere wäre denkbar, dass eine Außenhülle des Körpers der Plattform aus einer Weichkomponente besteht. Insbesondere können der Daumengriffbereich oder andere Elemente so aus einer weiteren Materialkomponente geformt sein. Dabei kann die Oberfläche der Plattform mit Oberflächenstrukturen versehen sein, welche einen vorteilhaft besseren Halt für die Finger bieten. Beispiele für die Strukturen sind Lamellen, Noppen, insbesondere in den verschiedensten Querschnitten, Vertiefungen etc. Mittels Durchbrüchen oder Umschlingungen kann insbesondere bei weiteren Materialkomponenten wiederum die nötige Verbindung zu der bionischen Struktur geschaffen werden. Die Durchbrüche, wenn sich die Materialien nicht verbinden, also insbesondere keinen Materialschluss eingehen, dienen der Bildung eines Formschlusses. Die bionische Struktur kann insbesondere im Abschluss so gestaltet sein, dass sie die nötigen Durchbrüche formt und gleichzeitig das Spritzgießen bzw. Abdichten gegenüber der weiteren Kontur ermöglicht. Die weitere Materialkomponente kann insbesondere auch eine Weichkomponente sein. Es sind verschiedene, einem Fachmann als sinnvoll erscheinende Anordnungen der zumindest einen Plattform denkbar. Beispielsweise wäre denkbar, dass die Griffeinheit zwei Plattformen aufweist, wobei eine erste Plattform an einem hinteren Ende der Griffeinheit angeordnet ist, eine zweite Plattform den Daumengriffbereich ausbildet und zwischen den beiden Plattformen die bionische Struktur angeordnet ist. Der Halsbereich kann anschließend sowohl als Vollkörper ausgebildet sein als auch ebenfalls eine bionische Struktur aufweisen. Der Kopfbereich der Anwendungseinheit ist vorzugsweise als Vollkörper ausgebildet. Ferner kann in die bionische Struktur der Griffeinheit ein Plateau eingebaut sein, wobei das Plateau insbesondere quasi eben zwischen zwei Strangelementen ausgebildet ist. Das Plateau kann insbesondere für eine Beschriftung bzw. Kennzeichnung genutzt werden oder kann insbesondere der Ergonomie, insbesondere zu einem verbesserten Halten, dienen. Dadurch kann insbesondere ein Materialeinsatz für das Mundhygienemittel gering gehalten werden. Es kann insbesondere ferner eine voluminöse Griffeinheit bereitgestellt werden. Hierdurch kann insbesondere ein vorteilhaft ökologisches Mundhygienemittel bereitgestellt werden. Ferner kann ein gewisses Haltevolumen und damit das Halten trotz reduziertem Materialvolumen einwandfrei bereitgestellt werden. Es kann insbesondere eine dynamische Gestaltung erreicht werden. Der Griffbereich kann insbesondere ergonomisch ausgestaltet sein und durch den Aufbau mit Strangelementen über eine gewisse Flexibilität bzw. Biegsamkeit verfügen.

Weiter ist es möglich, bei entsprechender geometrischer Gestaltung, die auf die Herstellung Rücksicht nimmt, dass gewisse Strangelemente aus einer anderen Materialkomponente gestaltet sind als die anderen. Beispielsweise können so Strangelemente aus verschiedenen Hartkomponenten und/oder aus Weichkomponenten gestaltet werden. Unterschiedliche Strangelemente können auch mit unterschiedlichen Additiven ausgestattet werden und so unterschiedliche Eigenschaften/Funktionen aufweisen.

Es sind verschiedene, einem Fachmann als sinnvoll erscheinende Verfahren zur Herstellung der bionischen Struktur, insbesondere mit den Strangelementen, denkbar. Insbesondere ist die bionische Struktur in einem Spritzgussverfahren hergestellt. Die bionische Struktur ist insbesondere mittels sich berührender Kerne sowie zusätzlicher Kernzüge hergestellt. Insbesondere ist denkbar, dass die bionische Struktur, insbesondere mit den Strangelementen, nicht mehr nur in einer Achse entformt werden kann, weshalb die zusätzlichen Kernzüge nötig sein können. Alternativ wären für die Herstellung auch 3D-Druck-Verfahren, bzw. aufbauende Verfahren, denkbar. Alternativ oder zusätzlich wäre denkbar, dass die Strangelemente im Wesentlichen parallel gespritzt sind, sodass sich ein Schneebesen und/oder ein Rechen ausbildet. Anschließend können die Strangelemente geformt und nötigenfalls verbunden werden. Alternativ oder zusätzlich wäre denkbar, dass die Strangelemente als Fachwerk aufgebaut sind.

Es wird ferner vorgeschlagen, dass die zumindest drei Strangelemente in zumindest einem Querschnitt senkrecht zu einer Haupterstreckungsrichtung der Griffeinheit voneinander beabstandet sind. Ferner sind die zumindest drei Strangelemente in zumindest einem Querschnitt senkrecht zu einer Haupterstreckungsrichtung der Griffeinheit zumindest teilweise miteinander verbunden. Es können auch 4, 5, 6 Strangelemente eingesetzt werden. Vorzugsweise kreuzen sich die Strangelemente in zumindest einem Punkt, wobei die Strangelemente in einem Knotenpunkt bzw. Kreuzungspunkt miteinander verbunden sind. Hierdurch kann insbesondere eine stabile Verbindung der Strangelemente sowie ein stabiler Griff bereitgestellt werden. Dadurch kann insbesondere ein Materialeinsatz für das Mundhygienemittel gering gehalten werden. Es kann insbesondere ferner eine voluminöse Griffeinheit bereitgestellt werden. Hierdurch kann insbesondere ein vorteilhaft ökologisches Mundhygienemittel bereitgestellt werden. Ferner kann ein gewisses Haltevolumen und damit das Halten trotz reduziertem Materialvolumen einwandfrei bereitgestellt werden. Es kann insbesondere eine dynamische Gestaltung erreicht werden.

Es wird weiter vorgeschlagen, dass die Hohlraumstruktur in zumindest einem Querschnitt senkrecht zu einer Haupterstreckungsrichtung der Griffeinheit von dem materiellen Volumenkörper umgeben ist, wobei der Volumenkörper zumindest eine Ausnehmung aufweist, über welche die Hohlraumstruktur mit einer Umgebung verbunden ist. Hierdurch kann insbesondere eine verbesserte Ergonomie erreicht werden. Dadurch kann insbesondere ein Materialeinsatz für das Mundhygienemittel gering gehalten werden. Es kann insbesondere ferner eine voluminöse Griffeinheit bereitgestellt werden. Hierdurch kann insbesondere ein vorteilhaft ökologisches Mundhygienemittel bereitgestellt werden. Ferner kann ein gewisses Haltevolumen und damit das Halten trotz reduziertem Materialvolumen einwandfrei bereitgestellt werden. Es kann insbesondere eine dynamische, optisch ansprechende Gestaltung erreicht werden. Das Design ist insbesondere aufgrund des geringen Materialbedarfs für eine biologisch abbaubare Bürste geeignet. Vorzugsweise weist der materielle Volumenkörper definierte Ausnehmungen auf. Bevorzugt sind dabei pro Seite insbesondere zwischen 3 und 10 und vorzugsweise zwischen 4 und 8 Ausnehmungen gestaltet. Bevorzugt begrenzt der materielle Volumenkörper, abgesehen von den Ausnehmungen, vollständig die Hohlraumstruktur. Die Ausnehmungen sind insbesondere unverbunden ausgebildet und weisen jeweils eine Fläche von maximal 2 cm², vorzugsweise von maximal 1 cm² und besonders bevorzugt von maximal 0,5 cm² auf. Die Hohlraumstruktur ist insbesondere zumindest in den voluminösen Partien der Griffeinheit angeordnet. Vorzugsweise weist der materielle Volumenkörper in einem die Hohlraumstruktur begrenzenden Bereich eine geringe Wandstärke auf. Die Ausnehmungen können insbesondere verschiedene Orientierungen aufweisen. Insbesondere können die Ausnehmungen gegenüber der Längsachse längs (d.h. parallel), quer oder im Winkel eingebracht werden. Der Winkel kann dabei zwischen 0° und 90° betragen. Dadurch kann die Ausnehmung vorteilhaft jeden Winkel zwischen der Längs- und Quer-Ausrichtung einnehmen. Ferner sind verschiedene, einem Fachmann als sinnvoll erscheinende Formen der Ausnehmungen denkbar, wie beispielsweise kreisförmig, oval, elliptisch, rechteckig, rautenförmig, dreieckig, n-eckig, rhombusförmig, parallelogrammförmig oder dergleichen. Die Ausnehmungen können insbesondere an verschiedenen Positionen an dem Mundhygienemittel angeordnet sein, wie insbesondere an der Griffeinheit, beispielsweise dem Daumengriffbereich und/oder an der Anwendungseinheit, beispielsweise dem Halsbereich oder dem Kopfbereich, insbesondere dem Bürstenkopf. Insbesondere ist in diesem Zusammenhang auch eine Mehr-Komponenten-Ausgestaltung, insbesondere des materiellen Volumenkörpers, denkbar. Vorzugsweise können Teile der Außenstruktur aus einer Weichkomponente hergestellt sein. Ein entsprechendes Mundhygienemittel kann insbesondere in einem Verfahren, insbesondere einem Spritzgussverfahren, gemäß der WO 2007/030958 A1 hergestellt werden. Das in der Druckschrift WO 2007/030958 A1 beschriebene Verfahren soll daher insbesondere als Teil der Offenbarung der vorliegenden Erfindung angesehen werden.

Ferner wird vorgeschlagen, dass die Hohlraumstruktur in zumindest einer Ebene parallel zu einer Haupterstreckungsebene der Griffeinheit vollständig von dem materiellen Volumenkörper umschlossen ist. Vorzugsweise ist die Hohlraumstruktur in der Haupterstreckungsebene der Griffeinheit vollständig von dem materiellen Volumenkörper umschlossen. Bevorzugt ist der materielle Volumenkörper zumindest teilweise von einem Ring gebildet, welcher sich um die Hohlraumstruktur erstreckt. Vorzugsweise ist die Hohlraumstruktur von einem Schlitz gebildet, welcher von dem materiellen Volumenkörper umschlossen ist. Der Schlitz ist insbesondere entlang der Längsachse der Griffeinheit ausgerichtet. Vorzugsweise ist der Schlitz von der Vorderseite zur Rückseite und von der linken Seite zur rechten Seite von dem materiellen Volumenkörper begrenzt. Der materielle Volumenkörper ist insbesondere von zwei seitlichen Längsstegen gebildet, welche jeweils an zumindest einem Ende, insbesondere einem vorderen Ende und einem hinteren Ende, verbunden sind. Der von dem materiellen Volumenkörper gebildete Rahmen, welcher die Hohlraumstruktur umschließt, ist insbesondere geschlossen ausgebildet. Es gibt insbesondere keine offenen Enden, wie beispielsweise gabelförmige Gestaltungen.

Der Ring kann verschiedenste Querschnitte aufweisen. Mögliche Querschnittsformen sind kreisförmig, oval, elliptisch, rechteckig, rautenförmig, dreieckig, n-eckig, rhombusförmig, parallelogrammförmig, wobei die sich in Längsrichtung bildenden Kanten/Ecken gerundet oder "scharf" sein können. Weiter kann sich der Querschnitt über den Längsverlauf verändern und von einer Form in eine weitere Form übergehen, dies auch mehrmals. Bevorzugt weist der Ring eine Querschnittsfläche insbesondere von 15 mm² bis 30 mm² und vorzugsweise von 20 mm² bis 27 mm² auf. Vorzugsweise beträgt die Breite dabei insbesondere von 1 mm bis 7 mm und vorzugsweise von 3 mm bis 6 mm sowie die Höhe insbesondere von 1 mm bis 7 mm und vorzugsweise von 3 mm bis 6 mm.

Der Schlitz kann in Draufsicht verschiedenste Querschnitte aufweisen. Die Querschnittsform kann in Längsrichtung gleichförmig sein oder auch eine Veränderung in Form von Einschnürungen aufweisen. Eine Einschnürung kann beispielsweise dazu genutzt werden, um einen Daumengriffbereich etwas abgesetzt auszugestalten. Weitere mögliche Querschnittsformen sind elliptisch, rautenförmig, parallelogrammförmig, rechteckig, dreieckig. Die Ecken und Kanten der Querschnittsformen sind vorzugsweise gerundet ausgestaltet, wobei die sich in Längsrichtung bildenden Kanten/Ecken gerundet oder "scharf" sein können. Bevorzugt weist der Querschnitt in der Mitte der Höhe gemessen eine Querschnittsfläche insbesondere von 15 mm² bis 30 mm² und vorzugsweise von 20 mm² bis 27 mm² auf. Vorzugsweise beträgt die Breite dabei insbesondere von 5 mm bis 15 mm und vorzugsweise von 8 mm bis 12 mm.

Der Querschnitt senkrecht zur Längsachse ist vorzugsweise so gestaltet, dass er direkt an der Form des Rings anliegt.

Die Anwendungseinheit, insbesondere der Halsbereich und der Kopfbereich, ist hierbei insbesondere als Vollkörper ausgebildet. Vorzugsweise kann der materielle Volumenkörper, insbesondere im Bereich der Hohlraumstruktur, vorzugsweise in den Einläufen des Schlitzes, eine Oberflächenstruktur aufweisen. Insbesondere kann der materielle Volumenkörper auf der Vorderseite und/oder der Rückseite ein Höhenprofil aufweisen. So kann beispielsweise eine Art Daumenmulde gestaltet werden. Insbesondere ist die Form des materiellen Volumenkörpers in dieser Ausgestaltung zumindest gerundet, insbesondere nicht scharfkantig, ausgebildet. Auf der Oberfläche des materiellen Volumenkörpers können Oberflächenstrukturelemente, auch Fortsätze genannt, wie insbesondere Noppen, Lamellen, Vertiefungen etc., gestaltet werden, die das Halten des Körpers vorteilhaft verbessern. Die als Schlitz ausgebildete Hohlraumstruktur weist insbesondere eine Länge von 30 mm bis 180 mm, vorzugsweise von 60 mm bis 150 mm, auf. Die als Schlitz ausgebildete Hohlraumstruktur weist insbesondere eine Breite von 3 mm bis 15 mm, vorzugsweise von 5 mm bis 10 mm, auf. Eine Höhe der als Schlitz ausgebildeten Hohlraumstruktur entspricht insbesondere zumindest der Dicke der Bürste, da der Hohlraum durchgehend gestaltet ist. Dadurch kann insbesondere ein Materialeinsatz für das Mundhygienemittel gering gehalten werden. Hierdurch kann insbesondere ein vorteilhaft ökologisches Mundhygienemittel bereitgestellt werden.

Ferner geht die Erfindung aus von einem Mundhygienemittel nach dem Oberbegriff des Anspruchs 1, insbesondere nach einem der Ansprüche 1 bis 11. Es wird vorgeschlagen, dass der materielle Volumenkörper der Griffeinheit zumindest zu einem Großteil aus einem biologisch abbaubaren, insbesondere kompostierbaren, und/oder aus einem recycelten und/oder recyclierbaren Material besteht. Vorzugsweise ist das Material insbesondere aus einem Kunststoff gebildet. Vorzugsweise ist das biologisch abbaubare, insbesondere kompostierbare, und/oder recycelte und/oder recyclierbare Material von einem Biokunststoff, insbesondere aus einem Kunststoff auf Basis nachwachsender Rohstoffe und/oder aus einem biologisch abbaubaren Kunststoff, gebildet. Das Material kann daher insbesondere fossil-basiert und bioabbaubar sein, wie beispielsweise PVOH, PCL, PBAT, PET oder PBS, auf nachwachsenden Rohstoffen basieren und bioabbaubar sein, wie beispielsweise PLA, PHA, Cellophane oder Stärke-Blends, oder auf nachwachsenden Rohstoffen basieren und nicht bioabbaubar sein, wie beispielsweise Ca, Bio-PE, Bio-PP, Bio-PA, Bio-PET. Es sind verschiedene, einem Fachmann als sinnvoll erscheinende Biokunststoffe denkbar, wie beispielsweise stärkebasierte Biokunststoffe, cellulosebasierte Biokunststoffe, Polyhydroxy-Alkanoate, wie insbesondere Polyhydroxybuttersäure (PHB), Polymilchsäure (PLA), aliphatische und/oder aromatische Copolyester, oder weitere Biokunststoffe wie beispielsweise Lignin-basierte Biokunststoffe. Bevorzugt besteht auch die Anwendungseinheit zu einem Großteil aus einem biologisch abbaubaren, insbesondere kompostierbaren, und/oder einem recycelten Material. Vorzugsweise besteht das Mundhygienemittel nur aus einer Komponente. Insbesondere weist das Mundhygienemittel eine Hartkomponente auf. Vorzugsweise besteht der materielle Volumenkörper der Griffeinheit zumindest zu einem Großteil aus der Hartkomponente. Die Hartkomponente und/oder die Weichkomponente und/oder das Material für gespritzte Borsten besteht insbesondere aus einem Biokunststoff, welcher insbesondere aus nachwachsenden Rohstoffen gewonnen sein kann. Als Rohstoffe kommen hierbei insbesondere Mais, Hanf, Zucker, Rizinusöl, Palmöl, Kartoffeln, Weizen, Zuckerrohr, Kautschuk, Holz, die Castor-Pflanze / der Wunderbaum und dergleichen infrage. Entsprechende mögliche Grundstoffe könnten beispielsweise Cellulose, Stärke, Milchsäure (PLA), Glucose, Chitin, Chitosan oder dergleichen sein, aus denen insbesondere entsprechende Biokunststoffe synthetisiert sein können. Dadurch kann insbesondere ein vorteilhaft ökologisches Mundhygienemittel bereitgestellt werden. Es kann insbesondere eine umweltbewusste Entsorgung des Mundhygienemittels erreicht werden.

Es ist insbesondere ein nachhaltiges Konzept für das Mundhygienemittel vorgesehen. Es sind verschiedene, einem Fachmann als sinnvoll erscheinende Materialien für einen Grundkörper des Mundhygienemittels denkbar, wie beispielsweise Holz, ein hybrider Aufbau mit einem Grundkörper bestehend aus Holz und pflanzenbasiertem Kunststoff, biologisch abbaubarem Kunststoff oder recycelter Kunststoff. Pflanzenbasierte Kunststoffe sind beispielsweise Polyamid mit dem Grundstoff Kastorpflanze bzw. Kastorbohnen, Polypropylen mit dem Grundstoff Zuckerrohr, ABS mit dem Grundstoff Zuckerrohr, Glucose oder Cellulose Acetat mit dem Grundstoff Holz. Recycelte Kunststoffe sind beispielsweise PET, insbesondere Post Consumer Recycled PET, welches insbesondere für die Griffeinheit einsetzbar ist, da keine neuen Ressourcen benötigt werden, Polypropylen, insbesondere Post Consumer Recycled PP, welches ebenfalls insbesondere für die Griffeinheit einsetzbar ist, da keine neuen Ressourcen benötigt werden, beispielsweise aus einer Recycling-Sammlung, Ocean-Waste-Plastic oder Social Plastic. Ferner sind verschiedene, einem Fachmann als sinnvoll erscheinende Materialien für die Borsten des Mundhygienemittels denkbar, wie beispielsweise 100 % pflanzenbasiertes Material basierend auf Kastoröl oder 60 % pflanzenbasiertes Material basierend auf Kastoröl und Polyamid. Des Weiteren sind verschiedene, einem Fachmann als sinnvoll erscheinende Verpackungen für das Mundhygienemittel denkbar, wie Kartonverpackung aus recyceltem oder recycelbarem Karton oder Blisterverpackung aus recycelbarem Karton und einem Kunstoffblister mit einem hohen Recyclatanteil, beispielsweise eine PET-Folie mit einem Recyclatanteil vorzugsweise von 80 % bis 100 % und besonders bevorzugt 100 %. Als spezielle Materialeigenschaften für das Mundhygienemittel kommen beispielsweise wasserlösliche Materialien und/oder biologisch abbaubare Materialien in Frage. Vorzugsweise enthält ein Material des Mundhygienemittels insbesondere zumindest ein Masterbatch. Das Masterbatch kann insbesondere zur Unterstützung des biologischen Abbaus, insbesondere ein Additiv zum Abbau von Kunststoff, vorgesehen sein. Vorzugsweise enthält der Masterbatch keine künstlichen Farben, um die Abbaubarkeit zu gewährleisten. Ferner sind insbesondere Additive wie Füllmaterialien oder Schäumungsmittel denkbar. Mögliche Füllmaterialien können beispielsweise Glasfasern, Glaskugeln oder Karbonfasern sein. Insbesondere kann das Mundhygienemittel zumindest teilweise in einem Thermoplast-Schaum-Spritzgussverfahren hergestellt sein, wobei als Additiv insbesondere ein Treibmittel als Schäumungsmittel zugesetzt ist. Hierdurch kann insbesondere ein luftiger Volumenkörper realisiert werden, welcher bei vollem Außenvolumen ein verringertes Gewicht aufweist.

Es ist insbesondere ein schlichtes und/oder schlankes Design des Mundhygienemittels vorgesehen. Es ist insbesondere zumindest abschnittsweise eine geringe Materialstärke vorgesehen, insbesondere zu einer Verbesserung der Abbaubarkeit sowie zu einer Reduzierung des Ressourcen-Verbrauchs. Bevorzugt beträgt die Wandstärke des materiellen Volumenkörpers insbesondere von 0,6 mm bis 5,5 mm, vorzugsweise von 1,5 mm bis 4 mm und besonders bevorzugt von 2 mm bis 3,5 mm. Für eine Beborstung können bei einem nachhaltigen Konzept für das Mundhygienemittel verschiedenste Verfahren eingesetzt werden, insbesondere die gleichen Verfahren wie bei herkömmlichen Bürsten. Es wird jedoch insbesondere ein ankerloses Verfahren angestrebt. Ankerlose Verfahren sind gut geeignet, da hiermit komplett metallfreie Mundhygienemittel herstellbar sind. Beispiele hierfür sind die bereits beschriebenen Verfahren AFT, IMT und/oder PTt sowie das Vorsehen von gespritzten Borsten. Alternativ sind hier jedoch auch konventionell gestanzte Borsten denkbar. Konventionelle, mittels Ankerstanzen hergestellte Borstenfelder sind aufgrund des verwendeten Metallankers jedoch schlechter geeignet. Bei dem nachhaltigen Konzept für das Mundhygienemittel ist insbesondere ein Ökotouch am Bürstenkörper vorgesehen. Dies stellt insbesondere eine rein psychische Komponente zu Marketingzwecken dar. Es sind insbesondere keine glatten Oberflächen, d.h. insbesondere keine polierten Flächen im Spritzgusswerkzeug, vorgesehen. Es soll insbesondere eine raue und/oder matte Oberfläche geschaffen werden. Die Oberflächenrauigkeit liegt bevorzugt zwischen Rz = 6,3 und Rz = 25. Hierfür werden insbesondere raue, erodierte Oberflächen im Spritzgusswerkzeug vorgesehen. Ferner ist insbesondere ein reduziertes Volumen, wie insbesondere mittels der bereits beschriebenen bionischen Struktur und/oder der bereits beschriebenen Hohlraumstruktur, vorgesehen. Hierdurch kann eine Materialreduktion erreicht werden. Generell bringt eine Materialreduktion eine schnellere Abbaubarkeit des Mundhygienemittels, falls biologisch abbaubare Materialien verwendet werden. Ferner bringt die Materialreduktion eine Materialersparnis, was auch den ökologischen Gedanken unterstützt, da ein geringer Ressourcenverbrauch vorliegt. Eine Materialreduktion findet vorzugsweise, insbesondere wie bereits oben ausgeführt, im Bereich der Griffeinheit statt, es ist aber auch möglich, die Strukturen in die Anwendungseinheit zu erstrecken.

Eine Materialreduktion insbesondere in der Griffeinheit bringt mit sich, dass sich der Schwerpunkt des Produkts verglichen mit konventionellen Produkten verschiebt. Der Schwerpunkt verschiebt sich bei der genannten Materialreduktion insbesondere in Richtung der Anwendungseinheit beziehungsweise in Richtung des Kopfbereichs. Der Schwerpunkt liegt in diesem Fall, gemessen ab der Unterseite insbesondere nach 40 % bis 70 %, vorzugsweise nach 42 % bis 60 % und besonders bevorzugt nach 45 % bis 55 % der Gesamtlänge des Mundhygienemittels.

Mittels der oben beschriebenen Formen kann insbesondere ein vorteilhaft leichtes Mundhygienemittel bereitgestellt werden. Hierdurch kann vor dem Hintergrund des nachhaltigen Konzepts für das Mundhygienemittel eine schnellere Abbaubarkeit und Kompostierbarkeit erreicht werden.

Ferner kann für das Mundhygienemittel insbesondere ein, möglicherweise bereits bestehender Recycling-Kreislauf vorgesehen sein. Insbesondere für Produkte aus PA, PBT, PET, PTT oder PP kann ein geschlossener Kreislauf vorgesehen sein. Ein entsprechender geschlossener Kreislauf enthält insbesondere die folgenden Schritte Herstellung des Produkts, Gebrauch, Sammeln, Mahlen und Sortieren, Granulieren, insbesondere Schmelzen und Brechen, und anschließend wieder von Beginn die Herstellung des Produkts. Insbesondere für Produkte aus PET kann ein offener Kreislauf vorgesehen sein. Ein entsprechender offener Kreislauf enthält insbesondere die folgenden Schritte Herstellung des Produkts, Gebrauch, Sammeln, wie beispielsweise durch PET-Flaschensammlung, Mahlen und Sortieren, Granulieren, insbesondere Schmelzen und Brechen, und anschließend wieder von Beginn die Herstellung des Produkts. Dabei wäre insbesondere auch denkbar, dass neue Recycling-Kreisläufe erschlossen werden oder die Mundhygienemittel in bestehende Kreisläufe eingeschleust werden, wie beispielsweise einem PET-Flaschen-Kreislauf.

Der Grundkörper des Mundhygienemittels besteht insbesondere aus lediglich einer Komponente. Es wäre jedoch auch denkbar, dass das Mundhygienemittel aus mehreren Komponenten besteht. Vorzugsweise ist jedoch zumindest eine Komponente ein abbaubares oder recyceltes Material. Bei einem Zwei- oder Mehrkomponenten-Mundhygienemittel wäre insbesondere denkbar, dass zumindest ein Teil der Strukturen aus einer Weichkomponente oder mit einer Weichkomponente überzogen ausgebildet ist. Weichkomponenten können hierbei insbesondere beispielsweise für Zungenreiniger, Reinigungs- und Massageelemente, Schleimhautschutz oder Griffpartien, insbesondere Daumengriffe, eingesetzt werden. Neukomponenten bzw. Neuware und/oder hochwertige Komponenten werden insbesondere in Position eingesetzt, an welchen der Körper, insbesondere die Mundhöhle, kontaktiert wird, also insbesondere dort, wo die Eigenschaften in einer engeren Bandbreite benötigt werden. Neukomponenten und/oder hochwertige Komponenten werden insbesondere bei den funktionalen Elementen am Körper eingesetzt. Beispiele sind hierfür insbesondere Komponenten am Bürstenkopf, welche die Stanzung und/oder die Auszugsgewichte sicherstellen oder welche das Schweißen bei AFT sicherstellen. Weitere Beispiele am Bürstenhals sind insbesondere Komponenten, welche die Stabilität unter Belastung bzw. das Bestehen des Pendelschlagtests und/oder die Flexibilität sicherstellen. Beispielsweise wäre denkbar, dass Körper aus Neukomponenten und Füllung aus nachhaltigen Komponenten hergestellt werden. Entsprechende Körper könnten insbesondere in einem Co-Injektionsverfahren oder in einem Zwei- oder Mehrkomponentenverfahren hergestellt werden, bei denen der Hüllkörper und Innenkörper aus verschiedenen Komponenten bestehen. Entsprechende Körper könnten alternativ insbesondere durch Füllen von Hohlräumen, die im Grundkörper gestaltet sind, mit nachhaltigen Komponenten hergestellt werden. Alternativ könnte zuerst ein Innenkörper aus nachhaltigem Material und anschließend der Hüllkörper um den Innenkörper gespritzt werden. Bei einem Dreikomponenten-Mundhygienemittel wäre insbesondere denkbar, dass PP und TPE in einem Materialschluss verwendet und mit nachhaltigem Material kombiniert werden, wobei das nachhaltige Material kein Materialschluss mit dem PP und TPE eingeht. Das nachhaltige Material könnte vor oder nach dem PP bzw. TPE gespritzt werden.

Es wird ferner vorgeschlagen, dass der materielle Volumenkörper der Griffeinheit zumindest zu einem Großteil aus einem Kunststoff auf Basis nachwachsender Rohstoffe besteht. Vorzugsweise besteht der materielle Volumenkörper der Griffeinheit aus einem Biokunststoff. Dadurch kann insbesondere ein vorteilhaft ökologisches Mundhygienemittel bereitgestellt werden. Es kann insbesondere eine umweltbewusste Entsorgung des Mundhygienemittels erreicht werden.

Ferner sind weitere Produktvarianten für das nachhaltige Konzept des Mundhygienemittels denkbar. Es ist insbesondere denkbar, dass die Borsten und der Grundkörper aus Biokunststoff gestanzt werden. Hierbei wäre denkbar, dass Metallanker im Einsatz sind, wobei ansonsten ein nachhaltiges Produkt geschaffen werden kann. Es ist auch möglich, den Metallanker durch ein nachhaltiges Material zu ersetzen, beispielsweise durch einen Biokunststoff, einen abbaubaren Kunststoff oder einen recyclierten Kunststoff. Vorzugsweise kommt dafür ein Hartmaterial in Frage. Ferner wäre denkbar, dass die Borsten, der Grundkörper und ein AFT-Plättchen aus Biokunststoff hergestellt sind. Hierbei wird kein Ankerdraht benötigt und es kann eine komplett metallfreie Bürste geschaffen werden. Des Weiteren wäre ein Einstoff-Mundhygienemittel denkbar, bei dem alles, insbesondere die Griffeinheit und die Borsten, aus dem gleichen Kunststoff hergestellt ist und kein Metallanker verwendet wird, wie beispielsweise ein Grundkörper aus PET und Borsten aus PET, falls benötigt ein Anker ebenfalls aus PET. Ein entsprechendes Mundhygienemittel wäre insbesondere für die PET-Sammlung geeignet. Alternative Materialien für ein Einstoff-Mundhygienemittel sind beispielsweise PP, PBT, PTT oder PA, insbesondere PA 6.10, PA 6.12. Vorzugsweise ist das Einstoff-Mundhygienemittel ankerlos hergestellt, wie beispielsweise in einem AFT-, PTt-, Inmould-oder IAP-Verfahren. Falls die Borstenbündel mittels konventionellem Ankerstanzen eingesetzt werden, wird der Anker bevorzugt ebenfalls aus demselben Material wie der Grundkörper und die Borsten hergestellt. Beispielsweise würden der Grundkörper, die Anker und die Borsten insbesondere aus PET, PP, PBT oder PTT hergestellt.

Dadurch, dass alle Bestandteile einer Einstoffbürste aus derselben Materialkomponente sind, ist es vorteilhaft möglich, dass die Materialien in der Verarbeitung eine bessere Verbindung eingehen, als wenn verschiedene Materialien eingesetzt werden. Dies kommt insbesondere bei der Borstenbefestigung zum Tragen. Dadurch sind die Auszugsgewichte für Borstenbündel/Borsten vorteilhaft höher, die Zahnbürste ist dadurch im Gebrauch robuster, wenngleich die Borsten besser und schonender reinigen.

Entsprechend den gemachten Ausführungen kann das Produkt aus bestehenden/konventionellen Materialkomponenten kombiniert mit nachhaltigen Materialkomponenten hergestellt werden. Nachhaltige Materialkomponenten können, wie genannt beispielsweise biobasiert oder recyclingbasiert sein. Das ganze Produkt hat damit vorzugsweise verschiedene Anteile aus den verschiedenen Materialkomponenten. Beispielsweise kann die Griffeinheit aus einer Hartkomponente aus biobasiertem Material hergestellt sein und mit einer Weichkomponente aus konventionellem Material kombiniert werden. Die Borsten können insbesondere aus einer recyclierter Materialkomponente hergestellt sein.

Ferner geht die Erfindung aus von einem Mundhygienemittel nach dem Oberbegriff des Anspruchs 1, insbesondere nach einem der Ansprüche 1 bis 13. Es wird vorgeschlagen, dass das Mundhygienemittel zumindest ein erstes Material und zumindest ein von dem ersten Material verschiedenes zweites Material aufweist, wobei das zweite Material, insbesondere nach einer Nutzungsdauer des Mundhygienemittels, zumindest teilweise zu einer Trennung von dem ersten Material vorgesehen ist. Vorzugsweise ist das erste Material zumindest teilweise zu einer getrennten Entsorgung von dem zweiten Material vorgesehen. Vorzugsweise kann zumindest ein Teil des ersten Materials sortenrein von dem zweiten Material getrennt werden, wobei insbesondere weiterhin ein Teil des ersten Materials mit dem zweiten Material verbunden bleiben kann. So kann beispielsweise bei einem einfachen Mundhygienemittel, insbesondere einer einfach gestanzten Bürste, der Kopfbereich der Anwendungseinheit abgetrennt werden. Die Griffeinheit und der Halsbereich sind lediglich aus dem ersten Material, insbesondere aus einem Kunststoff, wobei der Kopfbereich aus mehreren Materialien, insbesondere zumindest dem ersten Material und dem zweiten Material besteht. Insbesondere besteht ein Grundkörper des Kopfbereichs beispielsweise aus einem Kunststoff, die Borsten aus einem weiteren Kunststoff und die Anker zur Fixierung der Borsten aus Metall. Bei Mundhygienemitteln aus mehreren Komponenten, insbesondere Hart- und Weichkomponenten kann eine Verbindung der Komponenten beispielsweise lediglich über einen Formschluss realisiert werden. So kann die Weichkomponente beispielsweise an einer Stelle getrennt, bzw. geschnitten, und dann abgezogen werden. Die Trennung von Komponenten muss insbesondere nicht unbedingt zerstörerisch auf eine der Komponenten wirken, sondern kann auch mit bedingtem Kraftaufwand von Hand möglich sein. Alternativ können verbreitete Hilfsmittel verwendet werden, wie beispielsweise Schere, Schraubenzieher, Messer, Flaschenöffner. Hierdurch entstehen insbesondere zwei reine, bzw. aus einem Material bestehende Teile, die dann bestimmungsgemäß entsorgt, bzw. recycliert, werden können. Ein metallhaltiger Bürstenkopf könnte ebenfalls abgetrennt werden und so nicht dem Recycling, sondern dem Abfall zugeführt werden. Die einzelnen Teile und Abschnitte des Mundhygienemittels sind insbesondere so geschaffen, dass sie optimal getrennt werden können. Dadurch kann insbesondere ein vorteilhaft ökologisches Mundhygienemittel bereitgestellt werden. Es kann insbesondere eine umweltbewusste Entsorgung des Mundhygienemittels erreicht werden. Die Trennung dient insbesondere zu einer materiellen Trennung von verschiedenen Materialien oder auch verschiedenen Kunststoffen. Es können insbesondere Teile aus einem reinen Material und Teile aus verschiedenen Materialien geschaffen werden.

Des Weiteren wird vorgeschlagen, dass das Mundhygienemittel zumindest eine Solltrennstelle bzw. Separierstelle zu einer, insbesondere sortenreinen, Abtrennung zumindest eines Teilbereichs mit dem ersten Material, insbesondere der Griffeinheit, von einem Teilbereich mit dem zweiten Material, insbesondere der Anwendungseinheit, aufweist. Unter einer "Solltrennstelle" soll in diesem Zusammenhang insbesondere eine Stelle und/oder ein Bereich des Mundhygienemittels verstanden werden, an welchem das Mundhygienemittel zu einer, insbesondere zerstörenden, Trennung des Mundhygienemittels in zumindest zwei Teile vorgesehen ist. Das Mundhygienemittel ist insbesondere zu einer Trennung nach einer Nutzungsdauer und vor einer Entsorgung vorgesehen. Die Solltrennstelle kann insbesondere sowohl lediglich als eine Markierung als auch als eine Sollbruchstelle ausgebildet sein, welche bei einer Überlast definiert bricht oder auf andere geeignete Weise getrennt werden kann. Die Sollbruchstelle kann beispielsweise eine Kerbe, eine Perforation oder eine Ritzspur umfassen. Durch eine Kerbwirkung ist das Mundhygienemittel an der Sollbruchstelle entscheidend geschwächt. Bei einer Ausbildung der Solltrennstelle als Markierung ist insbesondere eine äußerliche Markierung vorgesehen, welche eine Trennposition markiert. Die Markierung kann beispielsweise die Position angeben, wo beispielsweise der Kopfbereich abgetrennt werden soll. Ferner können die einzelnen Materialkomponenten mit Materialkennzeichnungen beschriftet sein. So kann beispielsweise auf jedem Material der Materialname wie beispielsweise TPE, PP, PE oder dergleichen aufgebracht sein. Alternativ oder zusätzlich kann auf jedem Material das Material-Recyclingzeichen und/oder ein Recycling-Code aufgebracht sein. Dadurch kann insbesondere ein vorteilhaft ökologisches Mundhygienemittel bereitgestellt werden. Es kann insbesondere eine umweltbewusste und getrennte Entsorgung des Mundhygienemittels erreicht werden. Es kann insbesondere eine zumindest teilweise sortenreine Entsorgung des Mundhygienemittels erreicht werden.

Es wird ferner vorgeschlagen, dass die Anwendungseinheit zumindest einen Kopfbereich und zumindest einen Halsbereich aufweist, wobei die Solltrennstelle in dem Halsbereich angeordnet ist und zu einer Trennung zumindest der Griffeinheit von einem Kopfbereich der Anwendungseinheit vorgesehen ist. Vorzugsweise erstreckt sich die Solltrennstelle quer zu einer Längsachse der Griffeinheit. Die Solltrennstelle ist insbesondere auf einer der dem Kopfbereich zugewandten Seite des Halsbereichs angeordnet. Dadurch kann insbesondere ein vorteilhaft ökologisches Mundhygienemittel bereitgestellt werden. Es kann insbesondere eine umweltbewusste und getrennte Entsorgung des Mundhygienemittels erreicht werden. Es kann insbesondere eine zumindest teilweise sortenreine Entsorgung des Mundhygienemittels erreicht werden. Es kann insbesondere eine definierte Abtrennung des Kopfbereichs erreicht werden, welche häufig Materialien wie Metall enthält.

Es wird weiter vorgeschlagen, dass die Solltrennstelle mittels einer Sollbruchstelle gebildet ist, welche dazu vorgesehen ist, bei einer definierten Belastung der Anwendungseinheit entgegen einer Borstenbelastungsrichtung der Anwendungseinheit zu brechen. Vorzugsweise ist die Solltrennstelle von einer Kerbe auf einer Rückseite und/oder einer Seite des Mundhygienemittels gebildet. Bevorzugt ist die Solltrennstelle von einer Kerbe auf einer Rückseite des Halsbereichs der Anwendungseinheit gebildet. Vorzugsweise ist die Kerbe auf einer der Borstenbelastungsrichtung abgewandten Seite angeordnet. Grundsätzlich wäre jedoch auch eine andere, einem Fachmann als sinnvoll erscheinende Ausgestaltung der Sollbruchstelle denkbar. Die Sollbruchstelle kann beispielsweise eine Kerbe, eine Perforation, eine Ritzspur oder dergleichen umfassen. Die Sollbruchstelle ist insbesondere von einer Materialschwächung gebildet. Die Borstenbelastungsrichtung erstreckt sich insbesondere senkrecht zu einer Längsachse der Griffeinheit und zumindest im Wesentlichen parallel zu einer gemittelten Borstenerstreckung. Die Borstenbelastungsrichtung erstreckt sich insbesondere in einer Richtung von einem freien Ende der Borsten zu einem befestigten Ende der Borsten. Die Borstenbelastungsrichtung entspricht insbesondere einer Belastungsrichtung des Kopfbereichs des Mundhygienemittels während eines Reinigungsvorgangs, insbesondere während der Kopfbereich auf einen Zahn aufgedrückt wird. Dadurch kann insbesondere eine zumindest teilweise sortenreine Entsorgung des Mundhygienemittels erreicht werden. Es kann insbesondere eine definierte und einfache Abtrennung eines Teils, insbesondere des Kopfbereichs, erreicht werden, welche häufig Materialien wie Metall enthält. Insbesondere kann ein werkzeugloses Zerteilen des Mundhygienemittels erreicht werden. Es kann insbesondere eine umweltbewusste und getrennte Entsorgung des Mundhygienemittels erreicht werden.

Ferner wird vorgeschlagen, dass die Solltrennstelle von einer Markierung einer vorgesehenen Trennstelle gebildet ist. Vorzugsweise in der Nähe der Trennstelle wird die Art der Trennung und allenfalls benötigte Hilfsmittel gezeigt. Vorzugsweise ist die Markierung insbesondere von einer äußerlichen Markierung gebildet, welche eine Trennposition markiert. Die Markierung kann beispielsweise die Position angeben, wo beispielsweise der Kopfbereich abgetrennt werden soll. Die Markierung kann beispielsweise in Form einer Bedruckung, mittels Spritzen, einer umlaufenden leichten Einkerbung und/oder einer umlaufenden Erhöhung realisiert sein. Dadurch kann insbesondere eine zumindest teilweise sortenreine Entsorgung des Mundhygienemittels erreicht werden. Es kann insbesondere eine definierte und einfache Abtrennung eines Teils, insbesondere des Kopfbereichs, erreicht werden, welche häufig Materialien wie Metall enthält. Ferner wird durch die Markierung eine Stabilität des Mundhygienemittels nicht beeinträchtigt. Es kann insbesondere eine umweltbewusste und getrennte Entsorgung des Mundhygienemittels erreicht werden.

Das erfindungsgemäße Mundhygienemittel soll hierbei nicht auf die oben beschriebenen Anwendungen und Ausführungsformen beschränkt sein. Insbesondere kann das erfindungsgemäße Mundhygienemittel zu einer Erfüllung einer hierin beschriebenen Funktionsweise eine von einer hierin genannten Anzahl von einzelnen Elementen, Bauteilen und Einheiten abweichende Anzahl und/oder eine beliebig sinnvolle Kombination derselben aufweisen. Zudem sollen bei den in dieser Offenbarung angegebenen Wertebereichen auch innerhalb der genannten Grenzen liegende Werte als offenbart und als beliebig einsetzbar gelten.

Selbstverständlich sind die in dieser Schrift gezeigten Ausgestaltungsvarianten beispielhaft. Im Rahmen der Erfindung können die einzelnen Ausprägungen und Elemente dieser Ausgestaltungsvarianten mit anderen Ausgestaltungsvarianten kombiniert werden, ohne den Rahmen dieser Erfindung zu verlassen.

### Zeichnungen

Weitere Vorteile ergeben sich aus der folgenden Zeichnungsbeschreibung. In den Zeichnungen sind elf Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1A: eine Vorderseite eines erfindungsgemäßen Mundhygienemittels in einer schematischen perspektivischen Darstellung,
- Fig. 1B: eine Rückseite des erfindungsgemäßen Mundhygienemittels in einer schematischen perspektivischen Darstellung,
- Fig. 1C: eine Rückseite des erfindungsgemäßen Mundhygienemittels in einer schematischen Darstellung,
- Fig. 1D: eine Seite des erfindungsgemäßen Mundhygienemittels in einer schematischen Darstellung,
- Fig. 1E: eine Vorderseite des erfindungsgemäßen Mundhygienemittels in einer schematischen Darstellung,
- Fig. 1F: eine Unterseite des erfindungsgemäßen Mundhygienemittels in einer schematischen Darstellung,
- Fig. 1G: eine Oberseite des erfindungsgemäßen Mundhygienemittels in einer schematischen Darstellung,
- Fig. 2A: eine Vorderseite eines alternativen erfindungsgemäßen Mundhygienemittels mit einer Anwendungseinheit und mit einer Griffeinheit, die einen materiellen Volumenkörper und eine Hohlraumstruktur umfasst, in einer schematischen perspektivischen Darstellung,
- Fig. 2B: eine Seite des alternativen erfindungsgemäßen Mundhygienemittels in einer schematischen Darstellung,
- Fig. 2C: eine Vorderseite des alternativen erfindungsgemäßen Mundhygienemittels in einer schematischen Darstellung,
- Fig. 3A: eine Vorderseite eines weiteren alternativen erfindungsgemäßen Mundhygienemittels mit einer Anwendungseinheit und mit einer Griffeinheit, die einen materiellen Volumenkörper und eine Hohlraumstruktur umfasst, in einer schematischen perspektivischen Darstellung,
- Fig. 3B: eine Rückseite des weiteren alternativen erfindungsgemäßen Mundhygienemittels in einer schematischen perspektivischen Darstellung,
- Fig. 4: eine Vorderseite eines weiteren alternativen erfindungsgemäßen Mundhygienemittels mit einer Anwendungseinheit und mit einer Griffeinheit, die einen materiellen Volumenkörper und eine Hohlraumstruktur umfasst, in einer schematischen Darstellung,
- Fig. 5A: eine Vorderseite eines weiteren alternativen erfindungsgemäßen Mundhygienemittels mit einer Anwendungseinheit und mit einer Griffeinheit, die einen materiellen Volumenkörper und eine Hohlraumstruktur umfasst, in einer schematischen Darstellung,
- Fig. 5B: eine Seite des weiteren alternativen erfindungsgemäßen Mundhygienemittels in einer schematischen Darstellung,
- Fig. 5C: eine Rückseite des weiteren alternativen erfindungsgemäßen Mundhygienemittels in einer schematischen Darstellung,
- Fig. 6A: eine Vorderseite eines weiteren alternativen erfindungsgemäßen Mundhygienemittels mit einer Anwendungseinheit und mit einer Griffeinheit, die einen materiellen Volumenkörper und eine Hohlraumstruktur umfasst, in einer schematischen perspektivischen Darstellung,
- Fig. 6B: eine Vorderseite des weiteren alternativen erfindungsgemäßen Mundhygienemittels in einer schematischen Darstellung,
- Fig. 7A: eine Vorderseite eines weiteren alternativen erfindungsgemäßen Mundhygienemittels mit einer Anwendungseinheit und mit einer Griffeinheit, die einen materiellen Volumenkörper und eine Hohlraumstruktur umfasst, in einer schematischen perspektivischen Darstellung,
- Fig. 7B: eine Vorderseite des weiteren alternativen erfindungsgemäßen Mundhygienemittels in einer schematischen Darstellung,
- Fig. 8A: eine Vorderseite eines weiteren alternativen erfindungsgemäßen Mundhygienemittels mit einer Anwendungseinheit und mit einer Griffeinheit, die einen materiellen Volumenkörper und eine Hohlraumstruktur umfasst, in einer schematischen perspektivischen Darstellung,
- Fig. 8B: eine Vorderseite des weiteren alternativen erfindungsgemäßen Mundhygienemittels in einer schematischen Darstellung,
- Fig. 9A: eine Vorderseite eines weiteren alternativen erfindungsgemäßen Mundhygienemittels mit einer Anwendungseinheit und mit einer Griffeinheit, die einen materiellen Volumenkörper und eine Hohlraumstruktur umfasst, in einer schematischen perspektivischen Darstellung,
- Fig. 9B: eine Vorderseite des weiteren alternativen erfindungsgemäßen Mundhygienemittels in einer schematischen Darstellung,
- Fig. 9C: eine Seite des weiteren alternativen erfindungsgemäßen Mundhygienemittels in einer schematischen Darstellung,
- Fig. 10A: eine Vorderseite eines weiteren alternativen erfindungsgemäßen Mundhygienemittels mit einer Anwendungseinheit und mit einer Griffeinheit, die einen materiellen Volumenkörper und eine Hohlraumstruktur umfasst, in einer schematischen perspektivischen Darstellung,
- Fig. 10B: eine Vorderseite des weiteren alternativen erfindungsgemäßen Mundhygienemittels in einer schematischen Darstellung,
- Fig. 10C: eine Seite des weiteren alternativen erfindungsgemäßen Mundhygienemittels in einer schematischen Darstellung,
- Fig. 11A: eine Vorderseite eines weiteren alternativen erfindungsgemäßen Mundhygienemittels mit einer Anwendungseinheit und mit einer Griffeinheit, die einen materiellen Volumenkörper und eine Hohlraumstruktur umfasst, in einer schematischen perspektivischen Darstellung,
- Fig. 11B: eine Rückseite eines weiteren alternativen erfindungsgemäßen Mundhygienemittels mit einer Anwendungseinheit und mit einer Griffeinheit, die einen materiellen Volumenkörper und eine Hohlraumstruktur umfasst, in einer schematischen perspektivischen Darstellung,
- Fig. 11C: eine Vorderseite des weiteren alternativen erfindungsgemäßen Mundhygienemittels in einer schematischen Darstellung,
- Fig. 11D: eine Seite des weiteren alternativen erfindungsgemäßen Mundhygienemittels in einer schematischen Darstellung und
- Fig. 11E: einen Querschnitt des weiteren alternativen erfindungsgemäßen Mundhygienemittels in einer schematischen Darstellung.

### Beschreibung der Ausführungsbeispiele

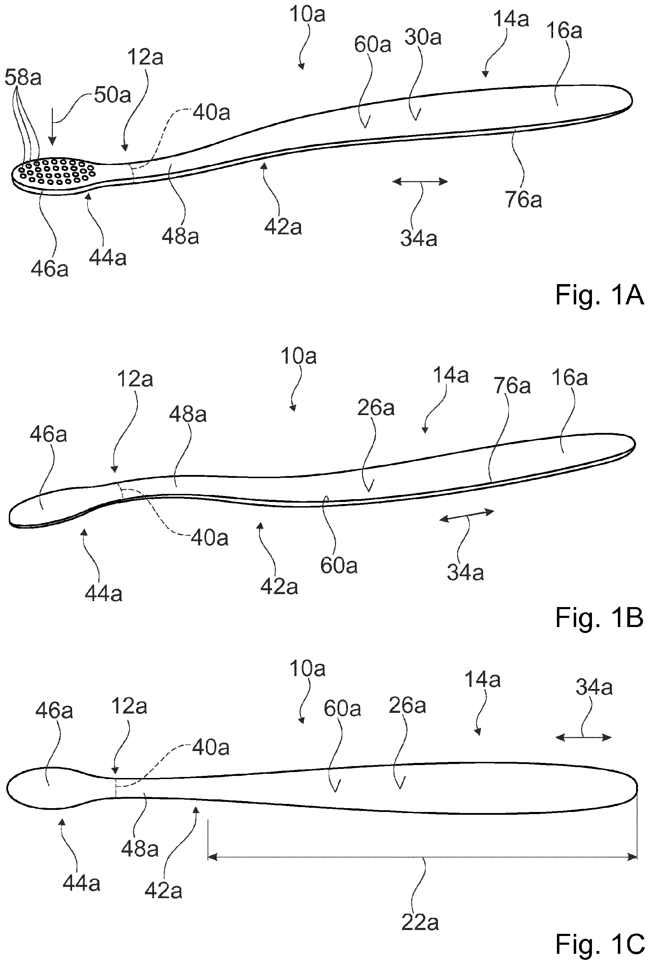

Die Figur 1A zeigt eine Vorderseite 30a eines Mundhygienemittels 10a in einer schematischen perspektivischen Darstellung. Das Mundhygienemittel 10a ist im vorliegenden Fall als eine Zahnbürste ausgebildet. Das Mundhygienemittel 10a kann ebenso als eine Einmalzahnbürste oder auch als eine Wechselkopfzahnbürste ausgebildet sein. Zudem könnte das Mundhygienemittel 10a als ein Flosser, eine Single-Tuft-Bürste, ein Zwischenzahnreiniger, ein Zungenreiniger oder dergleichen ausgebildet sein. Ferner sind kombinierte Mundhygienemittel denkbar, die zumindest zwei unterschiedliche Funktionen kombinieren, beispielsweise eine Zahnbürste mit Zungenreiniger, eine Zahnbürste mit Massageelementen, einen Interdentalreiniger mit Flosser oder dergleichen mehr.

Das Mundhygienemittel 10a weist zumindest eine Anwendungseinheit 12a auf. Ferner weist das Mundhygienemittel 10a zumindest eine Griffeinheit 14a auf. Die zumindest eine Griffeinheit 14a besteht aus einem einzigen Material. Die Griffeinheit 14a besteht aus einer Hartkomponente. Grundsätzlich wäre jedoch auch denkbar, dass die Griffeinheit 14a teilweise aus einer Weichkomponente und teilweise aus einer Hartkomponente ausgebildet ist. Generell ist die Gestaltung mit einer oder mehreren Hartkomponenten und/oder einer oder mehreren Weichkomponenten ebenfalls möglich.

Das Mundhygienemittel 10a ist insbesondere ergonomisch und ressourceneffizient ausgebildet. Das Mundhygienemittel 10a besteht insbesondere, zumindest abgesehen von Reinigungselementen sowie Ankern zur Befestigung der Reinigungselemente, aus nur einer Komponente. Die Anwendungseinheit 12a und die Griffeinheit 14a bilden einen Grundkörper des Mundhygienemittels 10a und bestehen gemeinsam aus nur einer Komponente. Die Anwendungseinheit 12a und die Griffeinheit 14a sind einstückig ausgebildet. Das Mundhygienemittel 10a ist von einer 1K-Bürste, insbesondere einer Einstoffbürste, gebildet.

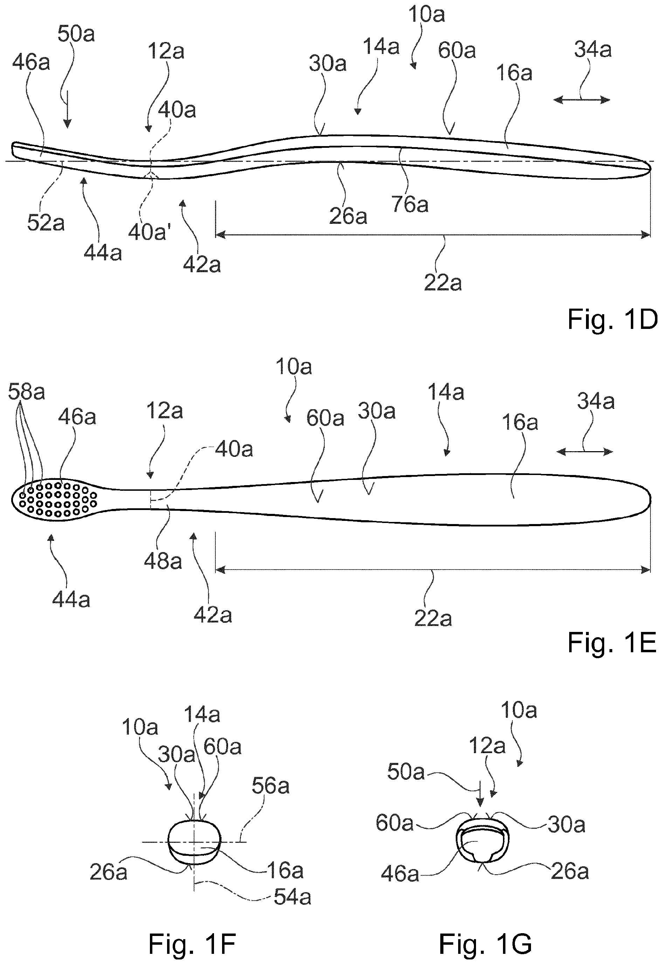

Im Folgenden wird auf die Figuren 1A bis 1G Bezug genommen, welche unterschiedliche Ansichten des Mundhygienemittels 10a zeigen. Aufgrund der unterschiedlichen Ansichten sind einige Elemente nicht in sämtlichen Figuren dargestellt und entsprechend nicht in sämtlichen Figuren mit Bezugszeichen versehen. Die Figur 1B zeigt eine Rückseite 26a des Mundhygienemittels 10a in einer schematischen perspektivischen Darstellung. Die Figur 1C zeigt die Rückseite 26a des Mundhygienemittels 10a in einer schematischen Darstellung. Die Figur 1D zeigt eine Seite, insbesondere eine linke Längsseite, des Mundhygienemittels 10a in einer schematischen Darstellung. Die Figur 1E zeigt die Vorderseite 30a des Mundhygienemittels 10a in einer schematischen Darstellung. Die Figur 1F zeigt eine Unterseite des Mundhygienemittels 10a in einer schematischen Darstellung. Die Figur 1G zeigt eine Oberseite des Mundhygienemittels 10a in einer schematischen Darstellung.

Das Mundhygienemittel 10a weist eine Längsachse 52a, eine Höhenachse 54a und eine Breitenachse 56a auf. Die Längsachse 52a ist parallel zu einer Haupterstreckungsrichtung 34a des Mundhygienemittels 10a angeordnet. Ist das Mundhygienemittel 10a mit der Rückseite 26a auf eine ebene Oberfläche gelegt, sodass die Längsachse 52a parallel zu der Oberfläche angeordnet ist, ist die Höhenachse 54a senkrecht zu der Längsachse 52a und senkrecht zu der Oberfläche und der Breitenachse 56a angeordnet. Die Breitenachse 56a ist senkrecht zu der Längsachse 52a und senkrecht zu der Höhenachse 54a angeordnet. Im vorliegenden Fall weist das Mundhygienemittel 10a eine Länge, insbesondere parallel zu der Längsachse 52a und gemessen parallel zur Auflagefläche, von 140 mm bis 210 mm und vorzugsweise von 165 mm bis 185 mm auf. Ferner weist das Mundhygienemittel 10a eine maximale Höhe, insbesondere parallel zu der Höhenachse 54a gemessen senkrecht zur Auflagefläche, von 12 mm bis 25 mm und vorzugsweise von 15 mm bis 19 mm auf. Eine reine Körperdicke des Mundhygienemittels 10a, insbesondere parallel zu der Höhenachse 54a, beträgt im Griffbereich zwischen freiem Ende und einem Halsansatz zwischen 6 mm und 10 mm, vorzugsweise zwischen 7 mm und 9 mm. Eine minimale Körperdicke des Mundhygienemittels 10a in einem Halsbereich 48a beträgt insbesondere von 4 mm bis 10 mm, vorzugsweise von 5 mm bis 7 mm. Eine minimale Höhe des Mundhygienemittels 10a liegt in einem Kopfbereich 46a und beträgt zwischen 3 mm und 8 mm, vorzugsweise zwischen 4 mm und 6 mm. Zudem weist das Mundhygienemittel 10a an einer breitesten Stelle eine Breite, insbesondere parallel zu der Breitenachse 56a, von 10 mm bis 25 mm und vorzugsweise von 13 mm bis 18 mm auf. Von einer Unterseite zu einer Oberseite ist eine maximale Breite des Mundhygienemittels 10a in den ersten 30 % der Haupterstreckung des Mundhygienemittels 10a angeordnet. Das Gewicht des Mundhygienemittels 10a beträgt zwischen 8 g und 25 g, vorzugsweise zwischen 10 g und 18 g.

Die zumindest eine Anwendungseinheit 12a weist den Kopfbereich 46a auf. Der Kopfbereich 46a bildet einen Bürstenkopf des Mundhygienemittels 10a. Im vorliegenden Fall ist der Kopfbereich 46a als ein Zahnbürstenkopf ausgebildet. Der Kopfbereich 46a weist insbesondere einen als Borstenträger ausgebildeten Grundkörper auf. Ein Grundkörper des Kopfbereichs 46a ist vollständig aus einer Hartkomponente ausgebildet. Es wäre jedoch auch denkbar, dass der Grundkörper des Kopfbereichs 46a aus einer Hartkomponente und einer Weichkomponente gebildet ist. Der Grundkörper des Kopfbereichs 46a bildet einen Borstenträger aus. Der Kopfbereich 46a des Mundhygienemittels 10a weist eine Breite von 8 mm bis 17 mm und vorzugsweise von 10 mm bis 15 mm auf. Das Mundhygienemittel 10a weist ferner einen von dem Kopfbereich 46a aufgenommenen, nicht weiter dargestellten Reinigungsbereich auf, der eine Mehrzahl von Borstenbündeln umfasst. Aus Gründen der Übersichtlichkeit sind in den Figuren 1A bis 1G die Borstenbündel nicht dargestellt. Auf der Vorderseite 30a des Kopfbereichs 46a ist zumindest eine Aussparung 58a ausgeformt. Die zumindest eine Aussparung 58a ist zur Aufnahme eines Borstenbündels vorgesehen. Der Kopfbereich 46a weist eine Vielzahl von Aussparungen 58a auf. Die Aussparungen 58a sind von Borstenlöchern gebildet. Die Aussparungen 58a weisen im Hauptbereich einen Durchmesser von 1,2 mm bis 2 mm und vorzugsweise von 1,4 mm bis 1,8 mm auf. Vorzugsweise weisen die Aussparungen 58a beim Eintritt eine Fase auf. Die Fase ist insbesondere als Konus oder Rundung ausgebildet. Ferner sind die Aussparungen 58a insbesondere konisch zulaufend am unteren Ende. Die Aussparungen 58a sind insbesondere kegelstumpfförmig. Die Aussparungen 58a weisen insbesondere eine Konizität von 20° bis 50° und vorzugsweise von 30° bis 40° pro Seite auf. An einem geschlossenen unteren Ende weisen die Aussparungen 58a insbesondere noch einen Durchmesser von 0,4 mm bis 1 mm und vorzugsweise 0,55 mm bis 0,80 mm auf. Ferner weisen die Aussparungen 58a insbesondere jeweils eine als Durchmesserverengung ausgebildete Einschnürung auf. Die Einschnürungen dienen zu einer Verbesserung der Auszugsgewichte. Die Einschnürungen sind in der Herstellung zwangsentformt beim Ziehen der Lochstempel. Die Einschnürungen sind insbesondere in der Mitte des zylindrischen Teils der Aussparungen 58a angeordnet. Die Einschnürungen bewirken eine abschnittsweise Reduktion des Durchmessers um 3 % bis 10 % und vorzugsweise um 4 % bis 5 %. Die Abstände der Aussparungen 58a sind insbesondere grösser als bei herkömmlichen Bürsten. Die Distanz zwischen den Borstenlochrändern der Aussparungen 58a beträgt von 0,5 mm bis 2 mm, vorzugsweise von 0,8 mm bis 1,4 mm. Die Abstände der Aussparungen 58a zu einem Rand des Kopfbereichs 46a, insbesondere einem Abstand von einem Außenrand des Kopfbereichs 46a zu den äußeren Borstenlochrändern der Aussparungen 58a, beträgt von 1 mm bis 2,2 mm, vorzugsweise von 1,2 mm bis 1,8 mm. Grundsätzlich können die Aussparungen 58a auch andersförmig ausgestaltet sein. Als Borsten kommen beliebige geeignete Borsten infrage, die, wie oben beschrieben, beispielsweise im Ankerstanz-Verfahren angestanzt sein können. Die eingesetzten Borsten bestehen aus einem mindestens teilweise pflanzenbasierten Material. Die Borsten bestehen aus PA 6.10, welches zu rund 50 % bis 70 % aus nachwachsenden Rohstoffen hergestellt und auf Basis von Rizinusöl ist, aus PA 6.12 und/oder aus PA 10.10, welches aus bis zu 100 % aus nachwachsenden Rohstoffen hergestellt und auf Basis von Rizinusöl ist. Die Borsten sind insbesondere eher kurz geschnitten, insbesondere aufgrund der großen Abstände der Aussparungen 58a und des eingesetzten Borstenmaterials. Das Material der Borsten hat insbesondere andere Eigenschaften als herkömmliche Borsten und ist insbesondere weniger stabil. Durch die kürzere Länge kann insbesondere eine erhöhte Stabilität erreicht werden. Die Länge der Borsten beträgt insbesondere von 8 mm bis 15 mm, vorzugsweise von 10 mm bis 12 mm. Die Borsten sind mittels eines Ankerdrahts in den Aussparungen 58a fixiert. Der Ankerdraht ist insbesondere von einem metallischen Ankerdraht gebildet. Grundsätzlich wäre jedoch auch ein Kunststoffanker möglich. Der Ankerdraht ist beidseitig 3-fach gerillt. Beim Einsatz von Recycling-Materialien wird insbesondere ein längerer Ankerdraht eingesetzt als bei anderen Materialien. Der Ankerdraht weist eine Länge von 1,5 mm bis 2,5 mm, vorzugsweise von 1,7°mm bis 2,1°mm, auf. Die Borstenbündel weisen insbesondere ein Auszugsgewicht von 2 kg auf. Der Aufbau des Kopfbereichs 46a bzw. des Grundkörpers des Kopfbereichs 46a ist in anderen Beborstungsverfahren anders. Grundsätzlich wäre auch der Einsatz von AFT denkbar. Hierdurch könnte ein ankerloses Mundhygienemittel 10a und damit ein Mundhygienemittel 10a ohne Metall bereitgestellt werden, da auf den Ankerdraht verzichtet werden kann. Im Falle von AFT ist in dem Kopfbereich 46a eine Ausnehmung vorgesehen, welche zur Aufnahme eines Plättchens parallel zur Griffeinheit 14a vorgesehen ist. Das Plättchen ist insbesondere mittels eines Spritzgussverfahrens hergestellt, wobei das Plättchen bereits vor der Befestigung beborstet ist. Das Plättchen ist dazu vorgesehen, in der Ausnehmung des Kopfbereichs 36a, insbesondere mittels Verschweißens, verankert zu werden. Borstenbündel können sich hinsichtlich ihrer Länge, ihrer Zusammensetzung, ihrer Borstenanzahl, eines Borstenmaterials, einer Farbe, einer Oberflächenstrukturierung und dergleichen mehr unterscheiden. Ebenso können Winkel, unter welchen die Borsten und/oder die Borstenbündel relativ zueinander oder zu einer Oberfläche des Grundkörpers des Kopfbereichs 46a angeordnet sind, zwischen Borsten und/oder zwischen Borstenbündeln variieren. Ferner umfasst die Anwendungseinheit 12a im vorliegenden Fall den zumindest einen Halsbereich 48a, welcher insbesondere den Kopfbereich 46a mit der Griffeinheit 14a verbindet. Der Halsbereich 48a bildet einen Hals aus.

Die Anwendungseinheit 12a ist an der Oberseite des Mundhygienemittels 10a angeordnet. Die Anwendungseinheit 12a bildet einen obersten Punkt des Mundhygienemittels 10a. Die Anwendungseinheit 12a ist vollständig aus einer Hartkomponente ausgebildet. Es wäre jedoch auch denkbar, dass die Anwendungseinheit 12a teilweise aus einer Weichkomponente und teilweise aus einer Hartkomponente ausgebildet ist. Bezüglich geeigneter Weich- und/oder Hartkomponenten wird auf obenstehende Beschreibung verwiesen. Grundsätzlich kann die Anwendungseinheit 12a zumindest ein Zungenreinigerelement aufweisen. Das Zungenreinigerelement kann insbesondere Noppen und/oder Lamellen aufweisen. Vorzugsweise ist das Zungenreinigerelement auf der Rückseite des Kopfbereichs 46a angeordnet, insbesondere kann dieses auf einem Ring aus einer Weichkomponente und/oder auf einer Insel aus einer Hartkomponente angeordnet sein.

Der Halsbereich 48a bildet einen Übergang zwischen der Anwendungseinheit 12a und der Griffeinheit 14a aus. Der Halsbereich 48a ist aus der Hartkomponente ausgebildet. Das untere Ende des Halsbereichs 48a ist zumindest teilweise federnd ausgebildet.

Die Griffeinheit 14a weist einen materiellen Volumenkörper 16a auf. Die Griffeinheit 14a weist zumindest eine Grifffläche 60a auf, welche eine Oberfläche des materiellen Volumenkörpers 16a ausbildet. Die Grifffläche 60a verläuft auf der Vorderseite 30a von dem Halsbereich 48a bis zum unteren Ende des Mundhygienemittels 10a an der Unterseite. Die Grifffläche 60a bildet entlang der Längsachse 52a eine bombierte bzw. konkave Form aus. Die bombierte Form ist entlang der Längsachse 52a auf der Rückseite 26a umgekehrt ausgebildet. In einem mittleren oder hinteren Bereich der Grifffläche 60a könnte insbesondere ein Schriftzug und/oder ein Logo angeordnet sein. Der Schriftzug und/oder das Logo kann insbesondere durch eine Versenkung auf dem Mundhygienemittel 10a angebracht werden. Der Schriftzug und/oder das Logo sind vorzugsweise im hinteren Griffbereich der Griffeinheit 14a angeordnet. Eine Tiefe der Versenkung beträgt zwischen 0,2 mm und 0,8 mm, vorzugsweise zwischen 0,3 mm und 0,6 mm. Es ist insbesondere keine Bedruckung und/oder Prägung vorgesehen, da dies wieder der Umwelt schaden kann. Prägungen können beispielsweise metallene Folie enthalten. Die Grifffläche 60a ist frei von einem abgesetzten Daumengriff. Die Griffeinheit 14a weist durchgehende Rundungen auf. Die Griffeinheit 14a weist durchgehend ebene Flächen, ohne Unterbrüche oder starke Kanten auf. Oberflächenlinien ziehen sich insbesondere versatzlos durch. Die Rundungen und Flächenübergänge der Griffeinheit 14a sind in Längsrichtung und Querrichtung mit großen Radien gestaltet. Lediglich an den Enden sowie seitlich von der Vorderseite 30a zur Rückseite 26a sind kleine Radien angeordnet. Von einer Unterseite zu einer Oberseite ist eine maximale Breite des Mundhygienemittels 10a in den ersten 30 % der Haupterstreckung des Mundhygienemittels 10a angeordnet. Nach der maximalen Breite nimmt der Körper des Mundhygienemittels 10a nach hinten bis zum hinteren Ende in der Breite kontinuierlich ab. Nach der maximalen Breite nimmt der Körper des Mundhygienemittels 10a nach vorne zu der Anwendungseinheit 12a, der Breite der Griffeinheit 14a sowie des Halsbereichs 48a bis zum Kopfansatz des Kopfbereichs 46a in der Breite kontinuierlich ab. Die Griffeinheit 14a weist in der Höhe, insbesondere parallel zu der Höhenachse 54a, eine annähernd gleichmäßige Materialstärke auf. In dem Halsbereich 48a nimmt die Materialstärke von der Griffeinheit 14a ab bis zur Materialstärke des Kopfbereichs 46a. Die Materialstärke des Kopfbereichs 46a ist geringer als eine Materialstärke der Griffeinheit 14a. Die Materialstärke des Kopfbereichs 46a bildet die geringe Höhe des Mundhygienemittels 10a aus. Die gleichmäßige Materialstärke des Mundhygienemittels 10a bringt Vorteile beim biologischen Abbauen, der Körper zersetzt sich vorteilhaft regelmäßig und bleibt bis zum Schluss am Stück.

Der materielle Volumenkörper 16a der Griffeinheit 14a besteht zumindest zu einem Großteil aus einem biologisch abbaubaren, insbesondere kompostierbaren, und/oder aus einem recycelten Material. Der materielle Volumenkörper 16a der Griffeinheit 14a besteht zumindest zu einem Großteil aus einem Kunststoff auf Basis nachwachsender Rohstoffe. Das Material ist von einem Kunststoff gebildet. Das Material ist von einem Bio-Kunststoff, insbesondere auf Basis nachwachsender Rohstoffe und/oder aus einem biologisch abbaubaren Kunststoff, gebildet. Die gesamte Griffeinheit 14a und die Anwendungseinheit 12a bestehen aus einem Bio-Kunststoff. Ein vorzugsweise eingesetztes Material ist insbesondere Grilamid, insbesondere von der Firma EMS, mit dem Grundstoff Rizinusöl, Arboblend, insbesondere von der Firma Technaro, mit dem Grundstoff Zellulose, Rizinus, Zucker oder Glucose, und/oder Biograde, insbesondere von der Firma FKuR Kunststoff GmbH, mit dem Grundstoff Holz bzw. Cellulose. Die Borsten bestehen, wie bereits ausgeführt, aus PA 6.10, welches zu rund 50 % bis 70 % aus nachwachsenden Rohstoffen hergestellt und auf Basis von Rizinusöl ist, aus PA 6.12 und/oder aus PA 10.10, welche aus bis zu 100 % aus nachwachsenden Rohstoffen hergestellt und auf Basis von Rizinusöl ist.

Ferner weist das Mundhygienemittel 10a ein erstes Material und zumindest ein von dem ersten Material verschiedenes zweites Material auf. Insbesondere weist das Mundhygienemittel 10a ferner ein drittes Material auf. Zumindest das zweite Material, insbesondere das zweite Material und das dritte Material, ist, insbesondere nach einer Nutzungsdauer des Mundhygienemittels 10a, zu einer Trennung von dem ersten Material vorgesehen. Das erste Material ist zumindest teilweise zu einer getrennten Entsorgung von dem zweiten Material vorgesehen. Ein Teil des ersten Materials kann sortenrein von dem zweiten Material getrennt werden, wobei insbesondere weiterhin ein Teil des ersten Materials mit dem zweiten Material verbunden bleibt. Das Mundhygienemittel 10a ist dazu vorgesehen, zwischen dem Kopfbereich 46a und dem Halsbereich 48a der Anwendungseinheit 12a getrennt zu werden. Die Griffeinheit 14a und der Halsbereich 48a sind lediglich aus dem ersten Material und zwar dem Bio-Kunststoff, wobei an dem Kopfbereich 46a aus dem ersten Material unlösbar die Borsten aus einem dritten Material mittels der Anker aus dem zweiten Material, und zwar Metall, unlösbar verbunden sind. Der Kopfbereich 46a muss daher, für ein optimales Recycling, getrennt von der Griffeinheit 14a und dem Halsbereich 48a entsorgt werden. Es wäre jedoch auch denkbar, dass die Borsten ebenfalls aus dem ersten Material hergestellt sind.

Das Mundhygienemittel 10a weist eine Solltrennstelle 40a zu einer sortenreinen Abtrennung eines Teilbereichs 42a mit dem ersten Material, insbesondere der Griffeinheit 14a, von einem Teilbereich 44a mit dem zweiten Material auf. Der erste Teilbereich 42a ist von der Griffeinheit 14a und dem Halsbereich 48a der Anwendungseinheit 12a gebildet. Der zweite Teilbereich 44a ist von dem Kopfbereich 46a der Anwendungseinheit 12a, den Borsten und den Ankern gebildet, wobei zumindest die Anker aus dem zweiten Material bestehen. Die Solltrennstelle 40a ist in dem Halsbereich 48a angeordnet und zu einer Trennung der Griffeinheit 14a von dem Kopfbereich 46a der Anwendungseinheit 12a vorgesehen. Die Solltrennstelle 40a erstreckt sich quer zu der Längsachse 52a. Die Solltrennstelle 40a ist auf einer der dem Kopfbereich 46a zugewandten Seite des Halsbereichs 48a angeordnet. Die Solltrennstelle 40a ist beispielhaft von einer Markierung einer vorgesehenen Trennstelle gebildet. Die Markierung ist von einer äußerlichen Markierung gebildet, welche eine Trennposition markiert. Die Markierung gibt die Position an, wo beispielsweise der Kopfbereich 46a abgetrennt werden soll. Die Markierung ist von einer Bedruckung gebildet. Es wäre jedoch auch denkbar, dass die Markierung von einer umlaufenden Einkerbung und/oder einer umlaufenden Erhöhung gebildet ist. Es wäre jedoch auch denkbar, dass die Solltrennstelle 40a' von einer Sollbruchstelle gebildet ist, welche dazu vorgesehen ist, bei einer definierten Belastung der Anwendungseinheit 12a entgegen einer Borstenbelastungsrichtung 50a der Anwendungseinheit 12a zu brechen. Eine als Sollbruchstelle ausgebildete Solltrennstelle 40a' ist in der Figur 1D schematisch angedeutet. Die Solltrennstelle 40a' ist von einer Kerbe auf einer Rückseite des Halsbereichs 48a des Mundhygienemittels 10a gebildet. Die Kerbe ist auf einer der Borstenbelastungsrichtung 50a abgewandten Seite angeordnet. Grundsätzlich wäre jedoch auch eine andere, einem Fachmann als sinnvoll erscheinende Ausgestaltung der Sollbruchstelle denkbar. Die Sollbruchstelle kann beispielsweise eine Perforation, eine Ritzspur oder dergleichen umfassen.

Die Herstellung des Mundhygienemittels 10a erfolgt mittels zweier Negativformen, die zusammen eine Kavität ausbilden. Das Mundhygienemittel 10a weist dazu eine Formtrennlinie 76a auf. Die Formtrennlinie 76a verläuft über die gesamte Länge des Mundhygienemittels 10a. Die Formtrennlinie 76a weist eine geschwungene Form über die Länge des Mundhygienemittels 10a auf, wobei die geschwungene Form zumindest im Wesentlichen der Form des Mundhygienemittels 10a folgt. Die Formtrennlinie 76a verläuft im mittleren Höhenbereich des Mundhygienemittels 10a. Die Formtrennlinie 76a verläuft entlang der breitesten Stelle im Querschnitt des Mundhygienemittels 10a. Damit kann vorteilhaft eine gute Entformbarkeit im Spritzgießwerkzeug erreicht werden. Die Negativformen können damit vorteilhaft von dem Mundhygienemittel 10a entfernt werden, ohne dass ein Hinterschnitt überwunden werden muss.

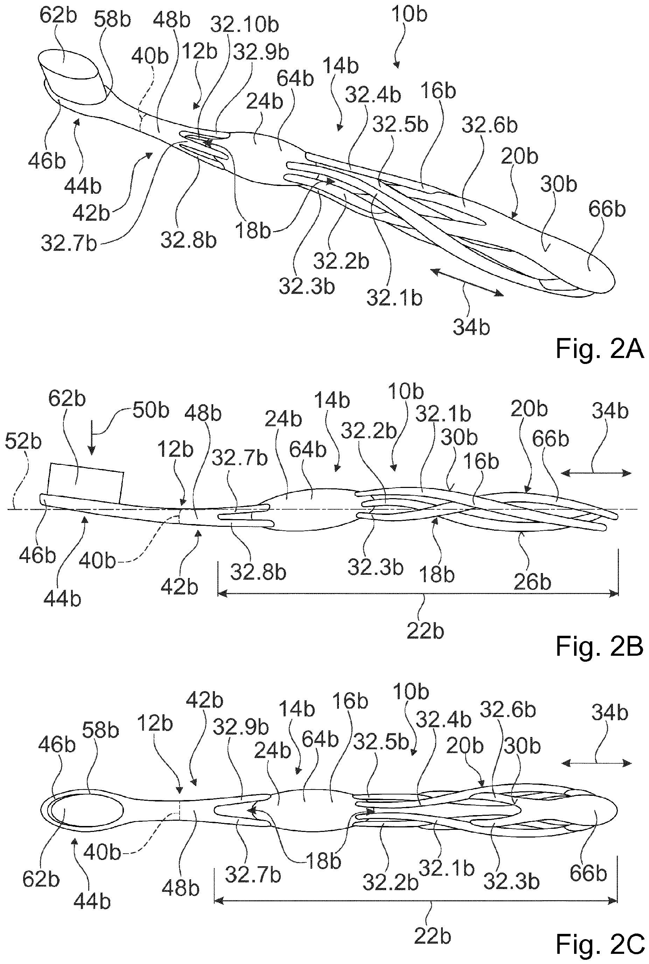

In den Figuren 2A bis 11E sind weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleichbleibender Bauteile, Merkmale und Funktionen auf die Beschreibung der anderen Ausführungsbeispiele, insbesondere der Figuren 1A bis 1G, verwiesen werden kann. Zur Unterscheidung der Ausführungsbeispiele ist der Buchstabe a in den Bezugszeichen des Ausführungsbeispiels der Figuren 1 bis 1G durch die Buchstaben b bis k in den Bezugszeichen der Ausführungsbeispiele der Figuren 2A bis 11E ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung der anderen Ausführungsbeispiele, insbesondere der Figuren 1A bis 1G, verwiesen werden.

Die Figur 2A zeigt eine Vorderseite 30b eines Mundhygienemittels 10b mit einer Anwendungseinheit 12b und mit einer Griffeinheit 14b, die einen materiellen Volumenkörper 16b aufweist. Die Griffeinheit 14b ist mit der Anwendungseinheit 12b verbunden. Die Griffeinheit 14b und die Anwendungseinheit 12b sind einstückig ausgebildet. Die zumindest eine Anwendungseinheit 12b weist einen Kopfbereich 46b auf. Der Kopfbereich 46b bildet einen Bürstenkopf des Mundhygienemittels 10b. Der Kopfbereich 46b weist insbesondere einen als Borstenträger ausgebildeten Grundkörper auf. Das Mundhygienemittel 10b weist ferner einen von dem Kopfbereich 46b aufgenommenen Reinigungsbereich 62b auf, der eine Mehrzahl von Borstenbündeln umfasst. Aus Gründen der Übersichtlichkeit sind in den Figuren 2A bis 2C die Borstenbündel schematisch als ein Volumenkörper gezeigt. Auf der Vorderseite 30b des Kopfbereichs 46b ist zumindest eine Aussparung 58b ausgeformt. Die zumindest eine Aussparung 58b ist zur Aufnahme einzelner Borstenbündel und/oder eines Borstenbündels umfassenden Borstenplättchens vorgesehen.

Die Griffeinheit 14b weist ferner zumindest eine wesentliche Hohlraumstruktur 18b auf, welche zumindest im Wesentlichen von dem materiellen Volumenkörper 16b begrenzt ist. Die Hohlraumstruktur 18b ist von einem Hohlraum oder mehreren Hohlräumen in der Griffeinheit 14b gebildet. In dem vorliegenden Fall ist die Hohlraumstruktur 18b von genau zwei Hohlräumen gebildet. Die Hohlraumstruktur 18b erstreckt sich über einen wesentlichen Teil einer Haupterstreckung 22b der Griffeinheit 14b. Die Hohlraumstruktur 18b ist zweigeteilt ausgebildet, wobei sich ein erster Teil der Hohlraumstruktur 18b über einen vorderen, der Anwendungseinheit 12b zugewandten Teil der Griffeinheit 14b erstreckt und wobei sich ein zweiter Teil der Hohlraumstruktur 18b über einen hinteren, der Anwendungseinheit 12b abgewandten Teil der Griffeinheit 14b erstreckt. Der erste Teil der Hohlraumstruktur 18b erstreckt sich bis zu einem Halsbereich 48b der Anwendungseinheit 12b

Der materielle Volumenkörper 16b weist eine Plattform 64b auf. Die Plattform 64b dient der Kennzeichnung. Die Plattform 64b dient ferner als Fingerauflage, vorzugsweise als Daumenauflage. Die Plattform 64b bildet einen Daumengriffbereich 24b des materiellen Volumenkörpers 16b aus. Die Plattform 64b ist von einem gefüllten Körper gebildet. Die Plattform 64b ist von einem elliptischen Körper, insbesondere einem Ellipsoid, gebildet. Grundsätzlich wäre jedoch auch eine andere, einem Fachmann als sinnvoll erscheinende Form der Plattform 64b denkbar. Der materielle Volumenkörper 16b weist ferner eine zumindest im Wesentlichen bionische Struktur 20b auf. Der materielle Volumenkörper 16b weist eine bionische Struktur 20b auf. Die bionische Struktur 20b begrenzt zumindest teilweise direkt die Hohlraumstruktur 18b. Die bionische Struktur 20b grenzt direkt an die Hohlraumstruktur 18b an. Die bionische Struktur 20b erstreckt sich über einen wesentlichen Teil der Haupterstreckung 22b der Griffeinheit 14b. Die bionische Struktur 20b erstreckt sich über zumindest 70 % der Haupterstreckung 22b der Griffeinheit 14b. Die bionische Struktur 20b ist in einem Daumengriffbereich 24b der Griffeinheit 14b abschnittsweise unterbrochen ausgeführt. Die bionische Struktur 20b ist durch die Plattform 64b unterbrochen. Die bionische Struktur 20b schließt auf beiden Seiten direkt an die Plattform 64b an. Die bionische Struktur 20b weist in zumindest einem Bereich zumindest drei zueinander verdrehte Strangelemente 32.1b, 32.2b, 32.3b, 32.4b, 32.5b, 32.6b auf. Die bionische Struktur 20b weist in dem hinteren Griffbereich beispielhaft genau sechs zueinander verdrehte Strangelemente 32.1b, 32.2b, 32.3b, 32.4b, 32.5b, 32.6b auf. Die bionische Struktur 20b weist in dem hinteren Griffbereich, welcher auf einer der Anwendungseinheit 12b abgewandten Seite der Plattform 64b angeordnet ist, genau sechs zueinander verdrehte Strangelemente 32.1b, 32.2b, 32.3b, 32.4b, 32.5b, 32.6b auf. Die Strangelemente 32.1b, 32.2b, 32.3b, 32.4b, 32.5b, 32.6b bilden eine Netzstruktur aus. Die Strangelemente 32.1b, 32.2b, 32.3b, 32.4b, 32.5b, 32.6b sind zumindest teilweise ineinander verschlungen. Die Strangelemente 32.1b, 32.2b, 32.3b, 32.4b, 32.5b, 32.6b umschließen teilweise die Hohlraumstruktur 18b. Die Strangelemente 32.1b, 32.2b, 32.3b, 32.4b, 32.5b, 32.6b sind von Stegen gebildet, welche eine äußere Hülle der Hohlraumstruktur 18b bilden. Die Strangelemente 32.1b, 32.2b, 32.3b, 32.4b, 32.5b, 32.6b bilden eine äußere Hülle des materiellen Volumenkörpers 16b. Ferner erstrecken sich die Strangelemente 32.1b, 32.2b, 32.3b, 32.4b, 32.5b, 32.6b zumindest teilweise durch die Hohlraumstruktur 18b. Die Strangelemente 32.1b, 32.2b, 32.3b, 32.4b, 32.5b, 32.6b sind von feinen Stegen mit einem geringen Querschnitt gebildet. Eine Orientierung der Strangelemente 32.1b, 32.2b, 32.3b, 32.4b, 32.5b, 32.6b ist im Wesentlichen entlang einer Längsachse 52b des Mundhygienemittels 10b. Die Strangelemente 32.1b, 32.2b, 32.3b, 32.4b, 32.5b, 32.6b kreuzen entlang der Längsrichtung der Griffeinheit 14b. Ferner ist in die bionische Struktur 20b des materiellen Volumenkörpers 16b ein Plateau 66b eingebaut, wobei das Plateau 66b quasi eben zwischen zwei Strangelementen 32.3b, 32.6b ausgebildet ist. Das Plateau 66b kann für eine Beschriftung genutzt werden oder kann insbesondere der Ergonomie, insbesondere zu einem verbesserten Halten, dienen. Das Plateau 66b ist an einem unteren Ende der Griffeinheit 14b ausgebildet. Die Strangelemente 32.1b, 32.2b, 32.3b, 32.4b, 32.5b, 32.6b sind in zumindest einem Querschnitt senkrecht zu einer Haupterstreckungsrichtung 34b der Griffeinheit 14b voneinander beabstandet. Ferner sind die Strangelemente 32.1b, 32.2b, 32.3b, 32.4b, 32.5b, 32.6b in zumindest einem Querschnitt senkrecht zu der Haupterstreckungsrichtung 34b der Griffeinheit 14b teilweise miteinander verbunden. Die Strangelemente 32.1b, 32.2b, 32.3b, 32.4b, 32.5b, 32.6b kreuzen sich in zumindest einem Punkt, wobei die Strangelemente 32.1b, 32.2b, 32.3b, 32.4b, 32.5b, 32.6b in dem Kreuzungspunkt miteinander verbunden sind. Vorzugsweise verlaufen die Strangelemente 32.1b, 32.2b, 32.3b, 32.4b, 32.5b, 32.6b von der Plattform 64b getrennt entlang der Längsachse 52b, wobei je drei Strangelemente 32.1b, 32.2b, 32.3b, 32.4b, 32.5b, 32.6b auf jeder Seite angeordnet sind. In einem Mittelbereich kreuzen sich die Strangelemente 32.1b, 32.2b, 32.3b, 32.4b, 32.5b, 32.6b jeder Seite zumindest teilweise, wobei die Seiten voneinander getrennt bleiben. In einem hinteren Bereich laufen die Strangelemente 32.1b, 32.2b, 32.3b, 32.4b, 32.5b, 32.6b zusammen, wobei ein Strangelement 32.3b der linken Seite und ein Strangelement 32.6b der rechten Seite zusammenlaufen und das Plateau 66b ausbilden. Das Plateau 66b ist auf der Vorderseite 30b angeordnet, wobei die zwei Strangelemente 32.3b, 32.6b, welche das Plateau 66b ausbilden, auf einer Rückseite 26b an die Plattform 64b angebunden sind (Figur 2A, 2B, 2C).

Die bionische Struktur 20b weist in zumindest einem Bereich ferner vier weitere Strangelemente 32.7b, 32.8b, 32.9b, 32.10b auf. Die bionische Struktur 20b weist in dem vorderen Griffbereich beispielhaft vier weitere Strangelemente 32.7b, 32.8b, 32.9b, 32.10b auf. Die bionische Struktur 20b weist in dem vorderen Griffbereich, welcher auf einer der Anwendungseinheit 12b zugewandten Seite der Plattform 64b angeordnet ist, genau vier weitere Strangelemente 32.7b, 32.8b, 32.9b, 32.10b auf. Die weiteren Strangelemente 32.7b, 32.8b, 32.9b, 32.10b bilden eine Netzstruktur aus. Die weiteren Strangelemente 32.7b, 32.8b, 32.9b, 32.10b bilden eine käfigförmige Struktur aus. Die weiteren Strangelemente 32.7b, 32.8b, 32.9b, 32.10b verlaufen im Wesentlichen parallel zueinander. Die weiteren Strangelemente 32.7b, 32.8b, 32.9b, 32.10b umschließen teilweise die Hohlraumstruktur 18b. Die weiteren Strangelemente 32.7b, 32.8b, 32.9b, 32.10b sind von Stegen gebildet, welche eine äußere Hülle der Hohlraumstruktur 18b bilden. Die weiteren Strangelemente 32.7b, 32.8b, 32.9b, 32.10b bilden teilweise eine äußere Hülle des materiellen Volumenkörpers 16b aus. Eine Orientierung der weiteren Strangelemente 32.7b, 32.8b, 32.9b, 32.10b ist im Wesentlichen entlang einer Längsachse 52b des Mundhygienemittels 10b. Ferner sind die Strangelemente 32.7b, 32.8b, 32.9b, 32.10b zwischen dem Kopfbereich 46b und der Plattform 64b, mindestens teilweise im Halsbereich 48b, angeordnet (Figur 2A, 2B, 2C).

Die bionische Struktur 20b ist in einem Spritzgussverfahren hergestellt. Die bionische Struktur 20b ist mittels sich berührender Kerne sowie zusätzlicher Kernzüge hergestellt. Die bionische Struktur 20b kann nicht mehr nur in einer Achse entformt werden, weshalb die zusätzlichen Kernzüge nötig sind. Alternativ wären für die Herstellung auch 3D-Druck-Verfahren denkbar.

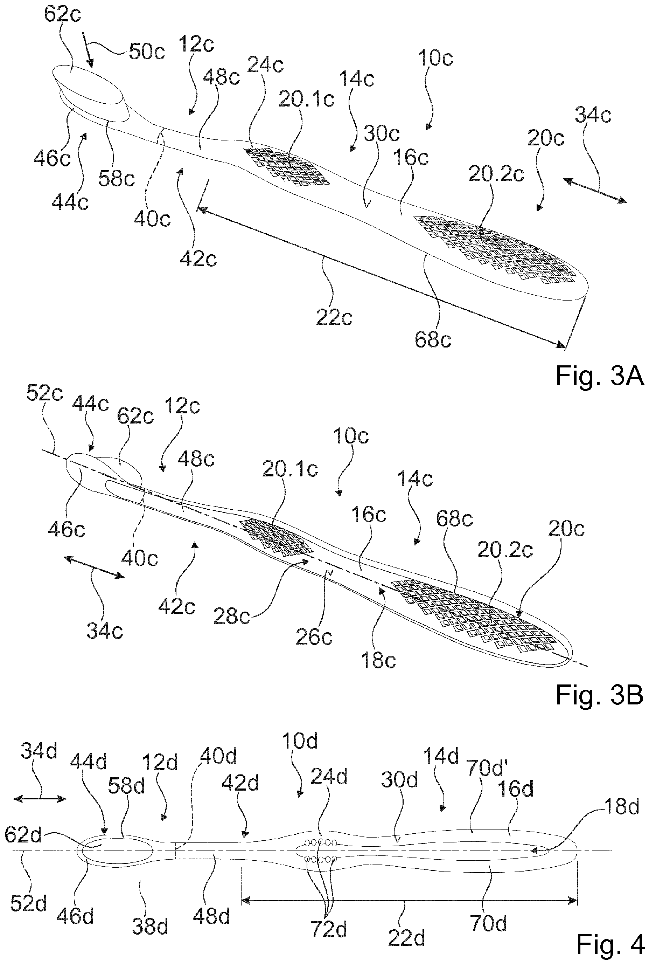

Die Figur 3A zeigt eine Vorderseite 30c eines Mundhygienemittels 10c mit einer Anwendungseinheit 12c und mit einer Griffeinheit 14c, die einen materiellen Volumenkörper 16c aufweist. Die Griffeinheit 14c ist mit der Anwendungseinheit 12c verbunden. Die Griffeinheit 14c und die Anwendungseinheit 12c sind einstückig ausgebildet. Die zumindest eine Anwendungseinheit 12c weist einen Kopfbereich 46c auf. Der Kopfbereich 46c bildet einen Bürstenkopf des Mundhygienemittels 10c. Der Kopfbereich 46c weist insbesondere einen als Borstenträger ausgebildeten Grundkörper auf. Das Mundhygienemittel 10c weist ferner einen von dem Kopfbereich 46c aufgenommenen Reinigungsbereich 62c auf, der eine Mehrzahl von Borstenbündeln umfasst. Aus Gründen der Übersichtlichkeit sind in den Figuren 3A und 3B die Borstenbündel schematisch als ein Volumenkörper dargestellt. Auf der Vorderseite 30c des Kopfbereichs 46c ist zumindest eine Aussparung 58c ausgeformt. Die zumindest eine Aussparung 58c ist zur Aufnahme einzelner Borstenbündel und/oder eines Borstenbündels umfassenden Borstenplättchens vorgesehen.

Die Griffeinheit 14c weist ferner zumindest eine wesentliche Hohlraumstruktur 18c auf, welche zumindest im Wesentlichen von dem materiellen Volumenkörper 16c begrenzt ist. Die Hohlraumstruktur 18c ist von einem Hohlraum in der Griffeinheit 14c gebildet. In dem vorliegenden Fall ist die Hohlraumstruktur 18c von genau einem Hohlraum gebildet. Die Hohlraumstruktur 18c erstreckt sich über einen wesentlichen Teil einer Haupterstreckung 22c der Griffeinheit 14c. Die Hohlraumstruktur 18c erstreckt sich von einem hinteren Ende der Griffeinheit 14c bis zu einem Halsbereich 48c der Anwendungseinheit 12c.

Der materielle Volumenkörper 16c weist ferner eine zumindest im Wesentlichen bionische Struktur 20c auf. Der materielle Volumenkörper 16c weist eine bionische Struktur 20c auf. Die bionische Struktur 20c begrenzt zumindest teilweise direkt die Hohlraumstruktur 18c. Die bionische Struktur 20c grenzt direkt an die Hohlraumstruktur 18c an. Die bionische Struktur 20c erstreckt sich über einen wesentlichen Teil der Haupterstreckung 22c der Griffeinheit 14c. Die bionische Struktur 20c erstreckt sich über zumindest 30 % der Haupterstreckung 22c der Griffeinheit 14c. Die bionische Struktur 20c ist von einer Gitterstruktur gebildet. Die bionische Struktur 20c umfasst eine Vielzahl von regelmäßig angeordneten Stegen, welche jeweils zu den Seiten hin eine Ausnehmung begrenzen. Die Stege sind zu einem Muster miteinander verbunden. Die Stege sind einstückig ausgebildet. Die Ausnehmungen sind in einem definierten Raster angeordnet und weisen eine zumindest im Wesentlichen gleiche Querschnittsform auf. Die Ausnehmungen sind beispielhaft rautenförmig ausgebildet. Die Anordnung der Ausnehmungen bildet ein regelmäßiges Muster aus. Die Ausnehmungen sind von Durchgangslöchern gebildet. Die bionische Struktur 20c, welche von einer Gitterstruktur gebildet ist, weist mehrere separaten Teilstrukturen 20.1c, 20.2c auf. Die bionische Struktur 20c, welche von einer Gitterstruktur gebildet ist, weist genau zwei separate Teilstrukturen 20.1c, 20.2c auf, die durch einen strukturlosen Bereich des materiellen Volumenkörpers 16c getrennt sind. Eine erste Teilstruktur 20.1c der bionischen Struktur 20c ist in einem Daumengriffbereich 24c des materiellen Volumenkörpers 16c angeordnet. Die erste Teilstruktur 20.1c der bionischen Struktur 20c bildet eine Oberflächenstruktur des Daumengriffbereichs 24c aus. Eine zweite Teilstruktur 20.2c der bionischen Struktur 20c ist an einem hinteren Ende des materiellen Volumenkörpers 16c angeordnet. Pro Teilstruktur sind zwischen 5 und 18 parallele Stege angeordnet, vorzugsweise 7 bis 13 Stege.

Der materielle Volumenkörper 16c weist den Daumengriffbereich 24c auf. Die Hohlraumstruktur 18c ist zu einer dem Daumengriffbereich 24c abgewandten Rückseite 26c des Mundhygienemittels 10c im Wesentlichen geöffnet. Der materielle Volumenkörper 16c umgreift die Hohlraumstruktur 18c in einer Ebene senkrecht zu einer Haupterstreckungsrichtung 34c der Griffeinheit 14c im Wesentlichen C-förmig. Ein geometrischer Mittelpunkt der Hohlraumstruktur 18c ist über einen Winkelbereich von zumindest 200° von dem materiellen Volumenkörper 16c umgeben. Ein Volumen der Hohlraumstruktur 18c ist größer als ein Volumen des materiellen Volumenkörpers 16c, wobei in jedem Punkt der Hohlraumstruktur 18c eine den Punkt schneidende, gedachte Gerade existiert, welche den materiellen Volumenkörper 16c, anschließend den Punkt und darauffolgend wieder den materiellen Volumenkörper 16c schneidet. Der materielle Volumenkörper 16c ist dünnwandig ausgebildet. Der materielle Volumenkörper 16c ist in einem Spritzgussverfahren hergestellt. Der materielle Volumenkörper 16c ist wie eine gebogene Platte geformt. Die Biegung ist im Wesentlichen quer zu einer Längsachse 52c des Mundhygienemittels 10c. Der materielle Volumenkörper 16c weist eine meist gebogene Querschnittsform auf, sodass wiederum eine voluminöse Außenform geschaffen wird. Der materielle Volumenkörper 16c weist in einer Ebene senkrecht zur Haupterstreckungsrichtung 34c einen im Wesentlichen C-förmigen Querschnitt auf, welcher gegen hinten offen ist. Der materielle Volumenkörper 16c bildet auf einer dem Daumengriffbereich 24c abgewandten Seite einen im Wesentlichen konkaven Aufnahmebereich 28c aus, welcher die Hohlraumstruktur 18c begrenzt. Der materielle Volumenkörper 16c weist eine zu einer Rückseite 26c konkav gebogene Querschnittsform auf, sodass wiederum eine voluminöse Außenform geschaffen wird. Die Hohlraumstruktur 18c ist von der konkaven Biegung des materiellen Volumenkörpers 16c gebildet. Der materielle Volumenkörper 16c ist von hinten ausgenommen, wobei die Ausnehmung von der Hohlraumstruktur 18c gebildet ist. Die Hohlraumstruktur 18c ist von der Biegung des materiellen Volumenkörpers 16c gebildet. Die Hohlraumstruktur 18c erstreckt sich ausschließlich in der Griffeinheit 14c. Es wäre jedoch auch denkbar, dass sich die Hohlraumstruktur 18c auch über den Halsbereich 48c in die Anwendungseinheit 12c fortsetzt. Ferner weist der materielle Volumenkörper 16c an einer freien Kante einen stabilisierenden Rand 68c auf. Der Rand 68c weist eine größere Materialstärke auf als der restliche materielle Volumenkörper 16c. Der materielle Volumenkörper 16c weist eine dünne Wandstärke auf. Die dünne Wandstärke reicht bis in den Halsbereich 48c der Anwendungseinheit 12c. Die Wandstärke des materiellen Volumenkörpers 16c beträgt von 1 mm bis 5,5 mm, vorzugsweise von 2 mm bis 4 mm.

Die Hohlraumstruktur 18c ist auf einer dem Daumengriffbereich 24c zugewandten Vorderseite 30c im Wesentlichen geschlossen. Die Hohlraumstruktur 18c ist auf einer Vorderseite 30c von dem materiellen Volumenkörper 16c begrenzt. Der materielle Volumenkörper 16c weist eine zu einer Vorderseite 30c konvex gebogene Querschnittsform auf. Die Hohlraumstruktur 18c ist auf einer Vorderseite 30c lediglich im Bereich der bionischen Struktur 20c teilweise geöffnet ausgebildet.

Die Figur 4 zeigt eine Vorderseite 30d eines Mundhygienemittels 10d mit einer Anwendungseinheit 12d und mit einer Griffeinheit 14d, die einen materiellen Volumenkörper 16d aufweist. Die Griffeinheit 14d ist mit der Anwendungseinheit 12d verbunden. Die Griffeinheit 14d und die Anwendungseinheit 12d sind einstückig ausgebildet. Die zumindest eine Anwendungseinheit 12d weist einen Kopfbereich 46d auf. Der Kopfbereich 46d bildet einen Bürstenkopf des Mundhygienemittels 10d. Der Kopfbereich 46d weist insbesondere einen als Borstenträger ausgebildeten Grundkörper auf. Das Mundhygienemittel 10d weist ferner einen von dem Kopfbereich 46d aufgenommenen Reinigungsbereich 62d auf, der eine Mehrzahl von Borstenbündeln umfasst. Aus Gründen der Übersichtlichkeit sind in der Figur 4 die Borstenbündel als ein Volumenkörper dargestellt. Auf der Vorderseite 30d des Kopfbereichs 46d ist zumindest eine Aussparung 58d ausgeformt. Die zumindest eine Aussparung 58d ist zur Aufnahme einzelner Borstenbündel und/oder eines Borstenbündels umfassenden Borstenplättchens vorgesehen.

Die Griffeinheit 14d weist ferner zumindest eine wesentliche Hohlraumstruktur 18d auf, welche zumindest im Wesentlichen von dem materiellen Volumenkörper 16d begrenzt ist. Die Hohlraumstruktur 18d ist von einem Hohlraum in der Griffeinheit 14d gebildet. In dem vorliegenden Fall ist die Hohlraumstruktur 18d von genau einem Hohlraum gebildet. Die Hohlraumstruktur 18d erstreckt sich über einen wesentlichen Teil einer Haupterstreckung 22d der Griffeinheit 14d. Die Hohlraumstruktur 18d erstreckt sich von einem hinteren Ende der Griffeinheit 14d bis zu einem Halsbereich 48d der Anwendungseinheit 12d.

Die Hohlraumstruktur 18d ist in zumindest einer Ebene parallel zu einer Haupterstreckungsebene 38d der Griffeinheit 14d vollständig von dem materiellen Volumenkörper 16d umschlossen. Die Hohlraumstruktur 18d ist in der Haupterstreckungsebene 38d der Griffeinheit 14d vollständig von dem materiellen Volumenkörper 16d umschlossen. Der materielle Volumenkörper 16d ist von einem Ring gebildet, welcher sich um die Hohlraumstruktur 18d erstreckt. Die Hohlraumstruktur 18d ist von einem Schlitz gebildet, welcher von dem materiellen Volumenkörper 16d umschlossen ist. Die Hohlraumstruktur 18d ist von einem 8-förmigen Schlitz gebildet. Der Schlitz ist entlang einer Längsachse 52d der Griffeinheit 14d ausgerichtet. Die Hohlraumstruktur 18d ist von einer Vorderseite 30d zu einer Rückseite des Mundhygienemittels 10d zu den Seiten von dem materiellen Volumenkörper 16d begrenzt. Der materielle Volumenkörper 16d ist von zwei seitlichen Längsstegen 70d, 70d' gebildet, welche jeweils an einem vorderen Ende und einem hinteren Ende verbunden sind. Der von dem materiellen Volumenkörper 16d gebildete Rahmen, welcher die Hohlraumstruktur 18d umschließt, ist geschlossen ausgebildet. Die Anwendungseinheit 12d ist als Vollkörper ausgebildet. Der materielle Volumenkörper 16d weist in einem Daumengriffbereich 24d im Bereich der Hohlraumstruktur 18d in den Einläufen des Schlitzes eine Oberflächenstruktur auf. Der materielle Volumenkörper 16d weist auf der Vorderseite 30d mehrere Fortsätze 72d auf, welche die Oberflächenstruktur ausbilden. Die Form des materiellen Volumenkörpers 16d ist gerundet ausgebildet. Die Längsstege 70d, 70d' des materiellen Volumenkörpers 16d weisen einen im Wesentlichen runden Querschnitt auf. Die als Schlitz ausgebildete Hohlraumstruktur 18d weist eine Länge von 30 mm bis 180 mm, vorzugsweise von 60 mm bis 150 mm, auf. Die als Schlitz ausgebildete Hohlraumstruktur 18d weist eine Breite von 3 mm bis 15 mm, vorzugsweise von 5 mm bis 10 mm, auf. Eine Höhe der als Schlitz ausgebildeten Hohlraumstruktur 18d entspricht insbesondere zumindest annähernd einer Breite der Hohlraumstruktur 18d.

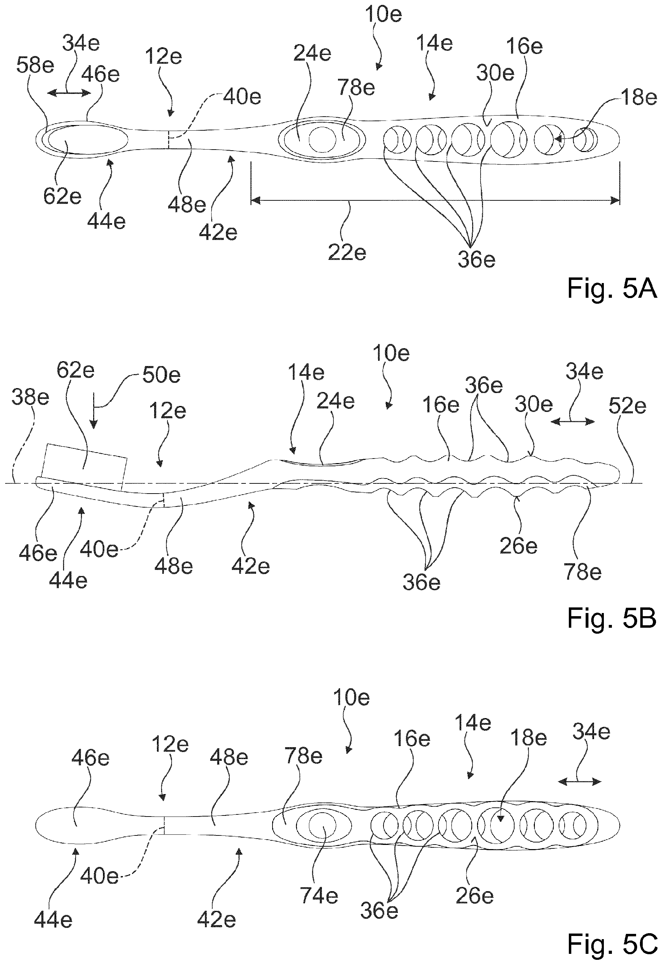

Die Figuren 5A bis 5C zeigen eine Vorderseite 30e eines Mundhygienemittels 10e mit einer Anwendungseinheit 12e und mit einer Griffeinheit 14e, die einen materiellen Volumenkörper 16e aufweist. Die Griffeinheit 14e ist mit der Anwendungseinheit 12e verbunden. Die Griffeinheit 14e und die Anwendungseinheit 12e sind einstückig ausgebildet. Die zumindest eine Anwendungseinheit 12e weist einen Kopfbereich 46e auf. Der Kopfbereich 46e bildet einen Bürstenkopf des Mundhygienemittels 10e. Der Kopfbereich 46e weist insbesondere einen als Borstenträger ausgebildeten Grundkörper auf. Das Mundhygienemittel 10e weist ferner einen von dem Kopfbereich 46e aufgenommenen Reinigungsbereich 62e auf, der eine Mehrzahl von Borstenbündeln umfasst. Aus Gründen der Übersichtlichkeit sind in den Figuren 5A bis 5C die Borstenbündel als ein Volumenkörper dargestellt. Auf der Vorderseite 30e des Kopfbereichs 46e ist zumindest eine Aussparung 58e ausgeformt. Die zumindest eine Aussparung 58e ist zur Aufnahme einzelner Borstenbündel und/oder eines Borstenbündels umfassenden Borstenplättchens vorgesehen.

Die Griffeinheit 14e weist ferner zumindest eine wesentliche Hohlraumstruktur 18e auf, welche zumindest im Wesentlichen von dem materiellen Volumenkörper 16e begrenzt ist. Die Hohlraumstruktur 18e ist von einem Hohlraum in der Griffeinheit 14e gebildet. In dem vorliegenden Fall ist die Hohlraumstruktur 18e von genau einem Hohlraum gebildet. Die Hohlraumstruktur 18e erstreckt sich über einen wesentlichen Teil einer Haupterstreckung 22e der Griffeinheit 14e. Die Hohlraumstruktur 18e erstreckt sich von einem hinteren Ende der Griffeinheit 14e bis zu einem Halsbereich 48e der Anwendungseinheit 12e.

Die Hohlraumstruktur 18e ist in zumindest einer Ebene parallel zu einer Haupterstreckungsebene 38e der Griffeinheit 14e vollständig von dem materiellen Volumenkörper 16e umschlossen. Die Hohlraumstruktur 18e ist in der Haupterstreckungsebene 38e der Griffeinheit 14e vollständig von dem materiellen Volumenkörper 16e umschlossen. Die Hohlraumstruktur 18e ist in zumindest einem Querschnitt senkrecht zu einer Haupterstreckungsrichtung 34e der Griffeinheit 14e von dem materiellen Volumenkörper 16e umgeben. Der Volumenkörper 16e weist eine Ausnehmung 36e auf, über welche die Hohlraumstruktur 18e mit einer Umgebung verbunden ist. Der materielle Volumenkörper 16e weist mehrere definierte Ausnehmungen 36e auf. Der materielle Volumenkörper 16e begrenzt, abgesehen von den Ausnehmungen 36e, vollständig die Hohlraumstruktur 18e. Die Ausnehmungen 36e sind unverbunden ausgebildet und weisen jeweils eine Fläche von maximal 1.5 cm² auf. Die Hohlraumstruktur 18e ist in den voluminösen Partien der Griffeinheit 14e angeordnet. Der materielle Volumenkörper 16e weist in einem die Hohlraumstruktur 18e begrenzenden Bereich eine geringe Wandstärke auf. Die Ausnehmungen 36e weisen verschiedene Orientierungen auf. Die Ausnehmungen 36e sind kreisförmig ausgebildet. Auf einer Vorderseite 30e sind sechs Ausnehmungen 36e angeordnet. Die Ausnehmungen 36e auf der Vorderseite 30e weisen verschiedene Durchmesser auf, wobei ein Durchmesser der Ausnehmungen 36e zu einer Mitte der Griffeinheit 14e zunimmt. Auf einer Rückseite 26e sind sechs Ausnehmungen 36e angeordnet. Die Ausnehmungen 36e auf der Rückseite 26e weisen verschiedene Durchmesser auf, wobei ein Durchmesser der Ausnehmungen 36e zu einer Mitte der Griffeinheit 14e zunimmt. Die Ausnehmungen 36e der Vorderseite und der Rückseite sind zueinander versetzt angeordnet. Der materielle Volumenkörper 16e weist ferner einen Daumengriffbereich 24e auf. Der Daumengriffbereich 24e ist von einer konkaven Vertiefung in der Griffeinheit 14e gebildet. Auf der Rückseite 26e des Mundhygienemittels 10e ist eine zu dem Daumengriffbereich 24e korrespondierende Vertiefung 74e mit Durchgangsloch angeordnet. Die Ausnehmungen 36e sind lediglich auf einer der Anwendungseinheit 12e abgewandten Seite des Daumengriffbereichs 24e angeordnet. Die Hohlraumstruktur 18e erstreckt sich auf einer der Anwendungseinheit 12e abgewandten Seite des Daumengriffbereichs 24e durch den materiellen Volumenkörper 16e.

Die Ausnehmungen 36e sind entlang einer Längsachse 52e der Griffeinheit 14e in nahezu gleichen Abständen voneinander aufgereiht. Die Ausnehmungen 36e der Vorderseite 30e und der Rückseite 26e sind versetzt zueinander angeordnet. Die Ausnehmungen 36e bzw. die durch sie in der Wand des materiellen Volumenkörpers 16e hervorgerufenen Einbuchtungen, sind durch Stege des materiellen Volumenkörpers 16e voneinander beabstandet. Auf der Vorderseite 30e sind bei der gezeigten Ausführungsform fünf Stege und auf der Rückseite 26e ebenfalls fünf Stege ausgebildet. Die Ausnehmungen 36e münden nach ihrem Durchtritt durch die Wand des materiellen Volumenkörpers 16e in die Hohlraumstruktur 18e. Der Hohlraumstruktur 18e ist durch die Ausnehmungen 36e zur Umgebung hin geöffnet. In einer möglichen Ausführungsform können in die Hohlraumstruktur 18e Gegenstände eingelegt werden.

In der Hohlraumstruktur 18e sind quer zur Längsachse 52e orientierte, konisch zusammenlaufende Querrippen angeordnet, welche nicht weiter dargestellt sind. Diese Querrippen sind durch den Herstellungsprozess bedingt.

Im vorliegenden Fall ist in Figuren 5A bis 5C eine Ausführungsform gezeigt, welche in einer oder mehreren Materialkomponenten hergestellt werden kann. Die gekennzeichneten Volumina sind in einer weiteren Materialkomponente 78e ausgeführt. Die weitere Materialkomponente 78e bildet auf der Rückseite 26e die Geometrie um die Ausnehmungen 36e aus und bildet so einen Teil der Rückseite 26e aus. Im Daumengriffbereich 24e ist eine Vertiefung 74e mit Durchgangsöffnung geschaffen, durch welche die weitere Materialkomponente 78e von der Rückseite 26e zur Vorderseite 30e geführt wird. Der Daumengriffbereich 24e bzw. die Vertiefung 74e mit Durchgangsöffnung ist mit der weiteren Materialkomponente 78e mindestens teilweise bedeckt.

Die weitere Materialkomponente 78e kann auf der Rückseite 26e zwischen den Ausnehmungen 36e die Stege teilweise oder komplett bilden. Die weitere Materialkomponente 78e kann entweder auf ein "Trägerelement" des Volumenkörpers 16e aufgebracht werden und die Stege bilden, oder die weitere Materialkomponente 78e bildet die Stege eigenständig oder weitere Materialkomponenten aus.

Das Mundhygienemittel 10e wird in einem Spritzgussverfahren hergestellt. Die zur Vorderseite 30e des Mundhygienemittels 10e geöffneten Ausnehmungen 36e werden durch konisch zulaufende Fingerelemente ausgeformt, während die zur Rückseite 26e des Mundhygienemittels 10e geöffneten Ausnehmungen 36e ebenfalls durch konisch zulaufende Fingerelemente ausgeformt werden. Die Fingerelemente greifen in der Hohlraumstruktur 18e jeweils ineinander und berühren einander, um einen Durchfluss von Material, insbesondere Kunststoff, auszuschließen. Die sich berührenden Fingerelemente formen im fertigen Mundhygienemittel 10e die Ausnehmungen 36e und die Hohlraumstruktur 18e. Eine Kavität, die bei der Herstellung mit Material, insbesondere Kunststoff, gefüllt wird, bestimmt die Form des materiellen Volumenkörpers 16e der Griffeinheit 14e und der Anwendungseinheit 12e.

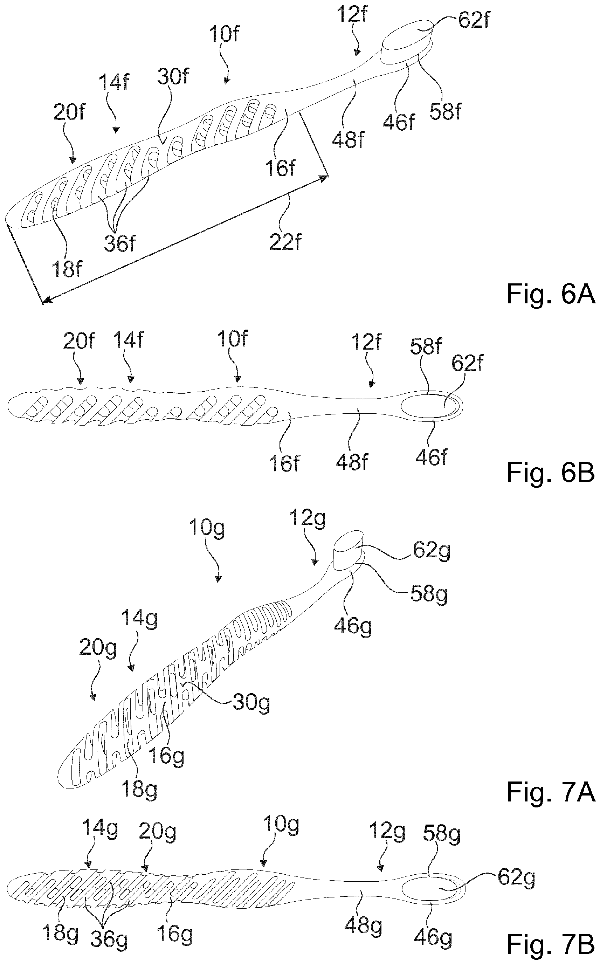

Die Figuren 6A und 6B zeigen eine weitere Ausführungsform. Die Figur 6A zeigt eine Vorderseite 30f eines Mundhygienemittels 10f mit einer Anwendungseinheit 12f und mit einer Griffeinheit 14f, die einen materiellen Volumenkörper 16f aufweist. Die Griffeinheit 14f ist mit der Anwendungseinheit 12f verbunden. Die Griffeinheit 14f und die Anwendungseinheit 12f sind einstückig ausgebildet. Die zumindest eine Anwendungseinheit 12f weist einen Kopfbereich 46f auf. Der Kopfbereich 46f bildet einen Bürstenkopf des Mundhygienemittels 10f. Der Kopfbereich 46f weist insbesondere einen als Borstenträger ausgebildeten Grundkörper auf. Das Mundhygienemittel 10f weist ferner einen von dem Kopfbereich 46f aufgenommenen Reinigungsbereich 62f auf, der eine Mehrzahl von Borstenbündeln umfasst. Aus Gründen der Übersichtlichkeit sind in den Figuren 6A und 6B die Borstenbündel schematisch als ein Volumenkörper gezeigt. Auf der Vorderseite 30f des Kopfbereichs 46f ist zumindest eine Aussparung 58f ausgeformt. Die zumindest eine Aussparung 58f ist zur Aufnahme einzelner Borstenbündel und/oder eines Borstenbündels umfassenden Borstenplättchens vorgesehen.

Die Griffeinheit 14f weist ferner zumindest eine wesentliche Hohlraumstruktur 18f auf, welche zumindest im Wesentlichen von dem materiellen Volumenkörper 16f begrenzt ist. Die Hohlraumstruktur 18f ist von mehreren Hohlräumen in der Griffeinheit 14f gebildet. In dem vorliegenden Fall ist die Hohlraumstruktur 18f von einem Hohlraum gebildet, welcher sich über verschiedene Ausnehmungen 36f hinweg ausbildet. Die Hohlraumstruktur 18f erstreckt sich über einen wesentlichen Teil einer Haupterstreckung 22f der Griffeinheit 14f. Die Hohlraumstruktur 18f ist einteilig ausgebildet, sie erstreckt sich bis zu einem Halsbereich 48f der Anwendungseinheit 12f.

Der materielle Volumenkörper 16f weist ferner eine zumindest im Wesentlichen bionische Struktur 20f auf. Der materielle Volumenkörper 16f weist eine bionische Struktur 20f auf. Die bionische Struktur 20f begrenzt zumindest teilweise direkt die Hohlraumstruktur 18f. Die bionische Struktur 20f ist mittels verschiedener Ausnehmungen 36f gebildet. Die Ausnehmungen 36f sind sowohl von der Vorderseite 30f wie auch von der Rückseite 26f her ausgeformt. Die Ausnehmungen 36f laufen von außen her in den Körper hinein. Die Ausnehmungen 36f in den Figuren 6A und 6B sind schlitzförmig ausgeführt. Die Ausnehmungen 36f der Vorderseite 30f und der Rückseite 26f kreuzen sich und gehen mindestens teilweise ineinander über. Die schlitzförmigen Ausnehmungen 36f sind in einem Winkel zur Haupterstreckungsrichtung 34f ausgerichtet, wobei die Ausnehmungen 36f der Vorderseite 30f und die Ausnehmungen 36f der Rückseite 26f bezüglich der Ausrichtung gegenüber der Haupterstreckungsrichtung 34f symmetrisch angeordnet sind. Diese Anordnungsweise der Ausnehmungen 36f bringt mit sich, dass die Stabilität des gesamten Körpers trotz Materialersparnis gegeben ist und der Körper auch nicht flexibel ist.

Die Ausnehmungen 36f sind weiter auf der Vorderseite 30f wie auch auf der Rückseite 26f jeweils zur linken oder zur rechten Seite her offen, wobei die Ausnehmungen 36f auf der Vorderseite 30f zu einer Seite offen sind und die der Rückseite 26f zur anderen Seite offen sind. Dadurch ergeben sich seitlich links und rechts am Übergang zur Vorderseite 30f respektive zur Rückseite 26f je eine durchgehende geschlossene Partie, die von der Unterseite her bis zur Oberseite, sprich zur Anwendungseinheit 12f, führt.

Die Ausnehmungen 36f sind vorzugsweise in der Griffeinheit 14f ausgebildet und enden im Daumengriffbereich 24f beziehungsweise sind nicht bis in den Halsbereich 48f ausgeführt.

Die bionische Struktur 20f ist in einem Spritzgussverfahren hergestellt. Die bionische Struktur 20f ist mittels sich berührender Kerne hergestellt. Die bionische Struktur 20f kann entlang einer Achse entformt werden. Alternativ wären für die Herstellung auch 3D-Druck-Verfahren denkbar.

Die Figuren 7A und 7B zeigen eine weitere Ausführungsform. Die Figur 7A zeigt eine Vorderseite 30g eines Mundhygienemittels 10g mit einer Anwendungseinheit 12g und mit einer Griffeinheit 14g, die einen materiellen Volumenkörper 16g aufweist. Die Griffeinheit 14g ist mit der Anwendungseinheit 12g verbunden. Die Griffeinheit 14g und die Anwendungseinheit 12g sind einstückig ausgebildet. Die zumindest eine Anwendungseinheit 12g weist einen Kopfbereich 46g auf. Der Kopfbereich 46g bildet einen Bürstenkopf des Mundhygienemittels 10g. Der Kopfbereich 46g weist insbesondere einen als Borstenträger ausgebildeten Grundkörper auf. Das Mundhygienemittel 10g weist ferner einen von dem Kopfbereich 46g aufgenommenen Reinigungsbereich 62g auf, der eine Mehrzahl von Borstenbündeln umfasst. Aus Gründen der Übersichtlichkeit sind in den Figuren 7A und 7B die Borstenbündel schematisch als ein Volumenkörper gezeigt. Auf der Vorderseite 30g des Kopfbereichs 46g ist zumindest eine Aussparung 58g ausgeformt. Die zumindest eine Aussparung 58g ist zur Aufnahme einzelner Borstenbündel und/oder eines Borstenbündels umfassenden Borstenplättchens vorgesehen.

Die Griffeinheit 14g weist mehrere Hohlraumstrukturen 18g auf, welche zumindest im Wesentlichen von dem materiellen Volumenkörper 16g begrenzt sind. Die Hohlraumstruktur 18g ist von mehreren Hohlräumen in der Griffeinheit 14g gebildet. In dem vorliegenden Fall bildet sich die Hohlraumstruktur 18g in je einer Ausnehmung 36g aus. Die Hohlraumstruktur 18g erstreckt sich über einen wesentlichen Teil einer Haupterstreckung 22g der Griffeinheit 14g. Die Hohlraumstruktur 18g erstreckt sich bis zu einem Halsbereich 48g der Anwendungseinheit 12g.

Der materielle Volumenkörper 16g weist ferner eine zumindest im Wesentlichen bionische Struktur 20g auf. Der materielle Volumenkörper 16g weist eine bionische Struktur 20g auf. Die bionische Struktur 20g begrenzt zumindest teilweise direkt die Hohlraumstruktur 18g. Die bionische Struktur 20g ist mittels verschiedener Ausnehmungen 36g gebildet. Die Ausnehmungen 36g sind sowohl von der Vorderseite 30g wie auch von der Rückseite 26g her ausgeformt. Die Ausnehmungen 36g laufen von außen her in den Körper hinein. Die Ausnehmungen 36g in den Figuren 7A und 7B sind schlitzförmig ausgeführt. Die Ausnehmungen 36g der Vorderseite 30g und der Rückseite 26g berühren sich teilweise und bilden so Durchbrüche zwischen der Vorderseite 30g und der Rückseite 26g. Die schlitzförmigen Ausnehmungen 36g sind in einem Winkel zu einer Haupterstreckungsrichtung ausgerichtet, wobei die Ausnehmungen 36g der Vorderseite 30g und die Ausnehmungen 36g der Rückseite 26g bezüglich der Ausrichtung gegenüber der Haupterstreckungsrichtung parallel angeordnet sind. Diese Anordnungsweise der Ausnehmungen 36g bringt mit sich, dass ein mindestens teilweise flexibler Körper gestaltet wird. Die Ausnehmungen 36g sind jeweils abwechslungsweise einseitig oder zweiseitig angeordnet. Einseitig heißt in diesem Fall nur von der Vorderseite 30g oder der Rückseite 26g. Zweiseitig heißt, dass an derselben Position eine Ausnehmung 36g von der Vorderseite 30g her und von der Rückseite 26g her gestaltet ist.

Die Ausnehmungen 36g sind weiter auf der Vorderseite 30g wie auch auf der Rückseite 26g jeweils zur linken oder zur rechten Seite her offen.

Die Ausnehmungen 36g sind vorzugsweise in der Griffeinheit 14g ausgebildet und enden im Daumengriffbereich 24g beziehungsweise sind nicht bis in den Halsbereich 48g ausgeführt. Die Tiefe der Ausnehmungen 36g wird im Bereich des Übergangs von der Griffeinheit 14g zum Halsbereich 48g vorzugsweise reduziert. Damit wird der materielle Volumenkörper 16g voller und die Stabilität des Körpers erhöht.

Die bionische Struktur 20g ist in einem Spritzgussverfahren hergestellt. Die bionische Struktur 20g ist mittels sich berührender Kerne hergestellt. Die bionische Struktur 20g kann entlang einer Achse entformt werden. Alternativ wären für die Herstellung auch 3D-Druck-Verfahren denkbar.

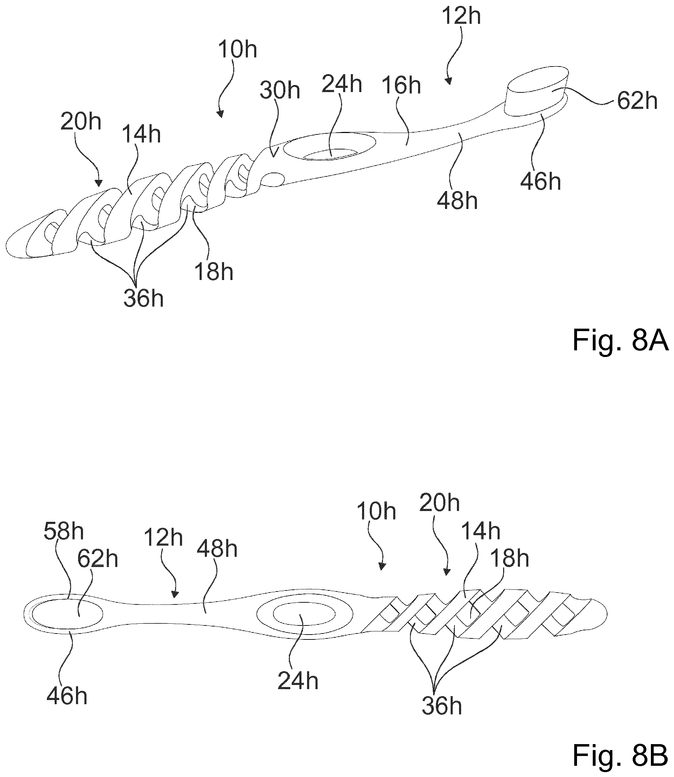

Die Figuren 8A und 8B zeigen eine weitere Ausführungsform. Die Figur 8A zeigt eine Vorderseite 30h eines Mundhygienemittels 10h mit einer Anwendungseinheit 12h und mit einer Griffeinheit 14h, die einen materiellen Volumenkörper 16h aufweist. Die Griffeinheit 14h ist mit der Anwendungseinheit 12h verbunden. Die Griffeinheit 14h und die Anwendungseinheit 12h sind einstückig ausgebildet. Die zumindest eine Anwendungseinheit 12h weist einen Kopfbereich 46h auf. Der Kopfbereich 46h bildet einen Bürstenkopf des Mundhygienemittels 10h. Der Kopfbereich 46h weist insbesondere einen als Borstenträger ausgebildeten Grundkörper auf. Das Mundhygienemittel 10h weist ferner einen von dem Kopfbereich 46h aufgenommenen Reinigungsbereich 62h auf, der eine Mehrzahl von Borstenbündeln umfasst. Aus Gründen der Übersichtlichkeit sind in den Figuren 8A und 8B die Borstenbündel schematisch als ein Volumenkörper gezeigt. Auf der Vorderseite 30h des Kopfbereichs 46h ist zumindest eine Aussparung 58h ausgeformt. Die zumindest eine Aussparung 58h ist zur Aufnahme einzelner Borstenbündel und/oder eines Borstenbündels umfassenden Borstenplättchens vorgesehen.

Die Griffeinheit 14h weist eine oder mehrere Hohlraumstrukturen 18h auf, welche zumindest im Wesentlichen von dem materiellen Volumenkörper 16h begrenzt sind. Die Hohlraumstruktur 18h ist von mehreren Hohlräumen in der Griffeinheit 14h gebildet. Die Hohlraumstruktur 18h erstreckt sich über einen wesentlichen Teil einer Haupterstreckung der Griffeinheit 14h. Die Hohlraumstruktur 18h erstreckt sich bis zu einem Halsbereich 48h der Anwendungseinheit 12h.

Der materielle Volumenkörper 16h weist ferner eine zumindest im Wesentlichen bionische Struktur 20h auf. Der materielle Volumenkörper 16h weist eine bionische Struktur 20h auf. Die bionische Struktur 20h begrenzt zumindest teilweise direkt die Hohlraumstruktur 18h. Die bionische Struktur 20h ist mittels einer fortlaufenden Ausnehmung 36h in Form einer Doppelhelix gebildet. Die Ausnehmungen 36h sind damit sowohl von der Vorderseite 30h wie auch von der Rückseite 26h her ausgeformt. Die Ausnehmungen 36h laufen von außen her in den Körper hinein. Die Ausnehmungen 36h der Vorderseite 30h und der Rückseite 26h berühren sich teilweise und bilden so Durchbrüche zwischen der Vorderseite 30h und der Rückseite 26h. Die schlitzförmigen Ausnehmungen 36h sind in einem Winkel zu einer Haupterstreckungsrichtung ausgerichtet, wobei die Ausnehmungen 36h der Vorderseite 30h und die Ausnehmungen 36h der Rückseite 26h bezüglich der Ausrichtung gegenüber der Haupterstreckungsrichtung kreuzweise - in Form einer Doppelhelix - angeordnet sind.

Die Ausnehmungen 36h sind in der Griffeinheit 14h ausgebildet und enden im Daumengriffbereich 24h beziehungsweise sind nicht bis in den Halsbereich 48h ausgeführt. Vorzugsweise werden die Ausnehmungen 36h in der Griffeinheit 14h ausgebildet. Im Daumengriffbereich 24h ist eine Durchgangsöffnung gestaltet, die gerundet geformt ist und so die Struktur für die Daumenauflage bildet.

Die bionische Struktur 20h ist in einem Spritzgussverfahren hergestellt. Die bionische Struktur 20h ist mittels sich berührender Kerne hergestellt. Die bionische Struktur 20h kann entlang einer Achse entformt werden. Alternativ wären für die Herstellung auch 3D-Druck-Verfahren denkbar.

Es können neben der besprochenen Hartkomponente auch weitere Komponenten zur Anwendung kommen, beispielsweise Weichkomponenten. Die Weichkomponente kann beispielsweise dazu genutzt werden, den Daumengriffbereich 24h auf der Oberfläche auszufüllen und so in diesem Bereich eine bessere Haptik zu schaffen. Dabei kann die Weichkomponente in einer Vertiefung angeordnet sein und durch diese hindurch von der Vorderseite 30h zur Rückseite 26h geführt werden und so die Haptik auf beiden Seiten des Daumengriffbereichs 24h verbessern.

Die in den Figuren 6 bis 8 gezeigten Ausführungsformen können im Mehrkomponentenspritzguss hergestellt sein. Neben der bereits beschriebenen Hartkomponente können weitere Komponenten zum Einsatz kommen. Beispielsweise kann eine Weichkomponente eingesetzt werden. Die Weichkomponente kann einen Teil der Ausnehmungen 36f, 36g, 36h füllen und bis an die greifbare Oberfläche treten und so Optik und Haptik des Produkts verändern. Beispielsweise bei der Ausführungsform in den Fig. 6A und 6B können die Ausnehmungen 36f, welche am nächsten zum Daumengriffbereich 24f liegen, mit Weichkomponente ausgefüllt werden. Damit wird die Griffigkeit verbessert und der Daumen liegt stabil auf dem Produkt.

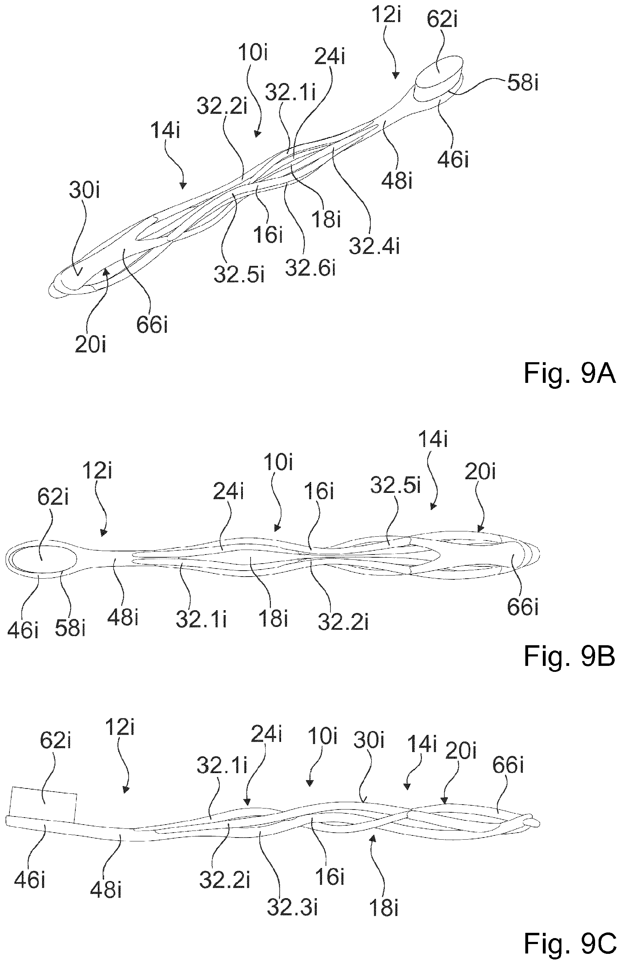

In den Figuren 9A, 9B und 9C ist eine weitere Ausführungsform gezeigt. Die Figur 9A zeigt eine Vorderseite 30i eines Mundhygienemittels 10i mit einer Anwendungseinheit 12i und mit einer Griffeinheit 14i, die einen materiellen Volumenkörper 16i aufweist. Die Griffeinheit 14i ist mit der Anwendungseinheit 12i verbunden. Die Griffeinheit 14i und die Anwendungseinheit 12i sind einstückig ausgebildet. Die zumindest eine Anwendungseinheit 12i weist einen Kopfbereich 46i auf. Der Kopfbereich 46i bildet einen Bürstenkopf des Mundhygienemittels 10i. Der Kopfbereich 46i weist insbesondere einen als Borstenträger ausgebildeten Grundkörper auf. Das Mundhygienemittel 10i weist ferner einen von dem Kopfbereich 46i aufgenommenen Reinigungsbereich 62i auf, der eine Mehrzahl von Borstenbündeln umfasst. Aus Gründen der Übersichtlichkeit sind in den Figuren 9A bis 9C die Borstenbündel schematisch als ein Volumenkörper gezeigt. Auf der Vorderseite 30i des Kopfbereichs 46i ist zumindest eine Aussparung 58i ausgeformt. Die zumindest eine Aussparung 58i ist zur Aufnahme einzelner Borstenbündel und/oder eines Borstenbündels umfassenden Borstenplättchens vorgesehen.

Die Griffeinheit 14i weist ferner zumindest eine wesentliche Hohlraumstruktur 18i auf, welche zumindest im Wesentlichen von dem materiellen Volumenkörper 16i begrenzt ist. Die Hohlraumstruktur 18i ist von einem Hohlraum oder mehreren Hohlräumen in der Griffeinheit 14i gebildet. In dem vorliegenden Fall ist die Hohlraumstruktur 18i von einem Hohlraum gebildet. Die Hohlraumstruktur 18i erstreckt sich über einen wesentlichen Teil einer Haupterstreckung der Griffeinheit 14i. Die Hohlraumstruktur 18i ist einteilig ausgebildet. Die Hohlraumstruktur 18i erstreckt sich bis zu einem Halsbereich 48i der Anwendungseinheit 12i.

Der materielle Volumenkörper 16i weist ferner eine zumindest im Wesentlichen bionische Struktur 20i auf. Der materielle Volumenkörper 16i weist eine bionische Struktur 20i auf. Die bionische Struktur 20i begrenzt zumindest teilweise direkt die Hohlraumstruktur 18i. Die bionische Struktur 20i grenzt direkt an die Hohlraumstruktur 18i an. Die bionische Struktur 20i erstreckt sich über einen wesentlichen Teil der Haupterstreckung der Griffeinheit 14i. Die bionische Struktur 20i erstreckt sich über zumindest 70 % der Haupterstreckung der Griffeinheit 14i. Die bionische Struktur 20i weist in zumindest einem Bereich zumindest drei zueinander verdrehte Strangelemente 32.1i, 32.2i, 32.3i, 32.4i, 32.5i, 32.6i auf. Die bionische Struktur 20i weist in dem hinteren Griffbereich beispielhaft genau sechs zueinander verdrehte Strangelemente 32.1i, 32.2i, 32.3i, 32.4i, 32.5i, 32.6i auf. Die bionische Struktur 20i weist genau sechs zueinander verdrehte Strangelemente 32.1i, 32.2i, 32.3i, 32.4i, 32.5i, 32.6i auf. Die Strangelemente 32.1i, 32.2i, 32.3i, 32.4i, 32.5i, 32.6i bilden eine Netzstruktur aus. Die Strangelemente 32.1i, 32.2i, 32.3i, 32.4i, 32.5i, 32.6i sind zumindest teilweise ineinander verschlungen. Die Strangelemente 32.1i, 32.2i, 32.3i, 32.4i, 32.5i, 32.6i umschließen teilweise die Hohlraumstruktur 18i. Die Strangelemente 32.1i, 32.2i, 32.3i, 32.4i, 32.5i, 32.6i sind von Stegen gebildet, welche eine äußere Hülle der Hohlraumstruktur 18i bilden. Die Strangelemente 32.1i, 32.2i, 32.3i, 32.4i, 32.5i, 32.6i bilden eine äußere Hülle des materiellen Volumenkörpers 16i. Ferner erstrecken sich die Strangelemente 32.1i, 32.2i, 32.3i, 32.4i, 32.5i, 32.6i zumindest teilweise durch die Hohlraumstruktur 18i. Die Strangelemente 32.1i, 32.2i, 32.3i, 32.4i, 32.5i, 32.6i sind von feinen Stegen mit einem geringen Querschnitt gebildet. Die Strangelemente 32.1i, 32.2i, 32.3i, 32.4i, 32.5i, 32.6i sind im Wesentlichen entlang einer Längsachse des Mundhygienemittels 10i orientiert. Die Strangelemente 32.1i, 32.2i, 32.3i, 32.4i, 32.5i, 32.6i kreuzen entlang der Längsrichtung der Griffeinheit 14i.

Im Daumengriffbereich 24i sind die Strangelemente 32.1i, 32.2i, 32.3i, 32.4i, 32.5i, 32.6i so geformt, dass sie eine Mulde für die Daumenauflage formen. Dazu laufen die Strangelemente 32.1i, 32.2i, 32.3i, 32.4i, 32.5i, 32.6i von der Unterseite her gesehen auseinander und wieder zusammen, sodass sich die Mulde ausbildet.

Ferner ist in die bionische Struktur 20i des materiellen Volumenkörpers 16i ein Plateau 66i eingebaut, wobei das Plateau 66i quasi eben zwischen zwei Strangelementen 32.1i, 32.4i ausgebildet ist. Das Plateau 66i kann für eine Beschriftung genutzt werden oder kann insbesondere der Ergonomie, insbesondere zu einem verbesserten Halten, dienen. Das Plateau 66i ist an einem unteren Ende der Griffeinheit 14i ausgebildet. Die Strangelemente 32.1i, 32.2i, 32.3i, 32.4i, 32.5i, 32.6i sind in zumindest einem Querschnitt senkrecht zu einer Haupterstreckungsrichtung 34i der Griffeinheit 14i voneinander beabstandet. Ferner sind die Strangelemente 32.1i, 32.2i, 32.3i, 32.4i, 32.5i, 32.6i in zumindest einem Querschnitt senkrecht zu der Haupterstreckungsrichtung 34i der Griffeinheit 14i teilweise miteinander verbunden. In einem hinteren Bereich laufen die Strangelemente 32.1i, 32.2i, 32.3i, 32.4i, 32.5i, 32.6i zusammen, wobei ein Strangelement 32.1i der linken Seite und ein Strangelement 32.4i der rechten Seite zusammenlaufen und das Plateau 66i ausbilden. Das Plateau 66i ist auf der Vorderseite 30i angeordnet (vgl. Fig. 9A, 9B, 9C).

Die bionische Struktur 20i ist in einem Spritzgussverfahren hergestellt. Die bionische Struktur 20i ist mittels sich berührender Kerne sowie zusätzlicher Kernzüge hergestellt. Die bionische Struktur 20i kann nicht mehr nur in einer Achse entformt werden, weshalb die zusätzlichen Kernzüge nötig sind. Alternativ wären für die Herstellung auch 3D-Druck-Verfahren denkbar.

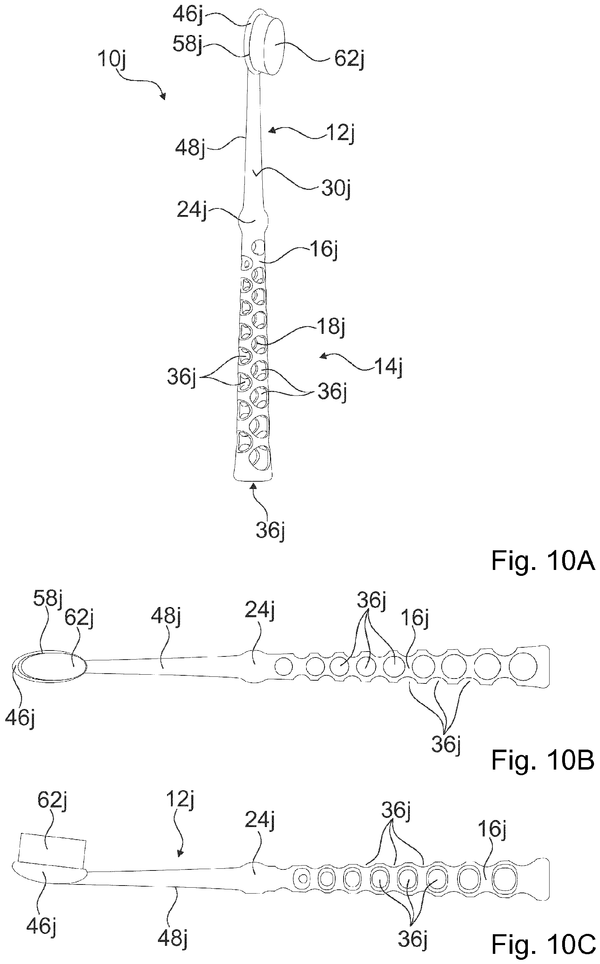

Die Figur 10A und 10B zeigen eine Vorderseite 30j eines Mundhygienemittels 10j mit einer Anwendungseinheit 12j und mit einer Griffeinheit 14j, die einen materiellen Volumenkörper 16j aufweist. Die Griffeinheit 14j ist mit der Anwendungseinheit 12j verbunden. Die Griffeinheit 14j und die Anwendungseinheit 12j sind einstückig ausgebildet. Die zumindest eine Anwendungseinheit 12j weist einen Kopfbereich 46j auf. Der Kopfbereich 46j bildet einen Bürstenkopf des Mundhygienemittels 10j. Der Kopfbereich 46j weist insbesondere einen als Borstenträger ausgebildeten Grundkörper auf. Das Mundhygienemittel 10j weist ferner einen von dem Kopfbereich 46j aufgenommenen Reinigungsbereich 62j auf, der eine Mehrzahl von Borstenbündeln umfasst. Aus Gründen der Übersichtlichkeit sind in den Figuren 10A bis 10C die Borstenbündel als ein Volumenkörper dargestellt. Auf der Vorderseite 30j des Kopfbereichs 46j ist zumindest eine Aussparung 58j ausgeformt. Die zumindest eine Aussparung 58j ist zur Aufnahme einzelner Borstenbündel und/oder eines Borstenbündels umfassenden Borstenplättchens vorgesehen.

Die Griffeinheit 14j weist ferner zumindest eine wesentliche Hohlraumstruktur 18j auf, welche zumindest im Wesentlichen von dem materiellen Volumenkörper 16j begrenzt ist. Die Hohlraumstruktur 18j ist von einem Hohlraum in der Griffeinheit 14j gebildet. In dem vorliegenden Fall ist die Hohlraumstruktur 18j von genau einem Hohlraum gebildet. Die Hohlraumstruktur 18j erstreckt sich über einen wesentlichen Teil einer Haupterstreckung der Griffeinheit 14j. Die Hohlraumstruktur 18j erstreckt sich von einem hinteren Ende der Griffeinheit 14j bis zu einem Daumengriffbereich 24j der Anwendungseinheit 12j.

Die Hohlraumstruktur 18j ist vom materiellen Volumenkörper 16j umschlossen. Der materielle Volumenkörper 16j enthält rundum versetzte Ausnehmungen 36j, welche von außen in die Hohlraumstruktur 18j eindringen. Der Volumenkörper 16j weist mindestens eine Ausnehmung 36j auf, über welche die Hohlraumstruktur 18j mit einer Umgebung verbunden ist. Der materielle Volumenkörper 16j weist mehrere definierte Ausnehmungen 36j auf. Der materielle Volumenkörper 16j begrenzt, abgesehen von den Ausnehmungen 36j, vollständig die Hohlraumstruktur 18j. Die Ausnehmungen 36j sind unverbunden ausgebildet und weisen jeweils eine Fläche von maximal 1,5 cm² auf. Die Hohlraumstruktur 18j ist in den voluminösen Partien der Griffeinheit 14j angeordnet. Der materielle Volumenkörper 16j weist in einem die Hohlraumstruktur 18j begrenzenden Bereich eine geringe Wandstärke auf. Die Ausnehmungen 36j weisen verschiedene Orientierungen auf. Die Ausnehmungen 36j sind kreisförmig ausgebildet. Auf einer Vorderseite 30j sind sechs Ausnehmungen 36j angeordnet. Die Ausnehmungen 36j auf der Vorderseite 30j weisen verschiedene Durchmesser auf, wobei ein Durchmesser der Ausnehmungen 36j zu einer Mitte der Griffeinheit 14j zunimmt. Auf einer Rückseite sind sechs Ausnehmungen 36j angeordnet. Die Ausnehmungen 36j auf der Rückseite weisen verschiedene Durchmesser auf, wobei ein Durchmesser der Ausnehmungen 36j zu einer Mitte der Griffeinheit 14j zunimmt. Die Ausnehmungen 36j der Vorderseite 30j und der Rückseite sowie auf der linken und rechten Seite sind zueinander versetzt angeordnet. Der materielle Volumenkörper 16j weist ferner einen Daumengriffbereich 24j auf. Der Daumengriffbereich 24j ist von einer kugelförmigen Erhebung rund um den Körper in der Griffeinheit 14j gebildet. Die Ausnehmungen 36j sind entlang einer Längsachse der Griffeinheit 14j in nahezu gleichen Abständen voneinander aufgereiht. Die Ausnehmungen 36j sind versetzt zueinander angeordnet. Die Ausnehmungen 36j bzw. die durch sie in der Wand des materiellen Volumenkörpers 16j hervorgerufenen Einbuchtungen, sind durch Stege des materiellen Volumenkörpers 16j voneinander beabstandet. Die Ausnehmungen 36j münden nach ihrem Durchtritt durch die Wand des materiellen Volumenkörpers 16j in die Hohlraumstruktur 18j. Der Hohlraumstruktur 18j ist durch die Ausnehmungen 36j zur Umgebung hin geöffnet. In einer möglichen Ausführungsform können in die Hohlraumstruktur 18j Gegenstände eingelegt werden. Auf der Unterseite der Griffeinheit 14j ist ebenfalls eine Ausnehmung 36j angeordnet.

Die bionische Struktur 20j ist in einem Spritzgussverfahren hergestellt. Die bionische Struktur 20j ist mittels sich berührender Kerne sowie zusätzlicher Kernzüge hergestellt. Die bionische Struktur 20j kann nicht mehr nur in einer Achse entformt werden, weshalb die zusätzlichen Kernzüge nötig sind. Alternativ wären für die Herstellung auch 3D-Druck-Verfahren denkbar.

Die Ausführungsvariante gemäß den Figuren 10A bis 10C kann auch mit einer oder mehreren weiteren Materialkomponenten gestaltet werden. So kann beispielsweise eine Weichkomponente einen Teil der Hohlraumstruktur 18j ausfüllen und durch die Ausnehmungen 36j an die Oberfläche der Griffeinheit 14j treten. Dabei kann zum Beispiel ein kugeliger Abschluss geschaffen werden, der gewisse haptische Eigenschaften auf die Oberfläche bringt. Weiter kann beispielsweise der Abschluss des Körpers auf der Unterseite mit einem Rand aus Weichkomponente versehen werden.

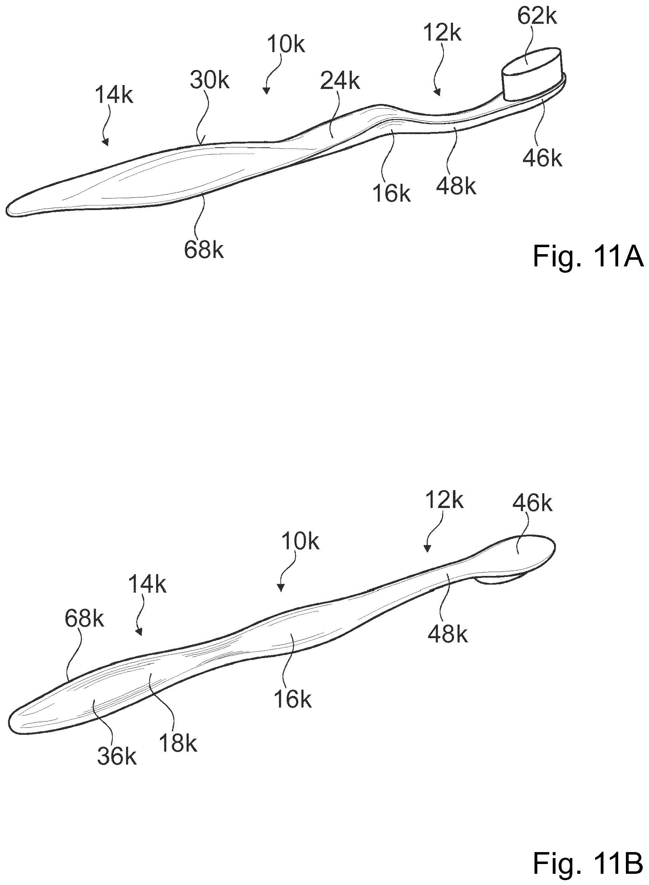

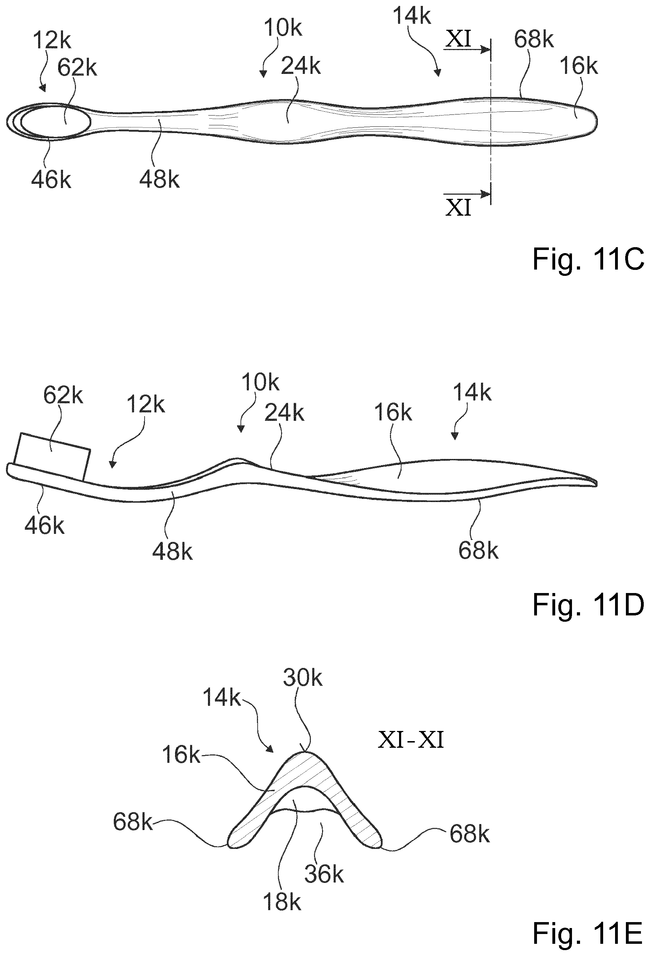

Die Figuren 11A und 11E zeigen eine Vorderseite 30k eines Mundhygienemittels 10k mit einer Anwendungseinheit 12k und mit einer Griffeinheit 14k, die einen materiellen Volumenkörper 16k aufweist. Die Griffeinheit 14k ist mit der Anwendungseinheit 12k verbunden. Die Griffeinheit 14k und die Anwendungseinheit 12k sind einstückig ausgebildet. Die zumindest eine Anwendungseinheit 12k weist einen Kopfbereich 46k auf. Der Kopfbereich 46k bildet einen Bürstenkopf des Mundhygienemittels 10k. Der Kopfbereich 46k weist insbesondere einen als Borstenträger ausgebildeten Grundkörper auf. Das Mundhygienemittel 10k weist ferner einen von dem Kopfbereich 46k aufgenommenen Reinigungsbereich 62k auf, der eine Mehrzahl von Borstenbündeln umfasst. Aus Gründen der Übersichtlichkeit sind in den Figuren 11A bis 11D die Borstenbündel als ein Volumenkörper dargestellt. Auf der Vorderseite 30k des Kopfbereichs 46k ist zumindest eine Aussparung ausgeformt. Die zumindest eine Aussparung ist zur Aufnahme einzelner Borstenbündel und/oder eines Borstenbündels umfassenden Borstenplättchens vorgesehen.

Die Griffeinheit 14k weist ferner zumindest eine wesentliche Hohlraumstruktur 18k auf, welche zumindest im Wesentlichen von dem materiellen Volumenkörper 16k begrenzt ist. Die Hohlraumstruktur 18k ist von einem Hohlraum in der Griffeinheit 14k gebildet. In dem vorliegenden Fall ist die Hohlraumstruktur 18k von genau einem Hohlraum gebildet. Die Hohlraumstruktur 18k erstreckt sich über einen wesentlichen Teil einer Haupterstreckung der Griffeinheit 14k. Die Hohlraumstruktur 18k erstreckt sich von einem hinteren Ende der Griffeinheit 14k bis zu einem Daumengriffbereich 24k der Anwendungseinheit 12k.

Die Hohlraumstruktur 18k ist vom materiellen Volumenkörper 16k umschlossen. Der materielle Volumenkörper 16k enthält rundum versetzte Ausnehmungen 36k, welche von außen in die Hohlraumstruktur 18k eindringen. Der Volumenkörper 16k weist mindestens eine Ausnehmung 36k auf, über welche die Hohlraumstruktur 18k mit einer Umgebung verbunden ist. Der materielle Volumenkörper 16k begrenzt, abgesehen von den Ausnehmungen 36k, vollständig die Hohlraumstruktur 18k. Die Hohlraumstruktur 18k ist in den voluminösen Partien der Griffeinheit 14k angeordnet. Der materielle Volumenkörper 16j weist in einem die Hohlraumstruktur 18k begrenzenden Bereich eine geringe Wandstärke auf. Der materielle Volumenkörper 16k weist ferner einen Daumengriffbereich 24k auf. Der Daumengriffbereich 24k ist von einer Vertiefung in der Griffeinheit 14k gebildet.

Der Körper ist in einem Spritzgussverfahren hergestellt. Alternativ wären für die Herstellung auch 3D-Druck-Verfahren denkbar.

Die Ausführungsvariante gemäss den Figuren 11A bis 11E kann auch mit einer oder mehreren weiteren Materialkomponenten gestaltet werden. So kann beispielsweise eine Weichkomponente einen Teil der Hohlraumstruktur 18k ausfüllen und durch Durchbrüche an die Oberfläche der Vorderseite 30k der Griffeinheit 14k treten. Dabei kann zum Beispiel ein kugeliger Abschluss geschaffen werden, der gewisse haptische Eigenschaften auf die Oberfläche bringt. So kann beispielsweise im Daumengriffbereich 24k eine bessere Haptik geschaffen werden.

Der materielle Volumenkörper 16k weist zumindest einen Daumengriffbereich 24k auf, wobei die Hohlraumstruktur zu einer dem Daumengriffbereich 24k abgewandten Rückseite zumindest im Wesentlichen geöffnet ist. Vorzugsweise umgreift der materielle Volumenkörper 16k die Hohlraumstruktur 18k in einer Ebene senkrecht zu der Haupterstreckungsrichtung der Griffeinheit 14k zumindest im Wesentlichen C-förmig. Ein Volumen der Hohlraumstruktur 18k ist insbesondere größer als ein Volumen des materiellen Volumenkörpers 16k, wobei insbesondere in jedem Punkt der Hohlraumstruktur 18k eine den Punkt schneidende, gedachte Gerade existiert, welche den materiellen Volumenkörper 16k, anschließend den Punkt und darauffolgend wieder den materiellen Volumenkörper 16k schneidet. Der materielle Volumenkörper 16k ist insbesondere dünnwandig ausgebildet. Der materielle Volumenkörper 16k ist insbesondere wie eine gebogene Platte geformt. Vorzugsweise ist der materielle Volumenkörper 16k in einem Spritzgussverfahren hergestellt. Der materielle Volumenkörper 16k ist insbesondere von einer Art Platte gebildet, die gebogen ist. Die Biegung ist insbesondere im Wesentlichen quer zur Längsachse der Griffeinheit 24k. Der materielle Volumenkörper 16k weist insbesondere eine meist gebogene Querschnittsform auf, sodass wiederum eine voluminöse Außenform geschaffen wird. Bevorzugt ist der materielle Volumenkörper 16k insbesondere von hinten ausgenommen, wobei die Ausnehmung 36k von der Hohlraumstruktur 18k gebildet ist. Die Hohlraumstruktur 18k ist insbesondere von der Biegung des materiellen Volumenkörpers 16k gebildet. Der Kopfbereich 46k der Anwendungseinheit 12k ist jedoch vorzugsweise als Vollkörper gestaltet, insbesondere zur Borstenfixierung beim Ankerstanzen oder auch für Schweißungen. Ferner weist der materielle Volumenkörper 16k an einer freien Kante insbesondere einen stabilisierenden Rand 68k auf. Der Rand 68k kann insbesondere eine größere Materialstärke aufweisen als der restliche materielle Volumenkörper 16k. Der materielle Volumenkörper 16k weist insbesondere eine dünne Wandstärke auf. Die dünne Wandstärke reicht insbesondere bis in den Halsbereich 48k der Anwendungseinheit 12k. Die dünne Wandstärke ist beispielsweise geschaffen durch Ausnehmungen 36k auf der Rückseite.

Der materielle Volumenkörper 16k bildet auf einer dem zumindest einen Daumengriffbereich 24k abgewandten Seite einen im Wesentlichen konkaven Aufnahmebereich aus, welcher die Hohlraumstruktur 18k begrenzt. Der materielle Volumenkörper 16k weist insbesondere eine meist zu einer Rückseite konkav gebogene Querschnittsform auf, sodass wiederum eine voluminöse Außenform geschaffen wird (vgl. Fig. 11E). Die Hohlraumstruktur 18k ist insbesondere von der konkaven Biegung des materiellen Volumenkörpers 16k gebildet. Der materielle Volumenkörper 16k weist eine meist zu einer Vorderseite 30k konvex gebogene Querschnittsform auf (vgl. Fig. 11E).

Die gemachten Beschreibungen für spezifische Figuren lassen sich selbstverständlich auch auf andere Figuren übertragen, die gleiche oder ähnliche Ausprägungen zeigen und in welchen die Ausprägungen nicht im gleichen Detail beschrieben sind.

### Bezugszeichen

- 10: Mundhygienemittel
- 12: Anwendungseinheit
- 14: Griffeinheit
- 16: Volumenkörper
- 18: Hohlraumstruktur
- 20: Struktur
- 20.1: Teilstruktur
- 20.2: Teilstruktur
- 22: Haupterstreckung
- 24: Daumengriffbereich
- 26: Rückseite
- 28: Aufnahmebereich
- 30: Vorderseite
- 32.1: Strangelement
- 32.2: Strangelement
- 32.3: Strangelement
- 32.4: Strangelement
- 32.5: Strangelement
- 32.6: Strangelement
- 32.7: Strangelement
- 32.8: Strangelement
- 32.9: Strangelement
- 32.10: Strangelement
- 34: Haupterstreckungsrichtung
- 36: Ausnehmung
- 38: Haupterstreckungsebene
- 40: Solltrennstelle
- 42: Teilbereich
- 44: Teilbereich
- 46: Kopfbereich
- 48: Halsbereich
- 50: Borstenbelastungsrichtung
- 52: Längsachse
- 54: Höhenachse
- 56: Breitenachse
- 58: Aussparung
- 60: Grifffläche
- 62: Reinigungsbereich
- 64: Plattform
- 66: Plateau
- 68: Rand
- 70: Längssteg
- 72: Fortsatz
- 74: Vertiefung
- 76: Formtrennlinie
- 78: weitere Materialkomponente

## Patentansprüche

1. Mundhygienemittel (10b; 10c; 10d; 10e; 10f; 10g; 10h; 10i; 10j; 10k), insbesondere Zahnbürste, mit zumindest einer Anwendungseinheit (12b; 12c; 12d; 12e; 12f; 12g; 12h; 12i; 12j; 12k) und mit zumindest einer mit der Anwendungseinheit (12b; 12c; 12d; 12e; 12f; 12g; 12h; 12i; 12j; 12k) verbundenen Griffeinheit (14b; 14c; 14d; 14e; 14f; 14g; 14h; 14i; 14j; 14k), welche zumindest einen materiellen Volumenkörper (16b; 16c; 16d; 16e; 16f; 16g; 16h; 16i; 16j; 16k) aufweist,
**dadurch gekennzeichnet, dass**
die Griffeinheit (14b; 14c; 14d; 14e; 14f; 14g; 14h; 14i; 14j; 14k) zumindest eine wesentliche Hohlraumstruktur (18b; 18c; 18d; 18e; 18f; 18g; 18h; 18i; 18j; 18k) aufweist, welche zumindest im Wesentlichen von dem materiellen Volumenkörper (16b; 16c; 16d; 16e; 16f; 16g; 16h; 16i; 16j; 16k) begrenzt ist und welche sich zumindest über einen wesentlichen Teil einer Haupterstreckung (22b; 22c; 22d; 22e; 22f; 22g;) der zumindest einen Griffeinheit (14b; 14c; 14d; 14e; 14f; 14g; 14h; 14i; 14j; 14k) erstreckt.

2. Mundhygienemittel (10b; 10c; 10f; 10g; 10h; 10i; 10j) nach Anspruch 1,
**dadurch gekennzeichnet, dass**
der materielle Volumenkörper (16b; 16c; 16f; 16g; 16h; 16i; 16j) eine zumindest im Wesentlichen bionische Struktur (20b; 20c; 20f; 20g; 20h; 20i; 20j) aufweist, welche zumindest teilweise direkt die Hohlraumstruktur (18b; 18c; 18f; 18g; 18h; 18i; 18j) begrenzt.

3. Mundhygienemittel (10b; 10c; 10f; 10g; 10h; 10i; 10j) nach Anspruch 1 oder 2, **dadurch gekennzeichnet, dass**
der materielle Volumenkörper (16b; 16c; 16f; 16g; 16h; 16i; 16j) eine zumindest im Wesentlichen bionische Struktur (20b; 20c; 20f; 20g; 20h; 20i; 20j) aufweist, welche sich zumindest über einen wesentlichen Teil einer Haupterstreckung (22b; 22c; 22f; 22g;) der zumindest einen Griffeinheit (14b; 14c; 14f; 14g; 14h; 14i; 14j) erstreckt.

4. Mundhygienemittel (10c) nach einem der vorhergehenden Ansprüche,
**dadurch gekennzeichnet, dass**
der materielle Volumenkörper (16c) eine zumindest im Wesentlichen bionische Struktur (20c) aufweist, welche von einer Gitterstruktur gebildet ist.

5. Mundhygienemittel (10c) nach einem der vorhergehenden Ansprüche,
**dadurch gekennzeichnet, dass**
der materielle Volumenkörper (16c) zumindest einen Daumengriffbereich (24c) aufweist, wobei die Hohlraumstruktur (18c) zu einer dem Daumengriffbereich (24c) abgewandten Rückseite (26c) zumindest im Wesentlichen geöffnet ist.

6. Mundhygienemittel (10c) nach Anspruch 5,
**dadurch gekennzeichnet, dass**
der materielle Volumenkörper (16c) auf einer dem zumindest einen Daumengriffbereich (24c) abgewandten Seite einen im Wesentlichen konkaven Aufnahmebereich (28c) ausbildet, welcher die Hohlraumstruktur (18c) begrenzt.

7. Mundhygienemittel (10c) nach Anspruch 5,
**dadurch gekennzeichnet, dass**
die Hohlraumstruktur (18c) auf einer dem Daumengriffbereich (24c) zugewandten Vorderseite (30c) zumindest im Wesentlichen geschlossen ist.

8. Mundhygienemittel (10b; 10i) nach einem der vorhergehenden Ansprüche, **dadurch gekennzeichnet, dass**
der materielle Volumenkörper (16b; 16i) eine zumindest im Wesentlichen bionische Struktur (20b; 20i) aufweist, welche in zumindest einem Bereich zumindest drei zueinander verdrehte Strangelemente (32.1b, 32.2b, 32.3b, 32.4b, 32.5b, 32.6b; 32.1i, 32.2i, 32.3i, 32.4i, 32.5i, 32.6i) aufweist.

9. Mundhygienemittel (10b; 10i) nach Anspruch 7,
**dadurch gekennzeichnet, dass**
die zumindest drei Strangelemente (32.1b, 32.2b, 32.3b, 32.4b, 32.5b, 32.6b; 32.1i, 32.2i, 32.3i, 32.4i, 32.5i, 32.6i) in zumindest einem Querschnitt senkrecht zu einer Haupterstreckungsrichtung (34b) der Griffeinheit (14b; 14i) voneinander beabstandet sind.

10. Mundhygienemittel (10e; 10j) nach einem der vorhergehenden Ansprüche, **dadurch gekennzeichnet, dass**
die Hohlraumstruktur (18e; 18j) in zumindest einem Querschnitt senkrecht zu einer Haupterstreckungsrichtung (34e) der Griffeinheit (14e; 14j) von dem materiellen Volumenkörper (16e; 16j) umgeben ist, wobei der Volumenkörper (16e; 16j) zumindest eine Ausnehmung (36e; 36j) aufweist, über welche die Hohlraumstruktur (18e; 18j) mit einer Umgebung verbunden ist.

11. Mundhygienemittel (10d; 10e) nach einem der vorhergehenden Ansprüche, **dadurch gekennzeichnet, dass**
die Hohlraumstruktur (18d; 18e) in zumindest einer Ebene parallel zu einer Haupterstreckungsebene (38d; 38e) der Griffeinheit (14d; 14e) vollständig von dem materiellen Volumenkörper (16d; 16e) umschlossen ist.

12. Mundhygienemittel (10a; 10b; 10c; 10d; 10e; 10f; 10g; 10h; 10i; 10j; 10k) nach dem Oberbegriff des Anspruchs 1, insbesondere nach einem der vorhergehenden Ansprüche,
**dadurch gekennzeichnet, dass**
der materielle Volumenkörper (16a; 16b; 16c; 16d; 16e; 16f; 16g; 16h; 16i; 16j; 16k) der Griffeinheit (14a; 14b; 14c; 14d; 14e; 14f; 14g; 14h; 14i; 14j; 14k) zumindest zu einem Großteil aus einem biologisch abbaubaren, insbesondere kompostierbaren, und/oder aus einem recycelten Material besteht.

13. Mundhygienemittel (10a; 10b; 10c; 10d; 10e; 10f; 10g; 10h; 10i; 10j; 10k) nach Anspruch 12,
**dadurch gekennzeichnet, dass**
der materielle Volumenkörper (16a; 16b; 16c; 16d; 16e; 16f; 16g; 16h; 16i; 16j; 16k) der Griffeinheit (14a; 14b; 14c; 14d; 14e; 14f; 14g; 14h; 14i; 14j; 14k) zumindest zu einem Großteil aus einem Kunststoff auf Basis nachwachsender Rohstoffe besteht.

14. Mundhygienemittel (10a; 10b; 10c; 10d; 10e) nach dem Oberbegriff des Anspruchs 1, insbesondere nach einem der vorhergehenden Ansprüche, **gekennzeichnet durch**
zumindest ein erstes Material und zumindest ein von dem ersten Material verschiedenes zweites Material, wobei das zweite Material, insbesondere nach einer Nutzungsdauer des Mundhygienemittels (10a; 10b; 10c; 10d; 10e), zumindest teilweise zu einer Trennung von dem ersten Material vorgesehen ist.

15. Mundhygienemittel (10a; 10b; 10c; 10d; 10e) nach Anspruch 14,
**gekennzeichnet durch**
zumindest eine Solltrennstelle (40a, 40a'; 40b; 40c; 40d; 40e) zu einer, insbesondere sortenreinen, Abtrennung zumindest eines Teilbereichs (42a; 42b; 42c; 42d; 42e) mit dem ersten Material, insbesondere der Griffeinheit (14a; 14b; 14c; 14d; 14e), von einem Teilbereich (44a; 44b; 44c; 44d; 44e) mit dem zweiten Material, insbesondere der Anwendungseinheit (12a; 12b; 12c; 12d; 12e).

16. Mundhygienemittel (10a; 10b; 10c; 10d; 10e) nach Anspruch 14 oder 15, **dadurch gekennzeichnet, dass**
die Anwendungseinheit (12a; 12b; 12c; 12d; 12e) zumindest einen Kopfbereich (46a; 46b; 46c; 46d; 46e) und zumindest einen Halsbereich (48a; 48b; 48c; 48d; 48e) aufweist, wobei die Solltrennstelle (40a, 40a'; 40b; 40c; 40d; 40e) in dem Halsbereich (48a; 48b; 48c; 48d; 48e) angeordnet ist und zu einer Trennung zumindest der Griffeinheit (14a; 14b; 14c; 14d; 14e) von dem Kopfbereich (46a; 46b; 46c; 46d; 46e) der Anwendungseinheit (12a; 12b; 12c; 12d; 12e) vorgesehen ist.

17. Mundhygienemittel (10a) nach einem der Ansprüche 14 bis 16,
**dadurch gekennzeichnet, dass**
die Solltrennstelle (40a') von einer Sollbruchstelle gebildet ist, welche dazu vorgesehen ist, bei einer definierten Belastung der Anwendungseinheit (12a) entgegen einer Borstenbelastungsrichtung (50a) der Anwendungseinheit (12a) zu brechen.

18. Mundhygienemittel (10a; 10b; 10c; 10d; 10e) zumindest nach einem der Ansprüche 14 bis 16,
**dadurch gekennzeichnet, dass**
die Solltrennstelle (40a; 40b; 40c; 40d; 40e) von einer Markierung einer vorgesehenen Trennstelle gebildet ist.
